# EUROPEAN PATENT APPLICATION

(11) **EP 1 921 559 A1**
(43) Date of publication of application: **14.05.2008**
(21) Application number: 06782507.5
(22) Date of filing: 08.08.2006
(51) Int. Cl.: G06F 21/20

(54) **GROUP REGISTRATION DEVICE, GROUP REGISTRATION RELEASE DEVICE, GROUP REGISTRATION METHOD, LICENSE ACQUISITION DEVICE, LICENSE ACQUISITION METHOD, TIME SETTING DEVICE, AND TIME SETTING METHOD**

(30) Priority: 31.08.2005 JP 2005251143; 31.08.2005 JP 2005251197; 31.08.2005 JP 2005251130
(71) Applicant: Sony Corporation, Tokyo (JP)
(72) Inventor: SAEKI, Keiko, c/o SONY CORPORATION, Tokyo (JP); KUNO, Hiroshi, c/o SONY CORPORATION, Tokyo (JP); NAKAMURA, Atsushi, c/o SONY CORPORATION, Tokyo (JP); ADACHI, Seiichi, c/o SONY CORPORATION, Tokyo (JP)
(74) Representative: Nicholls, Michael John
(86) International application number: PCT/JP2006/315681
(87) International publication number: WO 2007/026511

(57) **Abstract**

There is provided a group registration device or the like which is capable of simplifying registration processing to readily perform group registration while retaining secure registration processing.

A group registration device 10 includes a registration request detecting unit, a session ID generating unit for generating a session ID, a registration request message sending unit, a registration reply message receiving unit, a verification unit 231 for verifying non-redundancy of a message, and a storage unit 241 for storing an ID list included in a registration reply message in a storage region so as to be associated with a group ID. Within the same registration session, the registration request message is sent once, the registration reply message is received once, and processing is restricted to sending of the registration request message and receiving of the registration reply message.

## Description

### Technical Field

The present invention relates to a group registration device and group registration method for performing group registration, and a group deregistration device for group deregistration, and particularly relates to a group registration device and group registration method, and a group deregistration device with copyright management.

Also, the present invention relates to a license acquisition device and license acquisition method, and particularly relates to a license acquisition device and license acquisition method with copyright management.

Also, the present invention relates to a point-in-time setting device and point-in-time setting method for setting point-in-time, and particularly relates to a point-in-time setting device and point-in-time setting method for setting point-in-time via a network.

### Background Art

Nowadays, in order to prevent illegal copying of digital contents, a copyright management system employing DRM (Digital Rights Management) art for restricting circulation and use of contents is spreading widely.

As for the above-mentioned copyright management system, there is a system wherein multiple content processing devices belonging to each user, such as PCs or the like, are registered into a server by user, and at the respective content processing devices registered by user, sharing of a content can be realized (e.g., see Patent Document 1).

That is to say, the multiple content processing devices belonging to each user request registration from the server, the server generates a common ID which can be identified by user (or group), and the multiple content processing devices belonging to the user store the ID thereof, whereby the respective content processing devices can share and play a content.

Note however, from the point at which a content processing device requests registration from the server until the content processing device is registered (the ID is stored in own device), the content processing device has needed to perform multiple times of exchange with the server regarding processing other than registration, such as authentication processing and so forth.

Accordingly, the content processing device has needed to include processing resources for awaiting an ID to be sent from the server, and handling processing relating to registration, and processing resources for handling processing other than registration thereof, such as authentication processing and so forth. Particularly, in the case of a device of which processing capabilities are not particularly high, the processing load on the registration processing is high, so that the device has not been able to execute registration processing directly as to the server.

Also, nowadays, along with the Internet becoming widespread, increase in processing speed of personal computers (PCs), and increase in storage capacity, providing digital contents, such as movies, music or the like, via a network or recording medium, is becoming commonplace.

Digital contents can be copied multiple times without deterioration of quality. Therefore, cases are increasing wherein a content is copied illegally without obtaining permission of a copyright holder, and the content thereof is distributed and exchanged.

In order to prevent such illegal copying of digital contents, there is a system wherein a license is provided as to content to be distributed, and when employing the content thereof, in the event that a PC has no license as to the content thereof, the PC cannot play or copy the content thereof (e.g., see Patent Document 2).

With the above-mentioned system, a client such as a PC or the like requests a license from a server, and acquires a license sent from the server, thereby employing a content corresponding to the license thereof.

Note however, even in the event that a content to be employed has been already determined before the license is acquired from the server, it has been necessary for the client to temporarily acquire a license list from the server, select a license corresponding to a target content therefrom again, and request the selected license from the server.

Also, of a series of exchanges since the client requests a license list from the client until a license is obtained from the server, it has been necessary to establish an SSL (Secure Session Layer) by performing communication between the client and the server multiple times as well as the above-mentioned license list.

Also, nowadays, there is a content distribution system wherein with a system for distributing various types of content data, such as a software program, movie, music and so forth, to a client via a network, there is provided a valid period such as a time limit and so forth for the client to play or activate content data.

Thus, in the event of attaching a valid period to content data, and restricting processing for playing or activating the content data, point-in-time management at the distribution destination of the content data is important in order to determine accurately whether or not the current date is within the valid period.

Heretofore, a client such as a personal computer (PC) or the like has also included a point-in-time management function as the internal clock within itself, but there has been a possibility that the point-in-time within the self-device may be tampered with in an unauthorized manner.

Therefore, with a module for outputting point-in-time, a tamper-proof structure is employed, and the point-in-time output from the module thereof is encrypted with the public key encryption method, thereby preventing the danger that point-in-time may be illegally tampered with (e.g., see Patent Document 3).

Note however, that the point-in-time is not output from the module for outputting point-in-time unless content data is used, and point-in-time at the client side such as a PC or the like is employed for determination regarding whether or not the current date is within the valid period, so there has been a possibility that during that time lag the point-in-time may be tampered with.

Also, point-in-time is output from the module each time content data is used, and the point-in-time at the client side is set unintentionally regardless of the point-in-time precision managed by the PC, so if usage frequency is high, point-in-time setting processing is frequently performed, and there has been a possibility that the processing may be performed ineffectively.

Also, in the event that the module for outputting point-in-time is not included in a PC or the like, there is a need to provide storage means capable of connecting to a USB port or the like each time content data is used, but in the event that such storage means are misplaced or lost, point-in-time cannot be set to a client such as a PC or the like. Note that the module for outputting point-in-time is stored in the above-mentioned storage means.

[Patent Document 1] Japanese Unexamined Patent Application Publication No. 2005-141635
[Patent Document 2] Japanese Unexamined Patent Application Publication No. 2003-174443
[Patent Document 3] Japanese Unexamined Patent Application Publication No. 2003-280522

### Disclosure of Invention

Therefore, the present invention has been made in light of the above-mentioned problems, and it is an object of the present invention to provide a new and improved group registration device, group registration method, and group deregistration device, whereby registration processing can be simplified to readily perform group registration or deregister group registration while retaining secure registration processing.

Also, it is another object of the present invention to provide a new and improved license acquisition device, and license acquisition method, whereby license acquisition processing can be simplified to readily perform license acquisition while retaining secure license acquisition processing.

Also, it is yet another object of the present invention to provide a new and improved point-in-time setting device and point-in-time setting method, whereby necessity of point-in-time setting can be recognized appropriately, and point-in-time can be set while reducing processing load.

In order to solve the above-mentioned problems, according to a first perspective of the present invention, there is provided a group registration device configured to register at least one information recording medium and/or information processing device into a group. This group registration device comprises: a registration request detecting unit configured to detect a request for registering the information recording medium and/or information processing device into the group; a session ID generating unit configured to take a series of exchanges as a registration session, which sends a message requesting the group registration, and as to the message thereof receives a reply message, and to generate a session ID for identifying the registration session thereof; a registration request message sending unit configured to send a registration request message including the information recording medium ID of the information recording medium and/or the information processing device ID of the information processing device to be registered into the group, and the session ID, to a registration server; a registration reply message receiving unit configured to receive a registration reply message including the ID list of the information recording medium ID and/or information processing device ID registered into the group by the registration server, the session ID, from the registration server; a verification unit configured to verify that the session ID included in the registration reply message is identical to the session ID generated at the session ID generating unit, and to delete the session ID; and a storage unit configured to store the ID list included in the registration reply message in a storage region so as to be associated with a group ID specifying the group; wherein with the registration request message sending unit and the registration reply message receiving unit, within the same registration session, the registration request message is sent once, and the registration reply message is received once; and wherein processing to be executed within the registration session is restricted to sending of the registration request message by the registration request message sending unit, and receiving of the registration reply message by the registration reply message receiving unit. Note that the group registration device is, for example, online (synchronous) or offline (asynchronous), and is a device according to the session ID method, but is not restricted to such an example.

The storage unit may store the ID list included in the registration reply message in the storage region of a self-device or another device which is offline or online so as to be associated with the group ID.

In order to solve the above-mentioned problems, according to another perspective of the present invention, there is provided a group registration device configured to register at least one information recording medium and/or information processing device into a group. This group registration device comprises: a registration request detecting unit configured to detect a request for registering the information recording medium and/or information processing device into the group; a session ID generating unit configured to take a series of exchanges as a registration session, which sends a message requesting the group registration, and as to the message thereof receives a reply message, and to generate a session ID for identifying the registration session thereof; a registration request message sending unit configured to send a registration request message including the information recording medium ID of the information recording medium and/or the information processing device ID of the information processing device to be registered into the group, and the session ID, to a registration server; a pass phrase receiving unit configured to receive a pass phrase obtained by encoding a registration reply message including the ID list of the information recording medium ID and/or information processing device ID registered into the group by the registration server, and the session ID, from the registration server; a verification unit configured to decode the pass phrase into the registration reply message, to verify that the session ID included in the registration reply message is identical to the session ID generated in the session ID generating step, and to delete the session ID; and a storage unit configured to store the ID list included in the registration reply message in a storage region within a self-device so as to be associated with a group ID specifying the group; wherein with the registration request message sending unit and the pass phrase receiving unit, within the same registration session, the registration request message is sent once, and the pass phrase is received once; and wherein processing to be executed within the registration session is restricted to sending of the registration request message by the registration request message sending unit, and receiving of the pass phrase by the pass phrase receiving unit. Note that the group registration device is, for example, offline (asynchronous), and is a device according to the session ID method, but is not restricted to such an example.

The pass phrase receiving unit may be configured so as to receive a pass phrase offline.

In order to solve the above-mentioned problems, according to another perspective of the present invention, there is provided a group registration device configured to register at least one information recording medium and/or information processing device into a group. This group registration device comprises: a registration request detecting unit configured to detect a request for registering the information recording medium and/or information processing device into the group; a registration request message sending unit configured to send a registration request message including the information recording medium ID of the information recording medium and/or the information processing device ID of the information processing device to be registered into the group, to a registration server; a registration reply message receiving unit configured to receive a registration reply message including the ID list of the information recording medium ID and/or information processing device ID registered into the group by the registration server, and counter information obtained at the registration server side, from the registration server; a verification unit configured to verify that the anteroposterior relation between the counter information set to the registration reply message and counter information obtained within a self-device to be registered into the group is suitable, and to update the counter information within the self-device; and a storage unit configured to store the ID list included in the registration reply message in a storage region so as to be associated with a group ID specifying the group; wherein with the registration request message sending unit and the registration reply message receiving unit, a series of exchanges, which sends a message requesting the group registration, and as to the message thereof receives a reply message, is taken as a registration session, and within the same registration session the registration request message is sent once and the registration reply message is received once; and wherein processing to be executed within the registration session is restricted to sending of the registration request message by the registration request message sending unit, and receiving of the registration reply message by the registration reply message receiving unit. Note that the group registration device is, for example, online (synchronous) or offline (asynchronous), and is a device according to the counter information method, but is not restricted to such an example.

The counter information is a time stamp, the registration replay message receiving unit may receive the registration reply message to which the time stamp is set by the registration server, and the verification unit may verify that a time stamp generated within the self-device at the time of receiving the registration reply message is newer than the time stamp set to the registration reply message.

In order to solve the above-mentioned problems, according to another perspective of the present invention, there is provided a group registration device configured to register at least one information recording medium and/or information processing device into a group. This group registration device comprises: a registration request detecting unit configured to detect a request for registering the information recording medium and/or information processing device into the group; a registration request message sending unit configured to send a registration request message including the information recording medium ID of the information recording medium and/or the information processing device ID of the information processing device to be registered into the group, to a registration server; a pass phrase receiving unit configured to receive a pass phrase obtained by encoding a registration reply message including the ID list of the information recording medium ID and/or information processing device ID registered into the group by the registration server, and counter information obtained at the registration server side, from the registration server; a verification unit configured to decode the pass phrase into the registration reply message, to verify that the anteroposterior relation between the counter information set to the registration reply message and counter information obtained within a self-device to be registered into the group is suitable, and to update the counter information within the self-device; and a storage unit configured to store the ID list included in the registration reply message in a storage region so as to be associated with a group ID specifying the group; wherein with the registration request message sending unit and the pass phrase receiving unit, within the same registration session which is a series of exchanges, which sends a message requesting the group registration, and as to the message thereof receives a reply message, the registration request message is sent once and the pass phrase is received once; and wherein processing to be executed within the registration session is restricted to sending of the registration request message by the registration request message sending unit, and receiving of the pass phrase by the pass phrase receiving unit. Note that the group registration device is, for example, offline (asynchronous), and is a device according to the counter information method, but is not restricted to such an example.

The pass phrase receiving unit may be configured so as to receive a pass phrase offline.

The counter information is a time stamp, the pass phrase receiving unit may receive the pass phrase from the registration server, and the verification unit may verify that a time stamp generated within the self-device at the time of receiving the pass phrase is newer than the time stamp set to the registration reply message obtained by decoding the pass phrase.

In order to solve the above-mentioned problems, according to another perspective of the present invention, there is provided a group deregistration device configured to deregister the registration of at least one information recording medium and/or information processing device from a group into which at least one information recording medium and/or information processing device has been registered. This group deregistration device comprises: a deregistration request detecting unit configured to detect a request for deregistering the registration of an information recording medium and/or information processing device registered into the group; a deregistration start message receiving unit configured to take a series of exchanges, which receives a message starting the group deregistration, and as to the message thereof sends a reply message, as a deregistration session, and to receive a deregistration start message serving as a sign for starting the group deregistration including a session ID for identifying the deregistration session thereof, from a deregistration server; a deregistration request message sending unit configured to create and send a deregistration request message for requesting the group deregistration based on the ID list of the information recording medium ID of the information recording medium and/or the information processing device ID of the information processing device serving as an object to be subjected to the group deregistration, and the session ID; and a deregistration unit configured to delete the ID list included in the deregistration request message associated with a group ID for identifying the group to perform group deregistration; wherein with the deregistration start message receiving unit and the deregistration request message sending unit, within the same deregistration session, the deregistration start message is received once, and the deregistration request message is sent once; and wherein processing to be executed within the deregistration session is restricted to receiving of the deregistration start message by the deregistration start message receiving unit, and sending of the deregistration request message by the deregistration request message sending unit. Note that the group deregistration device is, for example, online (synchronous), and is a device according to the session ID method, but is not restricted to such an example.

In order to solve the above-mentioned problems, according to another perspective of the present invention, there is provided a group deregistration device configured to deregister the registration of at least one information recording medium and/or information processing device from a group into which at least one information recording medium and/or information processing device has been registered. This group deregistration device comprises: a deregistration request detecting unit configured to detect a request for deregistering the registration of an information recording medium and/or information processing device registered into the group; a deregistration start message receiving unit configured to receive a deregistration start message serving as a sign for starting the group deregistration including counter information obtained by a deregistration server from the deregistration server; a deregistration request message sending unit configured to create and send a deregistration request message for requesting the group deregistration based on the ID list of the information recording medium ID of the information recording medium and/or the information processing device ID of the information processing device serving as an object to be subjected to deregistration from the group, and the counter information; a verification unit configured to verify that the anteroposterior relation between the counter information included in the deregistration start message and counter information obtained within a self-device to be subjected to the group deregistration is suitable; and a deregistration unit configured to delete the ID list included in the deregistration request message associated with a group ID for identifying the group to perform group deregistration; wherein with the deregistration start message receiving unit and the deregistration request message sending unit, a series of exchanges, which receives a message starting the group deregistration, and as to the message thereof sends a reply message, is taken as a deregistration session, and within the same deregistration session, the deregistration start message is received once, and the deregistration request message is sent once; and wherein processing to be executed within the deregistration session is restricted to receiving of the deregistration start message by the deregistration start message receiving unit, and sending of the deregistration request message by the deregistration request message sending unit. Note that the group deregistration device is, for example, online (synchronous), and is a device according to the counter information method, but is not restricted to such an example.

The verification unit may be configured so as to update the counter information within the self-device.

In order to solve the above-mentioned problems, according to another perspective of the present invention, there is provided a group registration method for registering at least one information recording medium and/or information processing device into a group. This group registration method comprises: a registration request detecting step for detecting a request for registering the information recording medium and/or information processing device into the group; a session ID generating step for taking a series of exchanges as a registration session, which sends a message requesting the group registration, and as to the message thereof receives a reply message, and for generating a session ID for identifying the registration session thereof; a registration request message sending step for sending a registration request message including the information recording medium ID of the information recording medium and/or the information processing device ID of the information processing device to be registered into the group, and the session ID, to a registration server; a registration reply message receiving step for receiving a registration reply message including the ID list of the information recording medium ID and/or information processing device ID registered into the group by the registration server, and the session ID, from the registration server; a storing step for storing the ID list included in the registration reply message in a storage region so as to be associated with a group ID specifying the group when verifying that the session ID included in the registration reply message is identical to the session ID generated in the session ID generating step; and a deleting step for deleting the session ID; wherein the registration request message sending step and the registration reply message receiving step are executed once each in order within the same registration session; and wherein processing to be executed within the registration session is restricted to the registration request message sending step and the registration reply message receiving step. Note that the group registration method is, for example, online (synchronous) or offline (asynchronous), and is a method according to the session ID method, but is not restricted to such an example.

In order to solve the above-mentioned problems, according to another perspective of the present invention, there is provided a group registration method for registering at least one information recording medium and/or information processing device into a group. This group registration method comprises: a registration request detecting step for detecting a request for registering the information recording medium and/or information processing device into the group; a session ID generating step for taking a series of exchanges as a registration session, which sends a message requesting the group registration, and as to the message thereof receives a reply message, and for generating a session ID for identifying the registration session thereof; a registration request message sending step for sending a registration request message including the information recording medium ID of the information recording medium and/or the information processing device ID of the information processing device to be registered into the group, and the session ID, to a registration server; a pass phrase receiving step for receiving a pass phrase obtained by encoding a registration reply message including the ID list of the information recording medium ID and/or information processing device ID registered into the group by the registration server, and the session ID, from the registration server; a storing step for storing the ID list included in the registration reply message in the storage region within a self-device to be subjected to the group registration so as to be associated with a group ID specifying the group when verifying that the session ID included in the registration reply message is identical to the session ID generated in the session ID generating step; and a deleting step for deleting the session ID; wherein the registration request message sending step and the pass phrase receiving step are executed once each in order within the same registration session; and wherein processing to be executed within the registration session is restricted to the registration request message sending step and the pass phrase receiving step. Note that the group registration method is, for example, offline (asynchronous), and is a method according to the session ID method, but is not restricted to such an example.

In the pass phrase receiving step, a pass phrase may be arranged to be received offline, and also valid period may be provided as to the group ID.

In the event that there is no group into which the information recording medium and/or information processing device specified with the registration request message is registered, an arrangement may be made wherein a new group ID is generated by the registration device, and in the receiving step, the registration reply message further including the group ID at the ID list is received.

In the storing step, the ID list included in the registration reply message may be stored in the storage region of the self-device or another device which is offline or online so as to be associated with the group ID.

The number of session IDs to be generated for each registration session is one, and accordingly, an arrangement may be made wherein the number of messages to be sent and the number of messages to be received for each registration session are one each.

In order to solve the above-mentioned problems, according to another perspective of the present invention, there is provided a group registration method for registering at least one information recording medium and/or information processing device into a group. This group registration method comprises: a registration request detecting step for detecting a request for registering the information recording medium and/or information processing device into the group; a registration request message sending step for sending a registration request message including the information recording medium ID of the information recording medium and/or the information processing device ID of the information processing device to be registered into the group, to a registration server; a registration reply message receiving step for receiving a registration reply message including the ID list of the information recording medium ID and/or information processing device ID registered into the group by the registration server, and counter information obtained at the registration server side, from the registration server; a storing step for storing the ID list included in the registration reply message in a storage region so as to be associated with a group ID specifying the group when verifying that the anteroposterior relation between the counter information set to the registration reply message and counter information obtained within a self-device to be registered into the group is suitable; and a updating step for updating the counter information within the self-device; wherein taking a series of exchanges, which sends a message requesting the group registration, and as to the message thereof receives a reply message, as a registration session, the registration request message sending step and the registration reply message receiving step are executed once each in order within the same registration session; and wherein processing to be executed within the registration session is restricted to the registration request message sending step and the registration reply message receiving step. Note that the group registration method is, for example, online (synchronous) or offline (asynchronous), and is a method according to the counter information method, but is not restricted to such an example.

The counter information is a time stamp, and an arrangement may be made wherein in the registration reply message receiving step the registration reply message to which the time stamp is set by the registration server is received, and in the storing step verification is made that the time stamp generated within the self-device at the time of receiving the registration reply message is newer than the time stamp set to the registration reply message.

In order to solve the above-mentioned problems, according to another perspective of the present invention, there is provided a group registration method for registering at least one information recording medium and/or information processing device into a group. This group registration method comprises: a registration request detecting step for detecting a request for registering the information recording medium and/or information processing device into the group; a registration request message sending step for sending a registration request message including the information recording medium ID of the information recording medium and/or the information processing device ID of the information processing device to be registered into the group, to a registration server; a pass phrase receiving step for receiving a pass phrase obtained by encoding a registration reply message including the ID list of the information recording medium ID and/or information processing device ID registered into the group by the registration server, and counter information obtained at the registration server side, from the registration server; a storing step for storing the ID list included in the registration reply message in a storage region so as to be associated with a group ID specifying the group when verifying that the anteroposterior relation between the counter information set to the registration reply message and counter information obtained within a self-device to be registered into the group is suitable; and a updating step for updating the counter information within the self-device; wherein the registration request message sending step and the pass phrase receiving step are executed once each in order within the same registration session which is a series of exchanges, which sends a message requesting the group registration, and as to the message thereof receives a reply message; and wherein processing to be executed within the registration session is restricted to the registration request message sending step and the pass phrase receiving step. Note that the group registration method is, for example, offline (asynchronous), and is a method according to the counter information method, but is not restricted to such an example.

In the pass phrase receiving step, a pass phrase may be arranged to be received offline.

The counter information is a time stamp, and an arrangement may be made wherein in the pass phrase receiving step the pass phrase is received from a registration server, and in the storing step verification is made that the time stamp generated within the self-device at the time of receiving the pass phrase is newer than the time stamp set to the registration reply message obtained by decoding the pass phrase.

In order to solve the above-mentioned problems, according to another perspective of the present invention, there is provided a license acquisition device configured to acquire one or two licenses or more for permitting processing of a content from a license possession device. This license acquisition device comprises: a license acquisition request detecting unit configured to detect a request for acquiring the license; a session ID generating unit configured to take a series of exchanges, which sends a message for requesting the license acquisition, and as to the message thereof receives a reply message, as an acquisition session, and to generate a session ID for identifying the acquisition session thereof; a license acquisition request message sending unit configured to send a license acquisition request message including a storage destination ID for identifying a storage destination for storing the requested one or two licenses or more, and the session ID, to the license possession device; a license acquisition reply message receiving unit configured to receive a license acquisition reply message including the requested license, attached information relating to use conditions of the license, the storage destination ID, and the session ID, from the license possession device; a verification unit configured to verify that the session ID included in the license acquisition reply message is identical to the session ID generated at the session ID generating unit, and to delete the session ID thereof; and a storage unit configured to store the license in a storage region in accordance with the storage destination ID; wherein with the license acquisition request message sending unit and the license acquisition reply message receiving unit, within the same acquisition session, the license acquisition request message is sent once, and the license acquisition reply message is received once; and wherein processing to be executed within the acquisition session is restricted to sending of the license acquisition request message by the license acquisition request message sending unit, and receiving of the license acquisition reply message by the license acquisition reply message receiving unit. Note that the license acquisition device is, for example, online (synchronous) or offline (asynchronous), and is a device according to the session ID method, but is not restricted to such an example.

The storage destination ID may be arranged to be the information recording medium ID of an information recording medium and/or the information processing device ID of an information processing device.

The attached information may be configured so as to include transmission type identification information and component attribute information.

The license may be configured so as to include a content key for decrypting encrypted content corresponding to the license.

The license possession device may be configured to be a server possessing a license, an information processing device possessing a license, or an information recording medium possessing a license.

In order to solve the above-mentioned problems, according to another perspective of the present invention, there is provided a license acquisition device configured to acquire one or two licenses or more for permitting processing of a content from a license possession device. This license acquisition device comprises: a license acquisition request detecting unit configured to detect a request for acquiring the license; a license acquisition request message sending unit configured to send a license acquisition request message including a storage destination ID for identifying a storage destination for storing the requested one or two licenses or more, to the license possession device; a license acquisition reply message receiving unit configured to receive a license acquisition reply message including the requested license, attached information relating to use conditions of the license, the storage destination ID, and counter information obtained by the license possession device, from the license possession device; a verification unit configured to verify that the anteroposterior relation between the counter information included in the license acquisition reply message and counter information obtained within a self-device which is the license storage destination is suitable, and to update the counter information within the self-device; and a storage unit configured to store the license in a storage region in accordance with the storage destination ID; wherein with the license acquisition request message sending unit and the license acquisition reply message receiving unit, a series of exchanges, which sends a message for requesting the license acquisition, and as to the message thereof receives a reply message, is taken as an acquisition session, and within the same acquisition session, the license acquisition request message is sent once, and the license acquisition reply message is received once; and wherein processing to be executed within the acquisition session is restricted to sending of the license acquisition request message by the license acquisition request message sending unit, and receiving of the license acquisition reply message by the license acquisition reply message receiving unit. Note that the license acquisition device is, for example, online (synchronous) or offline (asynchronous), and is a device according to the counter information method, but is not restricted to such an example.

The storage destination ID may be arranged to be the information recording medium ID of an information recording medium and/or the information processing device ID of an information processing device.

The attached information may be configured so as to include transmission type identification information and component attribute information.

The counter information is a time stamp, and an arrangement may be made wherein the license acquisition reply message receiving unit receives the license acquisition reply message to which the time stamp is set by the license possession device, and the verification unit verifies that the time stamp obtained by the information processing device at the time of receiving the license acquisition reply message is newer than the time stamp included in the license acquisition reply message.

In order to solve the above-mentioned problems, according to another perspective of the present invention, there is provided a license acquisition device configured to acquire one or two licenses or more for permitting processing of a content from a license possession device. This license acquisition device comprises: a license acquisition request detecting unit configured to detect a request for acquiring the license; a session ID generating unit configured to take a series of exchanges, which sends a message for requesting the license acquisition, and as to the message thereof receives a reply message, as an acquisition session, and to generate a session ID for identifying the acquisition session thereof; a license acquisition request message sending unit configured to send a license acquisition request message including a storage destination ID for identifying a storage destination for storing the requested one or two licenses or more, and the session ID, to the license possession device; a pass phrase receiving unit configured to receive a pass phrase obtained by encoding a license acquisition reply message including the requested license, attached information relating to use conditions of the license, the storage destination ID, and the session ID, from the license possession device; a verification unit configured to decode the pass phrase into the license acquisition reply message, to verify that the session ID included in the license acquisition reply message is identical to the session ID generated in the session ID generating step, and to delete the session ID; and a storage unit configured to store the license included in the license acquisition reply message in a storage region in accordance with the storage destination ID; wherein with the license acquisition request message sending unit and the pass phrase receiving unit, within the same acquisition session, the license acquisition request message is sent once, and the license acquisition reply message is received once; and wherein processing to be executed within the acquisition session is restricted to sending of the license acquisition request message by the license acquisition request message sending unit, and receiving of the pass phrase by the pass phrase receiving unit. Note that the license acquisition device is, for example, offline (asynchronous), and is a device according to the session ID method, but is not restricted to such an example.

The storage destination ID may be arranged to be the information recording medium ID of an information recording medium and/or the information processing device ID of an information processing device.

The attached information may be configured so as to include transmission type identification information and component attribute information.

Also, the pass phrase receiving unit may be configured so as to receive the pass phrase offline.

In order to solve the above-mentioned problems, according to another perspective of the present invention, there is provided a license acquisition device configured to acquire one or two licenses or more for permitting processing of a content from a license possession device. This license acquisition device comprises: a license acquisition request detecting unit configured to detect a request for acquiring the license; a license acquisition request message sending unit configured to send a license acquisition request message including a storage destination ID for identifying a storage destination for storing the requested one or two licenses or more, to the license possession device; a pass phrase receiving unit configured to receive a pass phrase obtained by encoding a license acquisition reply message including the requested license, attached information relating to use conditions of the license, the storage destination ID, and counter information obtained by the license possession device, from the license possession device; a verification unit configured to decode the pass phrase into the license acquisition reply message, to verify that the anteroposterior relation between the counter information included in the license acquisition reply message and counter information obtained within a self-device which is the license storage destination is suitable, and to update the counter information within the self-device which is the license storage destination; and a storage unit configured to store the license included in the license acquisition reply message in a storage region in accordance with the storage destination ID; wherein with the license acquisition request message sending unit and the pass phrase receiving unit, a series of exchanges, which sends a message for requesting the license acquisition, and as to the message thereof receives a reply message, is taken as an acquisition session, and within the same acquisition session, the license acquisition request message is sent once, and the license acquisition reply message is received once; and wherein processing to be executed within the acquisition session is restricted to sending of the license acquisition request message by the license acquisition request message sending unit, and receiving of the pass phrase by the pass phrase receiving unit. Note that the license acquisition device is, for example, offline (asynchronous), and is a device according to the counter information method, but is not restricted to such an example.

The pass phrase receiving unit may be configured so as to receive the pass phrase offline.

The counter information is a time stamp, the pass phrase receiving unit receives the pass phrase with the time stamp set from the license possession device, and the verification unit verifies that a time stamp acquired by the information processing device at the time of receiving the pass phrase is newer than the time stamp included in the license acquisition reply message obtained by decoding of the pass phrase.

In order to solve the above-mentioned problems, according to another perspective of the present invention, there is provided a license acquisition method for acquiring one or two licenses or more for permitting processing of a content from a license possession device. This license acquisition method comprises: a license acquisition request detecting step for detecting a request for acquiring the license; a session ID generating step for taking a series of exchanges, which sends a message for requesting the license acquisition, and as to the message thereof receives a reply message, as an acquisition session, and for generating a session ID for identifying the acquisition session thereof; a license acquisition request message sending step for sending a license acquisition request message including a storage destination ID for identifying a storage destination for storing the requested one or two licenses or more, and the session ID, to the license possession device; a license acquisition reply message receiving step for receiving a license acquisition reply message including the requested license, attached information relating to use conditions of the license, the storage destination ID, and the session ID, from the license possession device; a storing step for storing the license in a storage region in accordance with the storage destination ID when verifying that the session ID included in the license acquisition reply message is identical to the session ID generated in the session ID generating step; and a deleting step for deleting the session ID; wherein the license acquisition request message sending step and the license acquisition reply message receiving step are executed once each in order within the same acquisition session; and wherein processing to be executed within the acquisition session is restricted to the license acquisition request message sending step and the license acquisition reply message receiving step. Note that the license acquisition method is, for example, online (synchronous) or offline (asynchronous), and is a method according to the session ID method, but is not restricted to such an example.

The storage destination ID may be arranged to be the information recording medium ID of an information recording medium and/or the information processing device ID of an information processing device.

The attached information may be configured so as to include transmission type identification information and component attribute information.

In order to solve the above-mentioned problems, according to another perspective of the present invention, there is provided a license acquisition method for acquiring one or two licenses or more for permitting processing of a content from a license possession device. This license acquisition method comprises: a license acquisition request detecting step for detecting a request for acquiring the license; a license acquisition request message sending step for sending a license acquisition request message including a storage destination ID for identifying a storage destination for storing the requested one or two licenses or more, to the license possession device; a license acquisition reply message receiving step for receiving a license acquisition reply message including the requested license, attached information relating to use conditions of the license, the storage destination ID, and counter• information obtained by the license possession device, from the license possession device; a storing step for storing the license in a storage region in accordance with the storage destination ID when verifying that the anteroposterior relation between the counter information included in the license acquisition reply message and counter information obtained within a self-device which is the license storage destination is suitable; and an updating step for updating the counter information within the self-device which is the license storage destination; wherein taking a series of exchanges, which sends a message requesting the license acquisition, and as to the message thereof receives a reply message, as an acquisition session, the license acquisition request message sending step and the license acquisition reply message receiving step are executed once each in order within the same acquisition session; and wherein processing to be executed within the acquisition session is restricted to the license acquisition request message sending step and the license acquisition reply message receiving step. Note that the license acquisition method is, for example, online (synchronous) or offline (asynchronous), and is a method according to the counter information method, but is not restricted to such an example.

The counter information is a time stamp, and an arrangement may be made wherein in the license acquisition reply message receiving step the license acquisition reply massage to which the time stamp is set by the license possession device is received, and in the storing step verification is made that the time stamp which the information processing device obtained at the time of receiving the license acquisition reply message is newer than the time stamp included in the license acquisition reply message.

The storage destination ID may be arranged to be the information recording medium ID of an information recording medium and/or the information processing device ID of an information processing device.

The attached information may be configured so as to include transmission type identification information and component attribute information.

In order to solve the above-mentioned problems, according to another perspective of the present invention, there is provided a license acquisition method for acquiring one or two licenses or more for permitting processing of a content from a license possession device. This license acquisition method comprises: a license acquisition request detecting step for detecting a request for acquiring the license; a session ID generating step for taking a series of exchanges, which sends a message for requesting the license acquisition, and as to the message thereof receives a reply message, as an acquisition session, and for generating a session ID for identifying the acquisition session thereof; a license acquisition request message sending step for sending a license acquisition request message including a storage destination ID for identifying a storage destination for storing the requested one or two licenses or more, and the session ID, to the license possession device; a pass phrase receiving step for receiving a pass phrase obtained by encoding a license acquisition reply message including the requested license, attached information relating to use conditions of the license, the storage destination ID, and the session ID, from the license possession device; a storing step for storing the license in a storage region in accordance with the storage destination ID when verifying that the session ID included in the license acquisition reply message is identical to the session ID generated in the session ID generating step; and a deleting step for deleting the session ID; wherein the license acquisition request message sending step and the pass phrase receiving step are executed once each in order within the same acquisition session; and wherein processing to be executed within the acquisition session is restricted to the license acquisition request message sending step and the pass phrase receiving step. Note that the license acquisition method is, for example, offline (asynchronous), and is a method according to the session ID method, but is not restricted to such an example.

The storage destination ID may be arranged to be the information recording medium ID of an information recording medium and/or the information processing device ID of an information processing device.

The attached information may be configured so as to include transmission type identification information and component attribute information.

Also, the pass phrase receiving unit may be configured so as to receive the pass phrase offline.

Further, in order to solve the above-mentioned problems, according to another perspective of the present invention, there is provided a license acquisition method for acquiring one or two licenses or more for permitting processing of a content from a license possession device. This license acquisition method comprises: a license acquisition request detecting step for detecting a request for acquiring the license; a license acquisition request message sending step for sending a license acquisition request message including a storage destination ID for identifying a storage destination for storing the requested one or two licenses or more, to the license possession device; a pass phrase receiving step for receiving a pass phrase obtained by encoding a license acquisition reply message including the requested license, attached information relating to use conditions of the license, the storage destination ID, and counter information obtained by the license possession device, from the license possession device; a storing step for storing the license in a storage region in accordance with the storage destination ID when decoding the pass phrase into the license acquisition reply message, and verifying that the anteroposterior relation between the counter information included in the license acquisition reply message and counter information obtained within a self-device which is the license storage destination is suitable; and a updating step for updating the counter information within the self-device which is the license storage destination; wherein taking a series of exchanges, which sends a message requesting the license acquisition, and as to the message thereof receives a reply message, as an acquisition session, the license acquisition request message sending step and the pass phrase receiving step are executed once each in order within the same acquisition session; and wherein processing to be executed within the acquisition session is restricted to the license acquisition request message sending step and the pass phrase receiving step. Note that the license acquisition method is, for example, offline (asynchronous), and is a method according to the counter information method, but is not restricted to such an example.

The pass phrase receiving unit may be configured so as to receive the pass phrase offline.

The counter information is a time stamp, and an arrangement may be made wherein in the pass phrase receiving step the pass phrase to which the time stamp is set by the license possession device is received, and in the storing step verification is made that the time stamp which the information processing device obtained at the time of receiving the pass phrase is newer than the time stamp included in the license acquisition reply message obtained by decoding the pass phrase.

In order to solve the above-mentioned problems, according to another perspective of the present invention, there is provided a license acquisition method for acquiring a license for permitting processing of a content from a license possession device. This license acquisition method comprises: a request detecting step for detecting a request for acquiring the license; a session ID generating step for generating a session ID for identifying an acquisition session acquiring the license; a sending step for sending a license acquisition request message including a storage destination ID for identifying a storage destination which acquires and stores the license, and the session ID, to the license processing device; a receiving step for receiving a license acquisition reply message including attached information relating to the license, the license, the session ID, and the storage destination ID of which the storage destination has been confirmed so as to store the license, from the license server, which is a message created at the license server side following the sending step; and a verification step for storing information included in the license acquisition reply message within the storage region of a self-device or another device, and also in the event of determining that the session ID obtained from the license possession device is identical to the session ID generated by the self-device, deleting the session ID thereof.

Also, in order to solve the above-mentioned problems, according to another perspective of the present invention, there is provided a point-in-time setting device configured to set point-in-time counted by an information processing device based on point-in-time information generated by a point-in-time device counting accurate point-in-time. This point-in-time setting device comprises: a request detecting unit configured to detect a request for point-in-time information generated by the point-in-time device; a session ID generating unit configured to take a series of exchanges, which sends a message requesting the point-in-time information, and as to the message thereof receives a reply message, as a point-in-time setting session, and to generate a session ID for identifying the point-in-time setting session thereof; a point-in-time setting request message sending unit configured to send a point-in-time setting request message including point-in-time precision information indicating point-in-time precision of the information processing device, which is information stored securely in advance in the storage region of the information processing device, and the session ID, to the point-in-time device; a point-in-time setting reply message receiving unit configured to receive a point-in-time setting reply message including the point-in-time information, point-in-time setting condition information in which a point-in-time settable condition is described based on the point-in-time information, and the session ID, from the point-in-time device; a verification unit configured to verify that the session ID set to the point-in-time setting reply message is identical to the session ID generated in the session ID generating step, and also to verify that the time difference between the sent point-in-time of the point-in-time setting request message and the received point-in-time of the point-in-time setting reply message is within a range of tolerance time described in the point-in-time setting condition information; and a setting unit configured to delete the session ID, and also to set the point-in-time of the information processing device based on the point-in-time information, in the event that as a result of verification by the verification unit, determination is made that point-in-time is settable; wherein with the point-in-time setting request message sending unit and the point-in-time setting reply message receiving unit, within the same point-in-time setting session, the point-in-time setting request message is sent once, and the point-in-time setting reply message is received once; and wherein processing to be executed within the point-in-time setting session is restricted to sending of the point-in-time setting request message by the point-in-time setting request message sending unit, and receiving of the point-in-time setting reply message by the point-in-time setting reply message receiving unit. Note that the point-in-time setting device is, for example, online (synchronous), and is a device according to the session ID method, but is not restricted to such an example. Also, the above-mentioned counting accurate point-in-time means, for example, to count standard time, but is not restricted to such an example.

The point-in-time setting condition information may be configured to be information which the point-in-time device generates depending on the point-in-time precision indicated with the point-in-time precision information.

The request detecting unit may be configured to detect at least the request for point-in-time information in the case of the set valid point-in-time including the point-in-time setting condition information expiring, in the case of a predetermined time elapsing, or in the case of the information processing device acquiring a content.

In order to solve the above-mentioned problems, according to another perspective of the present invention, there is provided a point-in-time setting method for setting point-in-time counted by an information processing device based on point-in-time information generated by a point-in-time device counting accurate point-in-time. This point-in-time setting method comprises: a request detecting step for detecting a request for point-in-time information generated by the point-in-time device; a session ID generating step for taking a series of exchanges, which sends a message requesting the point-in-time information, and as to the message thereof receives a reply message, as a point-in-time setting session, and for generating a session ID for identifying the point-in-time setting session thereof; a point-in-time setting request message sending step for sending a point-in-time setting request message including point-in-time precision information indicating point-in-time precision of the information processing device, which is information stored securely in advance in the storage region of the information processing device, and the session ID, to the point-in-time device; a point-in-time setting reply message receiving step for receiving a point-in-time setting reply message including the point-in-time information, point-in-time setting condition information in which a point-in-time settable condition is described based on the point-in-time information, and the session ID, from the point-in-time device; a verification step for verifying that the session ID set to the point-in-time setting reply message is identical to the session ID generated in the session ID generating step, and also for verifying that the time difference between the sent point-in-time of the point-in-time setting request message and the received point-in-time of the point-in-time setting reply message is within a range of tolerance time described in the point-in-time setting condition information; a point-in-time setting step for deleting the session ID, and also for setting the point-in-time of the information processing device based on the point-in-time information, in the event that as a result of the verification determination is made that point-in-time is settable; a deletion step for deleting the session ID; wherein with the point-in-time setting request message sending step and the point-in-time setting reply message receiving step are executed once each within the same point-in-time setting session; and wherein processing to be executed within the point-in-time setting session is restricted to the point-in-time setting request message sending step and the point-in-time setting reply message receiving step. Note that the point-in-time setting method is, for example, online (synchronous), and is a method according to the session ID method, but is not restricted to such an example.

In order to solve the above-mentioned problems, according to another perspective of the present invention, there is provided a point-in-time setting device configured to set point-in-time counted by an information processing device based on point-in-time information generated by a point-in-time device counting accurate point-in-time. This point-in-time setting device comprises: a request detecting unit configured to detect a request for point-in-time information generated by the point-in-time device; a point-in-time setting request message sending unit configured to send a point-in-time setting request message including point-in-time precision information indicating point-in-time precision of the information processing device, which is information stored securely in advance in the storage region of the information processing device, to the point-in-time device; a point-in-time setting reply message receiving unit configured to receive a point-in-time setting reply message including the point-in-time information, point-in-time setting condition information in which a point-in-time settable condition is described based on the point-in-time information, and the counter information obtained by the point-in-time device, from the point-in-time device; a verification unit configured to update the counter information of the information processing device when verifying that anteroposterior relation is suitable by comparing the counter information set in the point-in-time setting reply message and the counter information obtained by an information processing device to be subjected to the point-in-time setting, and also verifying that the time difference between the sent point-in-time of the point-in-time setting request message and the received point-in-time of the point-in-time setting reply message is within a range of tolerance time included in the setting condition information; and a setting unit configured to set the point-in-time of the information processing device based on the point-in-time information, in the event that as a result of the verification, determination is made that point-in-time is settable; wherein with the point-in-time setting request message sending unit and the point-in-time setting reply message receiving unit, a series of exchanges, which sends a message requesting the point-in-time information, and as to the message thereof receives a reply message, is taken as a point-in-time setting session, and within the point-in-time setting session thereof, the point-in-time setting request message is sent once, and the point-in-time setting reply message is received once; and wherein processing to be executed within the point-in-time setting session is restricted to sending of the point-in-time setting request message by the point-in-time setting request message sending unit, and receiving of the point-in-time setting reply message by the point-in-time setting reply message receiving unit. Note that the point-in-time setting device is, for example, online (synchronous), and is a device according to the counter information method. Also, the above-mentioned counting accurate point-in-time means, for example, to count standard time.

The point-in-time setting condition information may be configured to be information which the point-in-time device generates depending on the point-in-time precision indicated with the point-in-time precision information. The request detecting unit may be configured to detect at least the request for point-in-time information in the case of the set valid point-in-time including the point-in-time setting condition information expiring, in the case of a predetermined time elapsing, or in the case of the information processing device acquiring a content.

The counter information is a time stamp. The point-in-time setting reply message receiving unit receives the point-in-time setting reply message to which the time stamp has been set by the point-in-time device. The verification unit verifies that a time stamp generated by the information processing device at the time of receiving the point-in-time setting reply message is newer than the time stamp set to the point-in-time setting reply message.

In order to solve the above-mentioned problems, according to another perspective of the present invention, there is provided a point-in-time setting method for setting point-in-time counted by an information processing device based on point-in-time information generated by a point-in-time device counting accurate point-in-time. This point-in-time setting method comprises: a request detecting step for detecting a request for point-in-time information generated by the point-in-time device; a point-in-time setting request message sending step for sending a point-in-time setting request message including point-in-time precision information indicating point-in-time precision of the information processing device, which is information stored securely in advance in the storage region of the information processing device, to the point-in-time device; a point-in-time setting reply message receiving step for receiving a point-in-time setting reply message including the point-in-time information, point-in-time setting condition information in which a point-in-time settable condition is described based on the point-in-time information, and the counter information obtained by the point-in-time device, from the point-in-time device; a verification step for verifying that anteroposterior relation is suitable by comparing the counter information set to the point-in-time setting reply message and the counter information generated by an information processing device to be subjected to the point-in-time setting, and also verifying that the time difference between the sent point-in-time of the point-in-time setting request message and the received point-in-time of the point-in-time setting reply message is within a range of tolerance time included in the setting condition information; a point-in-time setting step for setting the point-in-time of the information processing device based on the point-in-time information, in the event that as a result of the verification, determination is made that point-in-time is settable; and an updating step for updating the counter information of the information processing device; wherein taking a series of exchanges, which sends a message requesting the point-in-time information, and as to the message thereof receives a reply message, as a point-in-time setting session, and within the point-in-time setting session thereof, the point-in-time setting request message sending step and the point-in-time setting reply message receiving step are executed once each in order; and wherein processing to be executed within the point-in-time setting session is restricted to the point-in-time setting request message sending step and the point-in-time setting reply message receiving step. Note that the point-in-time setting method is, for example, online (synchronous), and is a method according to the counter information method. Also, the above-mentioned counting accurate point-in-time means, for example, to count standard time.

As described above, according to the present invention, the registration processing within a registration session is made up of sending of a registration request message, and receiving of a registration reply message (or input of a pass phrase) which is the reply message of the registration request message, in addition to retaining of security with message non-redundancy guarantee and so forth, the registration processing is simplified, so can be executed sufficiently even with a user device of which the processing capabilities are not high.

Also, according to the present invention, the acquisition processing within an acquisition session is made up of sending of a license acquisition request message, and receiving of a license acquisition reply message (or input of a pass phrase) which is the reply message of the license acquisition request message, in addition to retaining of security with message non-redundancy guarantee and so forth, the acquisition processing is simplified, so can be executed sufficiently even with a user device of which the processing capabilities are not high.

Also, according to the present invention, the point-in-time setting of a client information processing device can be performed by detecting a request for point-in-time setting depending on an expired license, increments of a predetermined time, or the like. Also, even in the event that the point-in-time precision of an information processing device is low, and reliability is low, reliability as to point-in-time can be retained by determining conditions relating to point-in-time setting according to the point-in-time precision thereof.

### Brief Description of the Drawings

Fig. 1 is an explanatory diagram schematically illustrating group registration according to an embodiment according to a first embodiment of the present invention.
Fig. 2 is a block diagram illustrating primary components of a copyright management system with a group management method according to the embodiment.
Fig. 3 is a block diagram schematically illustrating the overall configuration of the group registration system according to the embodiment.
Fig. 4 is a block diagram schematically illustrating the hardware configuration of a PC according to the embodiment.
Fig. 5 is a block diagram schematically illustrating functions of the PC according to the embodiment.
Fig. 6 is a block diagram schematically illustrating a hardware configuration example of a user device according to the present embodiment.
Fig. 7 is a block diagram schematically illustrating the functions of a PD according to the embodiment.
Fig. 8 is a sequence diagram schematically illustrating a group registration method with a synchronous / session ID method according to the embodiment.
Fig. 9 is a sequence diagram schematically illustrating a group registration method with a synchronous / counter information method according to the embodiment.
Fig. 10 is a sequence diagram schematically illustrating a group registration method with an asynchronous / session ID method according to the embodiment.
Fig. 11 is a sequence diagram schematically illustrating a group registration method with an asynchronous / counter information method according to the embodiment.
Fig. 12 is a sequence diagram illustrating group deregistration processing of a user device according to the embodiment.
Fig. 13 is a sequence diagram illustrating group deregistration processing of a user device according to the embodiment.
Fig. 14 is an explanatory diagram illustrating license processing components in a copyright management system according to a second embodiment of the present invention, and a specific example of a combination thereof.
Fig. 15 is an explanatory diagram schematically illustrating message transmission between license processing components with the embodiment.
Fig. 16A is an explanatory diagram illustrating a transmission type of a license between components with the embodiment.
Fig. 16B is an explanatory diagram illustrating a transmission type of a license between components with the embodiment.
Fig. 16C is an explanatory diagram illustrating a transmission type of a license between components with the embodiment.
Fig. 17 is an explanatory diagram illustrating the relation between a transmission type ID which is an example of transmission type identification information according to the embodiment, and a message.
Fig. 18 is an explanatory diagram illustrating the relation between a component attribute ID which is an example of component attribute information according to the embodiment, and a message.
Fig. 19 is a block diagram schematically illustrating the overall configuration of a license acquisition system according to the embodiment.
Fig. 20 is a block diagram schematically illustrating a hardware configuration example of a PC according to the embodiment.
Fig. 21 is a block diagram schematically illustrating a hardware configuration example of a PD according to the embodiment.
Fig. 22 is a block diagram illustrating the functional configuration of a copyright management unit which a user device or the like according to the embodiment has.
Fig. 23 is a block diagram illustrating the functional configuration of a copyright management unit which a user device or the like according to the embodiment has.
Fig. 24 is a sequence diagram schematically illustrating a license acquisition method with a synchronous / session ID method according to the embodiment.
Fig. 25 is a sequence diagram schematically illustrating a license acquisition method with a synchronous / counter information method according to the embodiment.
Fig. 26 is a sequence diagram schematically illustrating a license acquisition method with an asynchronous / session ID method according to the embodiment.
Fig. 27 is a sequence diagram schematically illustrating a license acquisition method with an asynchronous / counter information method according to the embodiment.
Fig. 28 is an explanatory diagram schematically illustrating a license acquisition method for acquiring licenses among user devices according to embodiments of the present invention.
Fig. 29 is an explanatory diagram schematically illustrating a method in the license acquisition system according to embodiments of the present invention.
Fig. 30 is a block diagram schematically illustrating the overall configuration of a point-in-time setting system according to a third embodiment of the present invention.
Fig. 31 is a block diagram schematically illustrating the configuration of an information processing device according to the embodiment.
Fig. 32 is a block diagram illustrating a schematic configuration of a point-in-time server according to the embodiment.
Fig. 33 is an explanatory diagram schematically illustrating data used with the point-in-time setting server according to the embodiment.
Fig. 34 is an explanatory diagram illustrating an example of the schematic configuration of a setting condition information table according to the embodiment.
Fig. 35 is a sequence diagram schematically illustrating a point-in-time setting method of the session ID method according to the embodiment.
Fig. 36 is an explanatory diagram schematically illustrating difference time with the embodiment.
Fig. 37 is a sequence diagram schematically illustrating the processing of the point-in-time setting method of the counter information method according to the embodiment.

### Best Mode for Carrying Out the Invention

Description will be made below in detail regarding suitable embodiments of the present invention with reference to the appended drawings. Note that with the present specification and drawings, components having substantially the same functional configuration are denoted with the same reference numeral, thereby omitting redundant description thereof.

### <First Embodiment>

First, description will be made regarding a group registration device, group registration method, group deregistration device, and group deregistration method according to a first embodiment of the present invention.

### (Overview of Copyright Management Employing Group Management Method)

First, description will be made regarding the overview of a copyright management system employing a group management method serving as the foundation of a group registration system according to the present embodiment.

The copyright management system employing the group management method according to the present embodiment is configured as a copyright management system for managing use of a content between multiple devices (such as content processing devices and so forth), and protecting the copyright of the content.

That is to say, the above-mentioned copyright management system employing the group management method restricts sharing of a content between devices belonging to different users in order to prevent illegal use of the content such as massive content distribution and so forth via the Internet or the like in a sure manner.

With the copyright management system employing the group management method, copyright management is performed wherein increments of content providing source (specifically, by user possessing a content first) or increments of device which created a content is taken as management increments of content use, and playing of a content at each device is permitted or forbidden depending on the providing source of the content.

More specifically, with the copyright management system employing the group management method, multiple devices belonging to each user are registered into a group at a service server 20 or administration server 21 by user, and at each device registered into a group, playing of a content is controlled based on a source ID representing the providing source of a content, and a source ID list. Thus, a content of the same providing source can be freely copied and played between devices registered into the same user device group.

Note that a content may be an arbitrary content such as an audio content making up music, lecture, radio program, or the like, a video content made up of a still image or moving image making up a movie, television program, video program, photo, picture, chart, or the like, an electronic book, a game, software, or the like. Description will be made below with reference to an example of an audio content, particularly a music content distributed from a distribution server, or ripped from music CD as a content, but the present invention is not restricted to such an example.

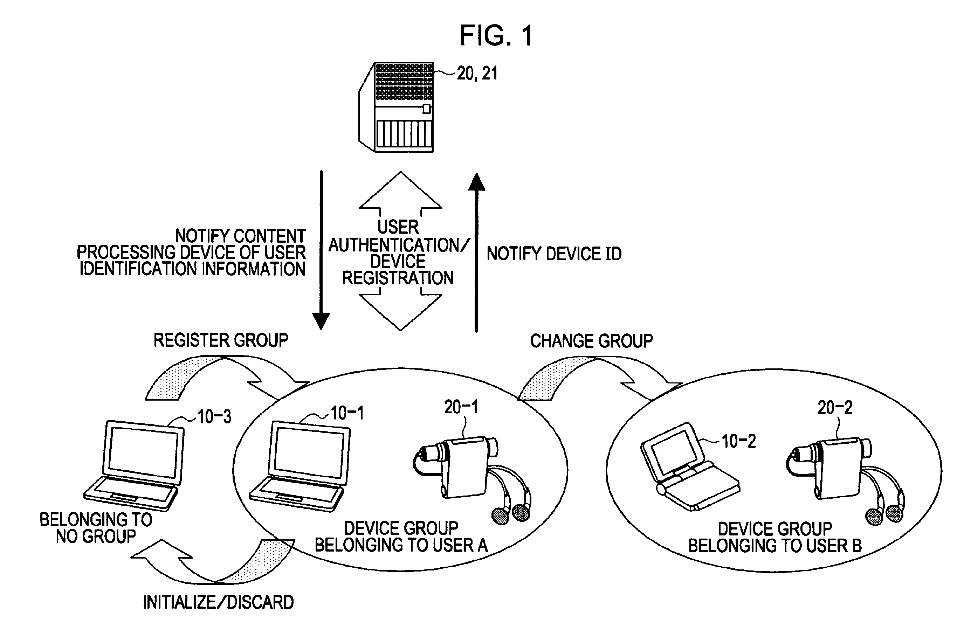

Next, description will be made regarding the overview of group registration with the copyright management system employing the group management method such as described above based on Fig. 1. Note that Fig. 1 is an explanatory diagram schematically illustrating group registration of a group registration system 100 according to the present embodiment.

As shown in Fig. 1, content processing devices (PC, information processing device, or user device) 10-1 and 10-2, and content playing devices (PD) 20-1 and 20-2 are, for example, subjected to grouping into a device group belonging to a user A (content processing device 10-1 and content playing device 20-1), and a device group belonging to a user B (content processing device 10-2 and content playing device 20-2). Such grouping of devices is performed by registering the content processing devices 10 and content playing devices 20 into a group as to the administration server 21 or service server 20 by user.

This group registration will be described specifically with reference to an example of the content processing device (PC) 10-1 belonging to the user A. First, the user A accesses the service server 20 and administration server 21 using the content processing device 10-1 belonging to himself/herself, performs user authentication processing, and sends the device ID of the content processing device 10-1 to the administration server 21. Subsequently, the service server 20 saves the device ID of the content processing device 10-1 so as to be associated with the user A, and registers the content processing device 10-1 into the device group of the user A.

Note that the above-mentioned access is a generic term of information processing for processing information within a self-device or via a network, such as use of a system, connection to a server, reference of a file, saving of a file, deletion of a file, changing of a file, and so forth.

Further, the administration server 21 sends user identification information representing the user A (e.g., group ID, device ID, medium ID, leaf ID, etc.) to the content processing device 10-1, and the content processing device 10 stores the received user identification information in the storage means of itself. Similarly, the other content processing device 10 is also registered into a group. Also, registration of the content playing devices (PD) 20 into a group is performed via the content processing devices (PC) 10.

Thus, with the copyright management system employing the group management method, each device is registered into a group for each user possessing the device, at the service server 20 and administration server 21. As a result of this, a content can be freely shared between devices registered into the device group of the same user. On the other hand, the content cannot be shared between devices registered into the device group of a different user.

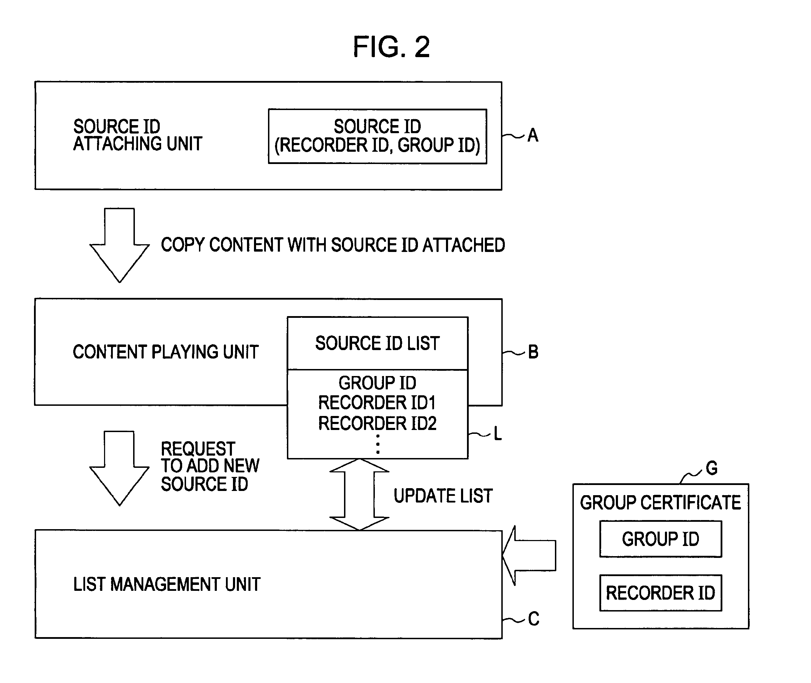

Now, description will be made regarding the overview of such a content sharing management technique based on Fig. 2. Note that Fig. 2 is a block diagram illustrating the primary components of the copyright management system employing the group management method according to the present embodiment.

As shown in Fig. 2, the copyright management system employing the group management method according to the present embodiment includes a source ID attaching unit A, a content playing unit B, and a list management unit C as primary components.

The source ID attaching unit A is, for example, provided at the content processing devices 10 or the like, and includes a function for attaching a source ID representing the providing source of a content to the content. Note that "attaching a source ID to a content" means to associate a source ID with a content, which includes, for example, processing for adding the data of a source ID in a file (content file) including content data, processing for associating the content file with a file including of source ID data, and so forth.

Also, "the providing source of a content" is the source at an individual user level of a content shared within the copyright management system employing the group management method. Specifically, examples of the providing source of a content include (1) a user who obtained (purchased or the like) a content using a content distribution service, and (2) the content processing devices 10 which created a content by means of ripping, self-recording, or the like.

The above-mentioned source ID is an identifier to be attached uniquely for each such a content providing source. This source ID is attached to a content, whereby the providing source of a content circulating within the system can be identified.

With the present embodiment, as such a source ID, for example, a medium ID, a recorder ID, and a group ID are employed. The recorder ID is a source ID in the case of taking the content processing devices 10 as a content providing source, and the group ID is a source ID in the case of taking a user as a content providing source.

The recorder ID is an identifier to be attached uniquely for each of the content processing devices 10 (PC or the like) including a content ripping function. This recorder ID is generated by the content processing devices 10 including the ripping function based on the device ID of this content processing device 10 and so forth, and is securely saved within this content processing device 10. When ripping a content from a removable recording medium 40 such as music CD or the like, the content processing device 10 attaches the recorder ID of the content processing device 10 itself to the content subjected to ripping (hereafter, referred to as a ripping content). Therefore, according to such a recorder ID, the content processing device 10 serving as the creating source of the ripping content (i.e., content providing source) can be identified.

Also, the group ID is an identifier to be attached uniquely for each user possessing a medium or device such as the content processing device 10 and/or content playing device 20 or the like. Specifically, this group ID is attached by user account of a content sharing service provided by the copyright management system employing the group management method according to the present embodiment. According to such a group ID, a device group to which devices belong, and the owner of these can be identified.

The service ID is a unique ID in increments of a content distribution service or a ripping content sharing service which is realized with the copyright management system employing the group management method. Now, the content distribution service is a service for distributing a content from a content distribution server to the content processing devices 10. Also, the ripping content sharing service is a service for enabling a ripping content to be shared between the multiple content processing devices 10 and content playing devices 20 and so forth belonging to the same user by performing the above-mentioned group registration.

Such a group ID is attached to a distribution content distributed from a content distribution server by the content processing device 10, for example. Thus, the group ID is attached to a distribution content, whereby the user of the purchase source of this distribution content (i.e., content providing source) can be identified.

As described above, a content to which the source ID (recorder ID or group ID) is attached by the a content attaching unit 1 included in the content processing device 10 can be freely copied between the content processing device 10 and content playing device 20.

Next, the content playing unit B is made up of a content playing device or content playing software, and is provided in the content processing devices 10 or content playing devices 20. This content playing unit B includes a source ID list L to which a source ID of which the playback has been permitted at this content playing unit is added. This source ID list L is provided for each content playing unit B, and in the event that the content playing units B differ, the source IDs included in the respective source ID lists L also differ.

The content playing unit B checks the above-mentioned source ID list L when playing a content to which the above-mentioned source ID is attached, and enables/disables playing of this content. That is to say, in the case of the source ID attached to a content being included in the source ID list L, the content playing unit B can play this content, but on the other hand, in the case of the source ID attached to a content being not included in the source ID list L, the content playing unit B cannot play this content. Thus, the content playing unit B controls playing of a content in increments of source ID, i.e., in increments of content providing source.

Further, the content playing unit B can request adding of a new source ID to the source ID list L belonging to the content playing unit B itself, for example, as to the list management unit C. That is to say, in order to play a content to which a new source ID not included in the source ID list L belonging to the content playing unit B itself is attached, the content playing unit B needs to add this new source ID to the source ID list L. Therefore, the content playing unit B requests permission for adding this new source ID as to the list management unit C for permitting updating of the source ID list L.

The list management unit C is, for example, provided within the content processing device 10, and updates the source ID list L belonging to the content playing unit B. Now, "updating of the source ID list L" means to add/delete a source ID to/from the source ID list L. A source ID is added/deleted to/from the source ID list L, whereby the list management unit C can enable/disable playing of a content to which this source ID in the content playing unit B is attached.

Such a list management unit C obtains a group certificate G which is shared information where the group ID is associated with the recorder ID, and updates the source ID list L based on such a group certificate G. Specifically, in the event that the group ID included in the group certificate G is identical to the group ID included in the above-mentioned source ID list L, the list management unit C adds the recorder ID included in the group certificate G to the source ID list L. Thus, the recorder ID of the content processing device 10 registered into the device group of the same user is added to the source ID list L, thereby enabling a ripping content subjected to ripping by such a content processing device 10 to be played.

As described above, with the copyright management system employing the group management method according to the present embodiment, playing of a content at each of the content processing device 10 and content playing device 20 is controlled by the above-mentioned source ID attaching unit A, content playing unit B, and list management unit C, thereby managing the copyright of a content to be copied between the content processing devices 10.

### (System Configuration)

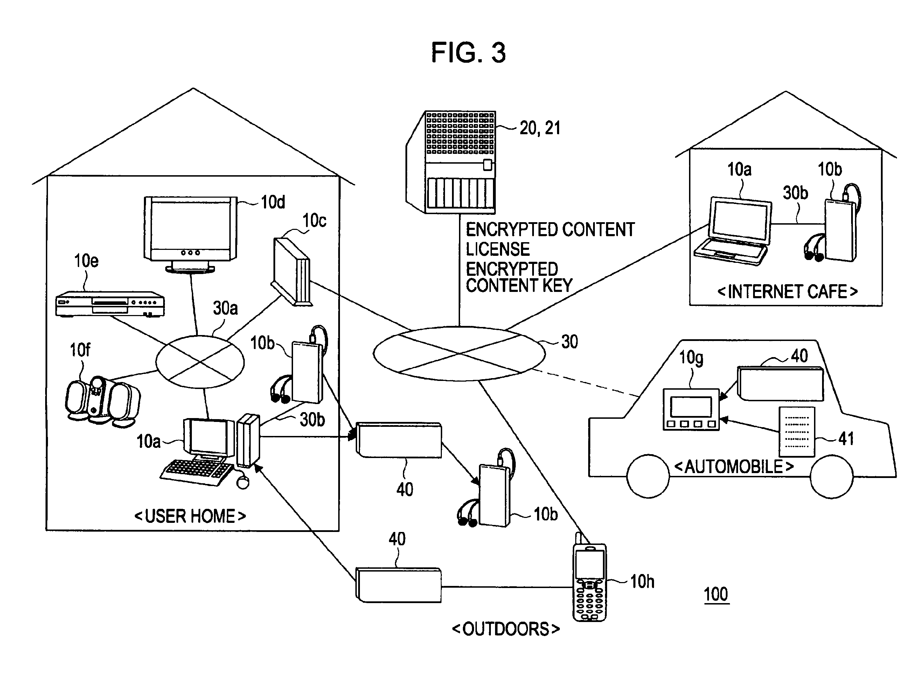

Next, description will be made regarding the overall configuration of the group registration system 100 applied to the copyright management system employing the group management method according to the present embodiment based on Fig. 3. Note that Fig. 3 is a block diagram schematically illustrating the overall configuration of the group registration system 100 according to the present embodiment.

As shown in Fig. 3, the group registration system 100 according to the present embodiment is made up of, for example, multiple user devices 10a, 10b, and so on (hereafter, sometimes collectively referred to as "user device 10"), a service server 20, an administration server 21, a network 30 for mutually connecting those devices (including a home network 30a and a local line 30b), and a removable recording medium 40 for exchanging data, such as a content, license, or the like, among these devices.

The user device 10 is, for example, an information processing device to be registered into a group, but is not restricted to such an example, for example, may be various types of content processing device for employing a content, or content playing device for playing a content, or the like.

In Fig. 3, as examples of this user device 10, a note-type or desktop-type personal computer (hereafter, referred to as PC) 10a, a portable device (hereafter, referred to as PD) 10b which is a portable-type content playing device, a home server 10c, a television device 10d, a recording/playing device 10e such as CD, HD, or DVD recorder/player or the like, a stationary audio player 10f, car audio device 10g, a cellular phone 10h, and the like are exemplified.

The user device 10 is not restricted to such an example, for example, can be configured of various types of information processing devices, such as an arbitrary computer device, a portable terminal such as a PDA (Personal Digital Assistant) or the like, a digital video camera, a home gaming console, an intelligent home appliance, and so forth.

Of the user devices 10, devices including a communication function through the network 30 (e.g., PC 10a, cellular phone 10h, etc.) can be communication-connected with each server (service server 20, etc.). With such a user device 10, for example, group registration can be requested as to the administration server 21, and contents can be transferred from the service server 20.

Note that with the user device 10, software for the content distribution service or software for copyright management can be downloaded from the service server 20, and can be installed. Thus, with the user device 10, in response to distribution of an encrypted content, a license, and an encrypted content key from the content service server 20, such data can be recorded in storage means such as a storage device or the removable recording medium 40 or the like.

Also, with the user device 10, for example, an arrangement may be made wherein a content is newly created with self-recording (own audio recording, video recording, etc.) or ripping or the like, which can be recorded in a storage device or the removable recording medium 40. Note that self-recording means to record audio or the like imaged/sound-collected with an imaging device/sound-collecting device included in the user device 10 itself as video/audio digital data. Also, ripping means to extract a digital content (audio data or video data or the like) recorded in a storage medium such as music CD, video DVD, CD-ROM for software, or the like, convert this into a file format which can be processed by the computer, and record this in a storage device or the removable recording medium 40.

The administration server 21 includes a function for transferring secure information, such as an ID list registered into a group by the service server 20, and so forth, to the user device 10. Also, the service server 20 performs user management, group management, license management, or the like with content distribution.

The service server 20 and administration server 21 are made up of a computer device or the like including a server function. Note that at least one of the service server 20 and administration server 21 includes, for example, a WWW server, a group management server, a content distribution server, a certificate management server, a billing server, and so forth.

Note that the group management server registers the user device 10 and content playing device 20 into a group by user in response to a registration request from the user device 10 belonging to a user subjected to user registration.

The content distribution server is a server for providing a content distribution service, in response to a distribution request from the user device 10 belonging to the user, distributes a content to the user device 10 via the network 30. This content distribution server 34 is, for example, an EMD server or the like for providing an EMD (Electronic Music Distribution) service. This content distribution server compresses and encodes a music content to be distributed using a compression encoding system, for example, such as ATRAC3 (registered trademark) system or MP3 system or the like, encrypts this with an encryption system such as DES or the like, and then distributes this to the user device 10. Also, the content distribution server 34 encrypts a content key for decrypting this distribution content, and transmits this to the user device 10 along with the encrypted distribution content.

The network 30 is a communication line network for connecting the above-mentioned user device 10 and servers 20 and 21 so as to perform two-way communication. The network 30 is made up of, for example, a public network such as the Internet, a telephone network, a satellite communication network, or the like, a leased line network such as WAN, LAN, IP-VPN, or the like, and can be either cable or wireless.

Further, such a network 30 includes a private network. This private network means a network for mutually connecting the multiple user devices 10 which share a content within a range of private use as viewed from the perspective of copyright management. Specific examples of such a private network include a network for connecting the multiple user devices 10 used by the same user, a home network for connecting the multiple user devices 10 used within the same home, and a LAN for connecting the multiple user devices 10 used within a small-scaled limited group (company, friends, etc.).

The removable recording medium 40 is a removable medium capable of storing various types of data such as a content, a pass phrase, a program, and so forth, examples of which include various types of optical disc such as DVD-R, DVD-RW, DVD-RAM, CD-R, CD-RW, magneto-optical disc, or the like, a magnetic disk such as a flexible disk, a hard disk, or the like, and various types of semiconductor memory. Note that the removable recording medium 40 may be, for example, a recording medium to which a copyright management function for restricting copying or playing or the like of a content using an encryption key.

With the group registration system 100 according to the present embodiment, even in the event that of the user devices 10, particularly the user device 10 of which the processing capabilities are relatively small, e.g., the PD 10b or cellular phone 10h, or the like, if the user device 10 is network-connected to the administration server 21 or service server 20 (i.e., online), the user device 10 and/or removable recording medium 40 can be securely registered into a group with a communication protocol of which the processing load is light, which is a first feature thereof.

Also, with the group registration system 100, even if the user device 10 or removable recording medium 40 or the like is not network-connected (offline), another user device 10 requests group registration instead of the administration server 21 or the like, whereby the offline user device 10 can be registered into a group, which is a second feature thereof.

As shown in Fig. 1, in the case of the offline PD 10b being registered into a group, for example, group registration may be performed by the PD 10b itself accessing the administration server 21, and on the other hand, in the case of the offline car audio device 10g, for example, the PC 10a requests group registration from the administration server 21 or the like instead of the PD 10b, and can register this car audio device 10g via a printing medium 41 on which a pass phrase is described, or the removable recording medium 40 in which pass phrase information is recorded, or the like. Note that the details of group registration will be described later.

Next, description will be made in detail regarding the configuration of the user device 10 according to the present embodiment.

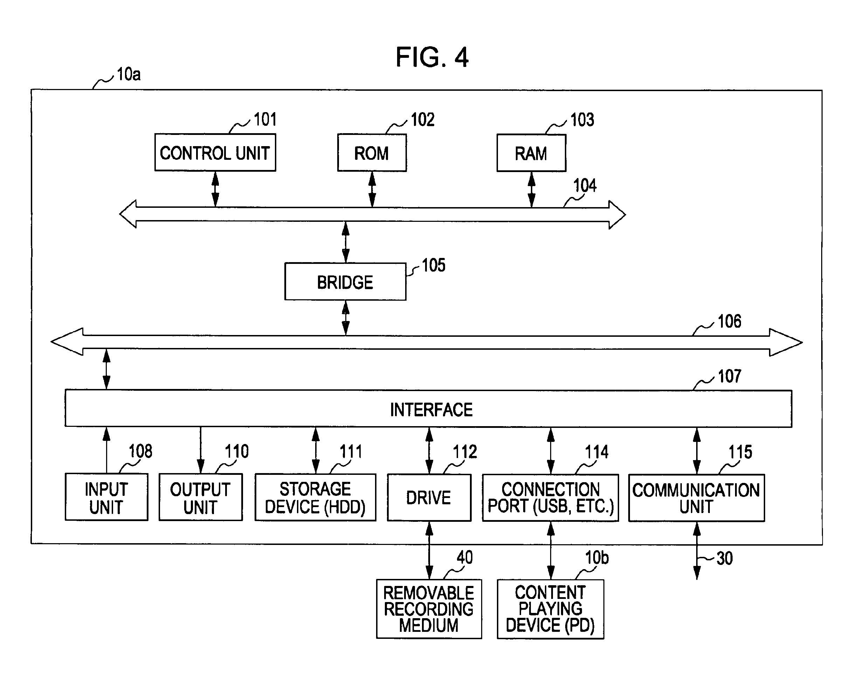

First, description will be made regarding the hardware configuration of the user device 10 according to the present embodiment. Fig. 4 is a block diagram schematically illustrating a hardware configuration example of the user device 10 according to the present embodiment. Note that Fig. 4 is a hardware configuration particularly in the case of the user device 10 being the PC 10a shown in Fig. 3.

As shown in Fig. 4, the user device 10 includes, for example, a control unit 101 equivalent to a CPU (Central Processing Unit) or the like, ROM (Read Only Memory) 102, RAM (Random Access Memory) 103, a host bus 104, a bridge 105, an external bus 106, an interface 107, an input unit 108, an output unit 110, a storage device (HDD) 111, a drive 112, a connection port 114, and a communication unit 115.

The control unit 101 serves as a computing processing device and control device, operates in accordance with various types of programs, and controls the respective units within the user device 10. The ROM 102 stores a program, calculation parameters, and so forth which are used by the control unit 101. The RAM 103 temporarily stores a program used with execution of the control unit 101, parameters which vary with the execution thereof as appropriate, and so forth. These are connected mutually with the host bus 104 made up of a bus for control unit or the like.

The host bus 104 is connected to the external bus 106 such as a PCI (Peripheral Component Interconnect/Interface) bus or the like via the bridge 105.

The input unit 108 is made up of, for example, operating means such as a mouse, a keyboard, a touch panel, buttons, switches, a lever, or the like, and an input control circuit for generating an input signal, and outputting this to the control unit 101, and so forth. The user of the user device 10 operates the input unit 108, whereby the user can input various types of data, and can instruct a processing operation, as to the user device 10.

The output unit 110 is made up of, for example, a CRT (Cathode Ray Tube) display device, a liquid crystal display (LCD) device, a display device such as lamps, an audio output device such as speakers, or the like.

The output unit 110 outputs a played content, for example. Specifically, the display device displays various types of information such as played video data or the like using text or images. On the other hand, the audio output device pronounces played audio data or the like.

The storage device 111 is a device for data storage configured as an example of the storage unit of the user device 10 according to the present embodiment, and is made up of an HDD (Hard Disk Drive) for example. The storage device 111 drives the hard disk, and stores a program executed by the control unit 101, and various types of data. Also, the storage device 111 stores a later-described source ID list L, a content database 116, an own-ID database 117, a content management information database 118, and so forth.

The drive 112 is a reader/writer for recording medium, and is built in or externally attached to the user device 10. The drive 112 records/plays various types of data such as a content, a group certificate G, a program, or the like as to the removable recording medium 40 such as a magnetic disk, optical disc, magneto-optical disc, semiconductor memory, or the like which is loaded in the user device 10.

Specifically, the drive 112 reads out the data recorded in the removable recording medium 40, and supplies this to the RAM 103 which is connected thereto via the interface 107, external bus 106, bridge 105, and host bus 104. The control unit 101 stores this data to the ROM 102, storage device 111, or the like as necessary. On the other hand, the drive 112 receives the data stored in the ROM 102 or storage device 111 or the like, newly generated data, or the data obtained from an external device from the control unit 101, and writes this into the removable recording medium 40.

The connection port 114 is a port for connecting, for example, the external user device 10 or the like, such as the PD 10b or the like, and includes a connection terminal such as USB, IEEE1394, or the like. The connection port 114 is connected to the control unit 101 and so forth via the interface 107, external bus 106, bridge 105, host bus 104, and so forth. According to such a connection port 114, the user device 10 can communicate various types of data as to the PD 10b or the like via the local line 30b.

The communication unit 115 is, for example, a communication interface made up of a communication device and so forth for connecting to the network 30. The communication unit 115 sends/receives various types of data such as a content, source ID list L (or GID list), a control signal, or the like as to an external device, such as another user device 10, service server 20, or the like.

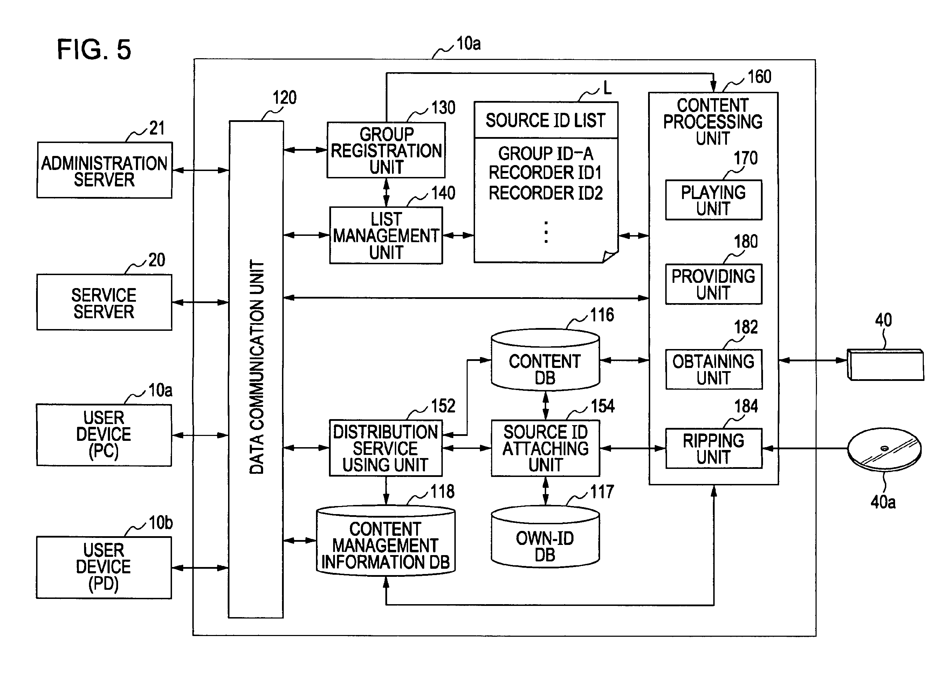

Next, description will be made regarding the primary functions of the PC 10a which is the user device 10 according to the present embodiment. Note that Fig. 5 is a block diagram schematically illustrating the functions (or modules) of the PC 10a according to the present embodiment.

As shown in Fig. 5, the PC 10a includes, for example, a data communication unit 120, a group registration unit 130, a list management unit 140, a distribution service using unit 152, a source ID attaching unit 154, a content processing unit 160, a content database 116, an own-ID database 117, and a content management information database 118.

The data communication unit 120 sends/receives various types of data between the PC 10a and an external device. For example, the data communication unit 120 is a module program for sending/receiving data between the user device 10 and another user device 10 or server 30 via the network 30 using the above-mentioned communication unit 115. Also, the data communication unit 120 sends/receives data between the PC 10a and PD 10b via the local line 30b using the above-mentioned connection port 114.

The group registration unit 130 performs user registration processing, a request for the group registration processing (device registration processing) of the user device 10, and so forth as to the administration server 21. With this group registration processing, the group registration unit 130 sends group registration request information (e.g., group registration request notice, group ID, password, terminal ID, medium ID, recorder ID, etc.) to the administration server 21.

Here, the terminal ID is an ID for uniquely identifying the user device 10 serving as a requesting source (or communicating source) for requiring from a server. The terminal ID and recorder ID are uniquely generated by each of the user devices 10, for example, based on a random number generated independently, the device ID of each of the user devices 10, or the like.

Also, the group registration unit 130 receives service data (leaf ID, service common key, etc.) notified from the administration server 21 in response to the group registration of the user device 10. Further, for example, the group registration unit 130 outputs a received leaf ID to the list management unit 140, and outputs a received service common key to the content processing unit 160. This service common key (secret key) is a key necessary for decrypting encrypted content data, and is securely stored so as not to be tampered.

Also, the group registration unit 130 performs the group deregistration processing of the user device 10 as to the administration server 21. In this case also, in the same way as with the case of registration, the group registration unit 130 sends group deregistration request information (e.g., group deregistration request notice, group ID, password, terminal ID, etc.) to the administration server 21. In the case of deregistration of registration being performed, the group registration unit 130 informs the list management unit 140 accordingly.

The list management unit 140 is a component corresponding to the list management unit C shown in Fig. 2. The list management unit 140 includes, for example, a function for updating the source ID list L belonging to the user device 10.

Also, the list management unit 140 deletes all of the source IDs within the source ID list L at the time of group deregistration.

Note that the source ID list L is securely stored in the storage device 111 or ROM 102 or the like of the user device 10. This source ID list L is, for example, encrypted and stored in a state of a digital signature being attached thereto in order to prevent illegal tampering by a user.

With the present embodiment, the group ID received from the administration server 21 at the time of group registration is stored in the PC 10a so as to be included in the source ID list L as described above. This is, as described above, because the group ID is used as a source ID for enabling a distribution content to which this group ID is attached to be played, and playing control of the distribution content is performed based on such a group ID.

Also, though not shown in the drawing, the list management unit 140 is, for example, provided with a recorder ID updating unit, a list synchronizing unit, and an own-ID adding unit, and a group ID updating unit.

The recorder ID updating unit adds the recorder ID or medium ID or the like to the source ID list L. Specifically, first, the recorder ID updating unit reads out the group ID list sent from the administration server 21, and also reads out the group ID within the source ID list L. Next, the recorder ID updating unit determines whether or not both group IDs are identical. As a result of this determination, in the case of both group IDs being identical, the recorder ID updating unit reads out the recorder ID corresponding to another user device 10 included in the above-mentioned group ID list, and adds this to the source ID list L.

Thus, only the recorder ID corresponding to the user device 10 registered into the same device group can be added to the source ID list L. Note that the recorder ID updating unit may restrict addition of the recorder ID, for example, by providing an upper limit regarding the number of recorder IDs which can be added to the source ID list L.

The list synchronizing unit includes a function for synchronizing multiple source ID lists L. The synchronizing of source ID lists L as stated here means to merge different multiple source ID lists L, and consequently, the synchronized source ID lists L include all of the recorder IDs included in the multiple original source ID lists L without redundancy.

The own-ID adding unit adds the recorder ID corresponding to the user device 10 itself to the source ID list L, for example, without condition. Specifically, the own-ID adding unit reads out the recorder ID corresponding to the user device 10 itself, for example, from the own-ID database 117, and writes this into the source ID list L. Thus, the user device 10 can play a ripping content subjected to ripping by itself regardless of whether or not there is group registration. Note that an arrangement may be made wherein the own-ID adding unit generates the group ID based on a random number or the like, and records this in the own-ID database 117.

Upon the group ID being input from the above-mentioned group registration unit 130 at the time of group registration of the user device 10 for example, the group ID updating unit adds such a group ID to the source ID list L. Thus, the user device 10 can play a distribution content to which this group ID is attached.

Also, upon the a group deregistration notice being input from the above-mentioned group registration unit 130, the group ID updating unit deletes all of the source IDs (recorder IDs and group IDs) included in the source ID list L. Note however, only the recorder ID corresponding to the user device 10 itself is not deleted from the sour ID list L. Thus, the user device 10 cannot play contents other than a ripping content created by itself and a content of which the copyright is not managed.

Note that the recorder ID updating unit and group ID updating unit can update the source ID list L received from the user device 10 such as the PD 10b or the like to send back this.

The distribution service using unit 152 performs processing relating to a content distribution service as the above-mentioned service server 20 for distributing contents.

Specifically, the distribution service using unit 152 sends/receives various types of information, for example, user authentication information necessary for using the above-mentioned content distribution service (user ID (or group ID), password, etc.), billing information, content distribution request information, or the like to/from the above-mentioned service server 20, and assists input/output of those information.

Also, the distribution service using unit 152 receives the distribution content and the license of this distribution content sent from the service server 20 via the network 30 and communication device 115. That is to say, upon the user of the user device 10 purchasing a content using the content distribution service, the distribution service using unit 152 downloads the file of the distribution content, and the file of the license determining the use conditions of this distribution content from the service server 20 with separate files. In the case of a content of which the copyright management employing the group management method is performed, with the license of the distribution content, the leaf ID or group ID or the like assigned to a user by the above-mentioned group registration is described.

The distribution service using unit 152 processes the distribution content data and license data thus received, and creates a content file made up of the content and license as the same file.

At this time, with regard to the distribution content of the group management method, the group ID is attached to the content data of the distribution content by the source ID attaching unit 154. The source ID attaching unit 154 is a component corresponding to the above-mentioned source ID attaching unit A. The source ID attaching unit 154 attaches the group ID to a distribution content. Specifically, the source ID attaching unit 154 executes processing for converting the leaf ID described in the license corresponding to a distribution content into the group ID. The conversion processing from the leaf ID to the group ID is, in the same way as described above, for example, performed by adding the service ID of the content distribution service to the leaf ID. Thus, the group ID representing the user who purchased this distribution content and the service is associated with the distribution content.

Thus, the distribution service using unit 152 and source ID attaching unit 154 creates a content file which combined the file of a content and the file of a license distributed.

The own-ID database 117 stores, for example, the IDs corresponding to the user device 10 itself, such as the device ID, recorder ID, terminal ID, and the like of the user device 10.

The device ID is an identifier to be uniquely attached in increments of various types of device (user device 10 and content playing device 20 and so forth). This device ID is, for example, assigned at the time of factory shipments of the user device 10, and is securely stored in the own-ID database 117.

The content processing unit 160 performs various types of processing as to a content. The content processing unit 160 includes, for example, a content playing unit 170, a content providing unit 180, a content obtaining unit 182, and a ripping unit 184.

The content playing unit 170 is a component corresponding to the content playing unit B shown in Fig. 2. The content playing unit 170 is made up of, for example, a playing device including a content playing function, or content playing software installed into the user device 10, or the like, and can play various types of contents. The content data played by the content playing unit 170 is output from the above-mentioned output unit 110.

Note that the two content playing units 170 or more may be provided in the one user device 10. For example, two types or more of content playing software are installed, two or more playing devices are provided, content playing software and a plying device are used together, or the like as to the one user device 10, whereby the two or more content playing units 170 corresponding to each content distribution service or each copyright management method may be configured within the one user device 10.

The content providing unit 180 provides a content to another user device 10 or the PD 10b. Also, the content obtaining unit 182 obtains a content from another user device 10 or the PD 10b. These content providing unit 180 and content obtaining unit 182 may execute providing/obtaining processing of a content, for example, using sending/receiving processing via the network 20 or the like, or may execute this via the removable recording medium 40.

Note that at the time of such playing, providing, or obtaining of a content, the content processing unit 160 may control the above-mentioned processing based on the content management information within the content management information database 118, or may display the content management information on the output device 110.

The ripping unit 184 subjects the content recorded in the recording medium 40a, such as CD, DVD, or the like in which a music content or video content is recorded, to ripping. Specifically, the ripping unit 184 controls the driver 112 to extract music/video data or the like from the recording medium 40a, for example, according to user input, and creates a content wherein such music/video data is converted into a format which can be processed by the user device 10 (e.g., ATRAC3 (registered trademark) format, etc.). The content thus subjected to ripping is attached with the recorder ID of the PC 10a by the source ID attaching unit 154.

Also, though not shown in the drawing, the PC 10a may include a transfer control unit for controlling transfer of a content between the PC 10a and PD 10b. This transfer control unit controls transfer to the PD 10b of the content stored in the PC 10a, or transfer to the PC 10a of the content stored in the PD 10b according to a transfer request based on user input for example.

Also, this transfer control unit can perform not only the transfer control of a content of which the copyright is managed (content to which the source ID is attached) but also the transfer control of a content of which the copyright is not managed (e.g., raw content to which the source ID is not attached). For example, with regard to a content of which the copyright is not managed, upon a transfer request to the PD 10b from the user device 10, or a transfer request to the user device 10 from the PD 10b being input, the transfer control unit compares the group ID within the source ID list of the user device 10 and the group ID within the source ID list of the PD 10b. As a result of this comparison, in the event that both group IDs are identical, the transfer control unit permits this transfer, but on the other hand, in the event that both group IDs are not identical, forbids this transfer. Thus, not only the use of a content of which the copyright is managed with the group management method but also the use of a content of which the copyright is not protected (unrestricted copying between devices) can be restricted.

Description has been made so far regarding the respective components of the PC 10a. The above-mentioned data communication unit 120, group registration unit 130, list management unit 140, distribution service using unit 152, source ID attaching unit 154, content processing unit 160, transfer control unit, and so forth may be configured, for example, as hardware including the above-mentioned respective functions, or may configured by installing a program for causing the computer to realize the above-mentioned respective functions into the user device 10.

Note that in Fig. 4 and Fig. 5, description has been made regarding the case of the user device 10 being the PC 10a as an example, but the user device 10 is not restricted to such an example, as long as the user device is a device having the same level of processing capabilities as the PC 10a.

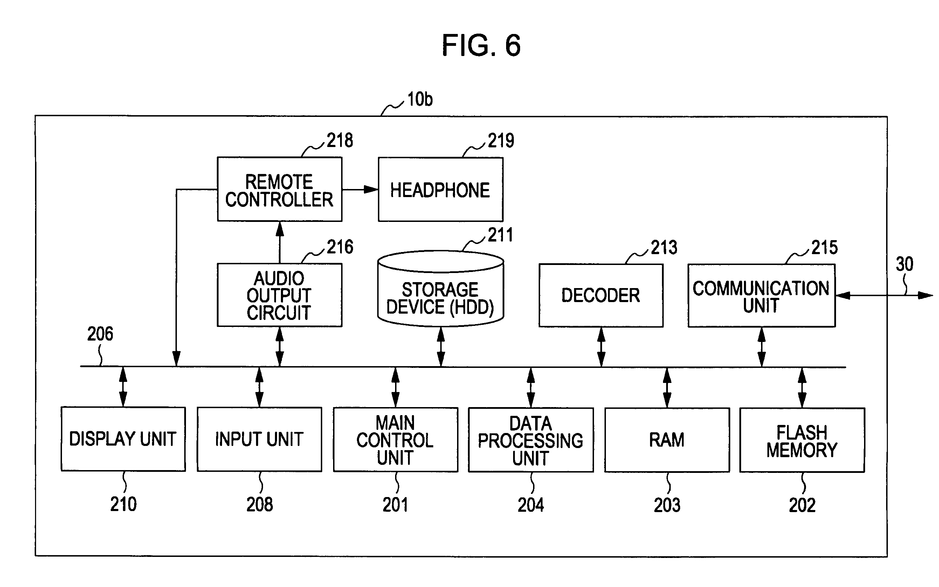

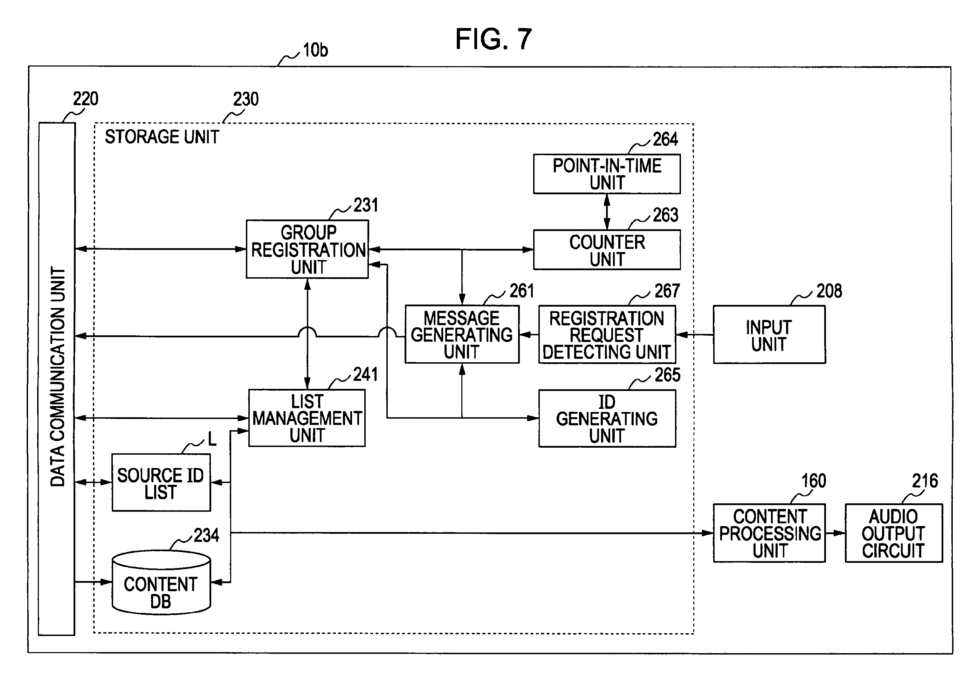

Also, the user device 10 shown in Fig. 4 and Fig. 5 may be further provided with the function made up of the user device 10 shown in Fig. 6 or Fig. 7 which will be described below.

Next, the hardware configuration of the user device 10 according to the present embodiment will be described with reference to Fig. 6. Fig. 6 is a block diagram schematically illustrating an example of the hardware configuration of the user device 10 according to the present embodiment. Note that Fig. 6 shows a hardware configuration in a case in particular wherein the user device 10 is the PD 10b shown in Fig. 3.

As shown in Fig. 6, the PD 10b has, for example, a main control unit 201, flash memory 202, RAM 203, a data processing unit 204, a bus 206, an input unit 208, a display unit 210, a storage device (HDD) 211, a decoder 213, a communication unit 215, an audio output circuit 216, a remote controller 218, and headphones 219.

The main control unit 201 functions as a control device, so as to control each component of the PD 10b. The flash memory 202 stores, for example, programs stipulating actions of the main control unit 201, and various types of data. Also, the RAM 203 is configured of SDRAM (Synchronous DRAM) for example, and performs primary storage of various types of data relating to processing at the main control unit 201. Note that the processing capabilities of the main control unit 201 are lower than the processing capabilities of the control unit 101 described above that is shown in Fig. 4 by a certain degree, but is not restricted to this example.

The data processing unit 204 is configured of a system LSI or the like, and processes data transferred within the PD 10b. The bus 206 is a data line which connects the main control unit 201, flash memory 202, RAM 203, data processing unit 204, input unit 208, display unit 210, storage device (HDD) 211, decoder 213, communication unit 215, audio output circuit 216, and so forth.

The input unit 208 and remote controller 218 are configured of operating means such as a touch panel, button keys, levers, dials, or the like for example, and an input control circuit or the like for generating input signals according to operations made by the user at the operating means, and outputting to the main control unit 201, and so forth. The user of the PD 10b can input various types of data to the PD 10b and instruct processing operations, by operating this input unit 208 and the later-described remote controller 218.

The display unit 210 is configured of an LCD panel and LCD control circuit and so forth, for example. The display unit 210 displays various types of information in text or images, corresponding to control made by the main control unit 201.

The storage device 211 is a device for storing data, configured as an example of a storage unit of the PD 10b according to the present embodiment. This storage device 211 is configured of a hard disk drive (HDD) having storage capacity in the order of tens of GB for example, and stores various types of data, such as compressed contents, programs of the main control unit 201, processing data, and so forth.

The decoder 213 performs decryption processing of encrypted content data, decoding processing surround processing, processing for conversion to PCM data, and so forth.

The communication unit 215 exchanges various types of data, such as contents, source ID lists L, content management information, control signals, and so forth, with user devices 10 connected via a local line 30b such as a USB cable or the like, or the communication unit 215 exchanges various types of data, such as contents, source ID lists L, content management information, control signals, and so forth, with external devices such as other user device 10 or the administration server 21 and so forth via the network 30.

The audio output circuit 216 amplifies analog audio data decoded by the decoder 213 and subjected to DA conversion by the CPU, and outputs to the remote controller 218. This analog audio data is output from the remote controller 218 to the headphones 219, and is output from speakers built into the headphones 219.

Now, a primary data flow with the PD 10b having such a hardware configuration will be described.

Description will be made regarding the data flow at the time of the content playing device (PD) 10b playing contents. First, a content play request is input to the main control unit 201, an in the event that playing of this content is permitted by the main control unit 201, the data processing unit 204 reads out the content data from the storage device 211, and concurrently with transferring to the RAM 203, transfers the content data transferred to the RAM 203 to the decoder 213. Next, the decoder 203 performs decryption processing of the encrypted content data, decoding processing, surround processing, processing for conversion to PCM data, and so forth, and transfers to the main control unit 201. Further, the main control unit 201 subjects the input PCM data to DA conversion (not shown.) whereby volume adjustment is performed and conversion into analog audio data is performed, and transfers to the amplifier of the audio output circuit 216. The audio output circuit 216 outputs the analog audio data from the headphones 219 via the remote controller 218.

Next, primary functions of the PD 10b according to the present embodiment will be described with reference to Fig. 7. Note that Fig. 7 is a block diagram schematically illustrating the functions (or modules) of the PD 10b according to the present embodiment.

AS shown in Fig. 7, the user device 10 has, for example, a data communication unit 220, and storage unit 230. Further, the storage unit 230 stores a group registration unit 231, a list management unit 241, a message generating unit 261, a counter unit 263, a point-in-time unit 264, an ID generating unit 265, a registration request detecting unit 267, and a source ID list L and content DB 234.

The data communication unit 220 uses the aforementioned communication unit 215 to exchange data with user devices 10 via the local line 30b, or exchanges data with servers such as the administration server 21 or the like via the network 30.

The storage unit 230 is configured of, for example, the aforementioned storage device 211 and flash memory 202 and the like, and stores various types of data within the user device 10. The storage unit 230 stores, for example, a source ID list L, content database 234, and so forth.

Also, the source ID list L in the storage unit 230 is generally the same as the source ID list L in the aforementioned user device 10 (PC 10a). By group registration of the PD 10b, a group ID is added, and also, recorder IDs of the use devices 10 belonging to the same device group are also added. With the present embodiment, the source ID list L is updated by the list management unit 140 of the Pd 10b, but an arrangement may be made wherein the PD 10a updates its own source ID list L.

The group registration unit (or verification unit) 231 performs user registration processing of the administration server 21, verification relating to group registration processing of user device 10 (device registration processing), and the like. Further, in the event that the user device 10 has input a pass phrase externally offline (asynchronously), the group registration unit 231 can decode the pass phrase and convert into a registration reply message. This will be described in detail later.

The list management unit (or storage unit, deregistration unit) 241 is a component corresponding to the list management unit C shown in Fig. 2, and the list management unit 241 stores the group ID in the source ID list L, stores IDs such as device IDs and the like in the source ID list L linked with the group ID, and so forth. This will be described in detail later.

The content database 234 stores contents transferred from the user device 10 or service server 20 of the like. In the event that the playing control method of the Pd 10b is set to the group management method, contents to which a license including source ID has been added are stored in the content database 234.

Also, an unshown own-ID database within the storage unit 230 securely stores the device ID of the PD 10b, for example. This device ID is an ID uniquely assigned to each PD 10b at the time of shipping from the factory, and is used at the time of group registration of the PD 10b.

A message generating unit 261 obtains counter information (or time stamp) generated by the counter unit 263 and/or a session ID generated by the ID generating unit 265, and transmits the registration request message to the data communication unit 220.

Also, the message generating unit 261 can determine whether or not the user device 10 is in an online (synchronous) state of being connected to the network 30, or is in an offline (asynchronous) state of not being connected to the network 30, and add to the registration message as state information.

The counter unit 263 generates counter information. For example, the counter unit 263 generates counter information which increases by one like "1, 2, 3, ···" (incremental), and generates counter information which decreases by one like "90, 89, 88, ···" (decremental). Note that the generated counter information is stored in storage means such as a cache of the user device 10, until being updated to the next counter information.

Also, the counter unit 263 is not restricted to cases of generating the above-described incremental counter information or decremental counter information, and can also refer the point-in-time generated by the point-in-time unit 264, and generate a time stamp in a "YYYYMMDDhhmmss" format, such as "Year 2005, Month 8, Date 22, hour 13, minute 50, second 15", as counter information. Note that the generated time stamp is also stored until being updated by the next time stamp.

The point-in-time unit 264 is capable of keeping precise time (standard time), and can output the point-in-time in the "YYYYMMDDhhmmss" format, in response to external requests. Note that the point-in-time unit may also be an arrangement which does not keep standard time itself but access a time server or the like by NTP via the network 30, and obtains the standard point-in-time.

The ID generating unit 265 sends a message requesting registration to the administration server for registration therebetween in order to perform group registration, and upon receiving a reply message thereof, generates a session ID which identifies the registration session, which is the series of exchanges.

The registration request detecting unit (or application) 267 detects requests for group registration by input signals from the input unit 208. Upon detecting a request, generating of a registration request message is instructed to the message generating unit 261.

The PD 10b can handle copyright management of the group management method, such as controlling playing of contents based on the source ID added to the contents and the source ID list L. Accordingly, the user can freely download and play contents from his/her own user device 10 to the PD 10b, so the degree of freedom of content usage is higher than with the conventional check-in/check-out method, and is more user-friendly.

Note that the above-described data communication unit 220, group registration unit 231, list management unit 241, message generating unit 261, counter unit 263, point-in-time unit 264, ID generating unit 265, registration request detecting unit 267, and so forth, may be configured as hardware having the above-described functions, or may be configured by installing into the PD 10b a program which realizes the above functions by a computer.

Note that the user device 10 shown in Fig. 6 and Fig. 7 has been described by way of the example of the PD 10b, but is not restricted to this example as long as it is a user device 10 which does not have very high processing capabilities and has communication functions, and may be carried out in the case of any user device 10 such as the cellular telephone 10h, for example.

### (About Data)

Now, primary data used in the group registration system according to the present embodiment will be briefly described.
- "Session ID" is an ID for identifying a session such as a registration session or the like for ensuring non-redundancy of message transmission/reception with the administration server 21. While a session is live, the session ID is held securely so as to keep from being tampered by a third party, and is discarded at the time of the session ending.
- "Counter information" is information such as a counter which is incremented to ensure non-redundancy of message transmission/reception, a time stamp, or the like. This counter information also needs to be held securely so as to keep from being tampered by a third party.
- "Terminal ID" is an ID for identifying a requesting user device 10 requesting group registration to the service server 20 or administration server 21, for example.
- "Media ID" is an ID subject to group registration, for identifying a hard disk drive (HDD), removable recording medium 40, or the like.
- "Recorder ID" is an ID for identifying a recording device, for example.
- "Device ID" is an ID for identifying a player device, for example.
- "Valid period information" is information indicating conditions of valid period given to the group ID. Valid period information is configured of the starting date-and-time of the valid period (Year, Month, Date, time) and the ending date-and-time of the valid period (Year, Month, Date, time), indicating the range of the valid period.
- "Operation permission information" is information indicating the types of operations which are permitted to the group indicated by the group ID, for example. With operation permission information, for example, "0" indicates playing non-permissible / recording non-permissible, "1" indicates playing permissible / recording non-permissible, "2" indicates playing non-permissible / recording permissible, and "3" indicates playing permissible /recording permissible.
- A GID list is a list made up of sets of, for example, the group ID, ID list (list including device ID, media ID, and so forth), the valid period information, the operation permission information, and so forth. Note that the GID list is information included in the registration request message and is a list of IDs subject to group registration for example, but is not restricted to this example.
- "Signature" is signature data, for example.
- "Service ID" is an ID for identifying services. Also, a service ID is correlated with a group ID.
- "Online (synchronous) information" is information indicating the state of the user device 10 being connected to a network.
- "Offline (asynchronous) information" is information indicating the state of the user device 10 being disconnected from a network.
   While the above data is primarily used, the group registration system 100 according to the present embodiment can be carried out using other data, and is not restricted to this data alone.

### (Group registration method: synchronous / session ID method)

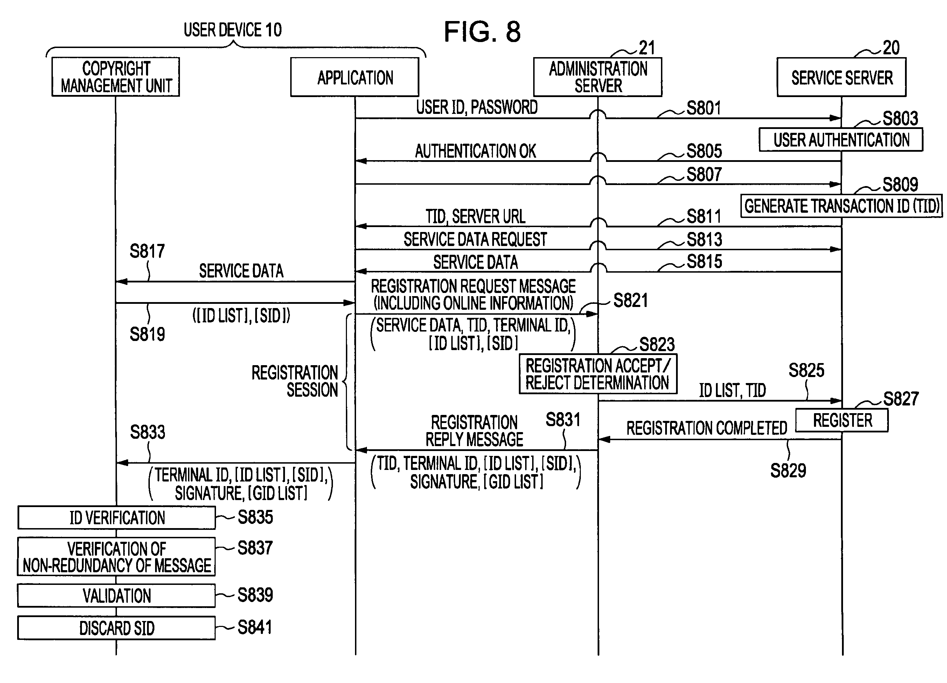

Next, a series of processing of the group registration method using the group registration system 100 such as described above will be described with reference to Fig. 8. Fig. 8 is a sequence diagram schematically illustrating a group registration method of the synchronous / session ID method.

Note that the copyright management unit shown in Fig. 8 is equivalent to an entity including the above-described group registration unit 231, list management unit 241, ID generating unit 265 and so forth, and the application shown in Fig. 8 is equivalent to an entity including the above-described message generating unit 261, registration request detecting unit 267, and so forth.

First, as shown in Fig. 8, in steps S801 through S811, a communication connection is securely established between an application of the user device 10 at the registration requesting side and the service server 20 via the network 30, and user authentication is performed.

Specifically, upon the registration request detecting unit 267 of the application of the user device 10 detecting a registration request in response to user input, the data communication unit 220 sends a user ID and password to the service server 20 (S801). Thereupon, the service server 20 checks the received user ID and password against a user ID and password registered in a database beforehand, and performs user authentication processing (S803).

In the event that user authentication is established as a result of the above checking, the service server 20 permits login, and sends a notification to the effect that user authentication has been established to the application of the user device 10 (S805). Next, the application sends a registration request notification to the service server 20 (S807). This registration request notification lets the service server 20 know that the user device 10 has accessed for registration request. Note that what is indispensable for group registration is the registration session, and the above registration request notification can be omitted.

Next, the service server 20 generates a transaction ID (TID) (S809), and sends the generated transaction ID and a URL (Uniform Resource Locator) which is an example of address information of the administration server 21 to the application of the user device 10 (S811). Thus, the user device 10 can access the administration server 21 based on the received URL.

In the following steps S813 through S841, processing for actually registering the user device 10 at the administration server 21 is performed.

Specifically, first, the application of the user device 10 requests service data (or a service ID) from the service server 20 (S813). Thereupon, the service server 20 returns service data (or a service ID) to the user device 10 (S815).

Note that the above service data may include a leaf ID corresponding to the authenticated user, and the service shared key.

Next, the application of the user device 10 sends the service data to the ID generating unit 265 of the copyright management unit (S817).

Upon receiving the service data, the ID generating unit 265 generates a session ID identifying the registration session (or SID). The generated SID is sent to the application along with the ID list made up of the terminal ID and recorder ID and so forth corresponding to the user device 10 itself (S819).

We will say that the data within the [ ] in Fig. 8 can be read input by the copyright management unit of the user device 10 and the administration server 21, by encryption/decryption with a key such as AES-CBC or the like. For example, with the [ID list, SID] shown in step S819, only the copyright management unit of the user device 10 and the administration server 21 can read the ID list and SID.

Next, the message generating unit 261 of the user device 10 generates a registration request message based on the session ID, ID list, TID received in S811 above, and the service data, which is set to the administration server 21 (S821). Note that the registration request message includes online information. The terminal ID and recorder ID and the like are generated by the user device 10.

Next, the administration server 21 determines whether or not registration of the user device 10 is permissible, based on the ID list and the like included in the registration request message that has been received (S823). This registration permissible/non-permissible determination (S823) is configured based on an upper-limit number of user devices 10 which can be registered in the same device group (e.g., an upper-limit number of device IDs (e.g., three), an upper-limit number of recorder IDs (e.g., ten)). More specifically, in the event that for example three user devices 10 having different device IDs are already registered for the device group of the authenticated user, the administration server 21 forbids registration of a new user device 10. Also, in the event that for example ten user devices 10 having different recorder IDs have been registered in the past for the device group of the authenticated user (regardless of whether hey are currently registered or not), the administration server 21 forbids registration of a new user device 10.

In the event of permitting registration as a result of the registration permissible/non-permissible determination, the administration server 21 sends the ID list and TID to the service server 20 to perform registration processing of the user device 10 requesting registration (S825).

The service server 20 writes and registers, in the record of the authenticated user in the group registration database (not shown.), IDs such as the terminal ID, device ID, media ID, recorder ID, or the like, received from the user device 10 requesting registration (S827). Further, the service server 20 sends a registration-completed notification and GID list regarding the registered user device 10, to the administration server 21.

Note that in the event that there is no group ID to which registration such as device ID or media ID can be made, the service server 20 generates a new group ID for example, and registers to the group the IDs such as device ID and media ID to be registered linked to the group ID (S827), but is not restricted to this example.

Upon confirming that online information is included in the registration request message, the administration server 21 generates a registration reply message based on the GID list received from the service server 20 and the session ID and the like received from the registration-requesting user device 10, and sends this to the user device 10 (S831). In the event of confirming that online information is not included in the registration request message, the administration server 21 does not generate a registration reply message, but rather causes the service server 20 to create information such as a pass phrase, which will be described later.

The signature included in the registration request message is a MAC value of data such as, for example, the terminal ID, GID list, session ID, and so forth, but is not restricted to this example. The completeness of the registration reply message can be verified by this signature.

Upon receiving the registration reply message, the application of the user device 10 transfers this to the group registration unit 231 of the copyright management unit without any change (S833). Note that the application cannot read information included in the registration reply message, such as the "SID" for example.

The group registration unit 231 verifies that the terminal ID of the received registration request message and the terminal ID at the time of sending the registration request message (or of itself) match (S835).

Next, the group registration unit 231 verifies that the registration reply message (reply) as to the registration request message which the user device 10 has sent once, has been received once (S837). For example, the group registration unit 231 verifies that the received SID and the SID which the ID generating unit 265 generated at the time of sending the registration request message match.

Note that verification of non-redundancy of the message (S837) is not restricted to matching of SIDs, and can be carried out by, for example, following verification of matching of SIDs, referencing a sending flag and reception flag so as to confirm whether or not there has been further sending/reception of messages, thereby verifying non-redundancy.

Also, along with the above message non-redundancy verification (S837), the group registration unit 231 also verifies completeness of the registration reply message regarding whether or not the message has been tampered with, based on the signature included in the registration reply message.

Next, upon verification by the group registration unit 231 ending, the list management unit 241 of the user device 10 adds and stores the group ID within the GID list received from the administration server 21 in its own source ID list L, thereby validating the GID list (S839). Thus, the user device 10 can play distributed contents with the group ID thereof added thereto.

Note that the list management unit 241 may receive a leaf ID from the administration server 21 and generate a group ID based on the leaf ID.

Also, information such as the operation permission information and valid period information and the like within the GID list is also stored by the list management unit 241 in the source ID list L or another storage region.

Next, the group registration unit 231 and ID generating unit 265 discard the session ID (SID) (S841). Thus, the series of processing of the group registration method with the synchronous/ session ID method according to the present embodiment ends.

Note that with the group registration method shown in Fig. 8, description has been made with reference to an example of performing group registration of the PD 10b shown in Fig. 6 and Fig. 7, but is not restricted to this example, and can be carried out in the same way with other user devices 10 other than the PD 10b.

Note that the following certificate issuing and distributing processing may be performed following such registration processing of the user device 10. That is to say, first, the user device 10 issues a group certificate G including a group ID and recorder ID corresponding to itself, and transmits the group certificate G to a certificate management server (not shown.). The certificate management server then stores the received group certificate G in a certificate database. Thus, at the time of another user device 10 being registered in the same device group, the group certificate G can be distributed so as to share the recorder ID.

### (Group registration method: synchronous / counter information method)

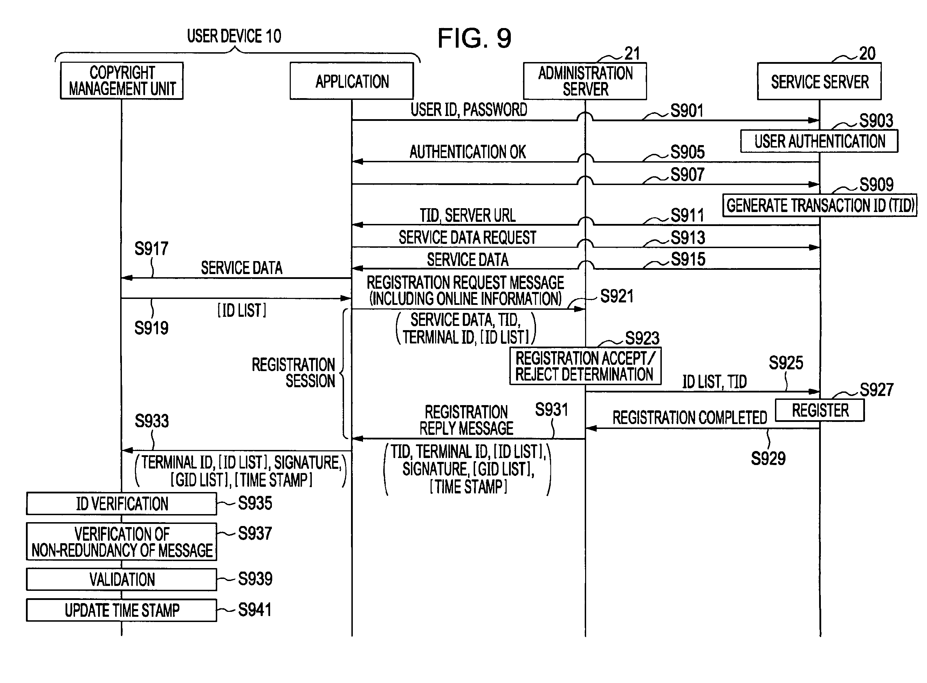

Next, a series of processing of the group registration method using the group registration system 100 such as described above will be described with reference to Fig. 9. Fig. 9 is a sequence diagram schematically illustrating a group registration method of the synchronous / counter information method.

Note that the copyright management unit shown in Fig. 9 is equivalent to an entity including the above-described group registration unit 231, list management unit 241, counter unit 263, point-in-time unit 264, and so forth, and the application shown in Fig. 9 is equivalent to an entity including the above-described message generating unit 261, registration request detecting unit 267, and so forth.

First, as shown in Fig. 9, in steps S901 through S911, a communication connection is securely established between an application of the user device 10 at the registration requesting side and the service server 20 via the network 30, and user authentication is performed.

Specifically, upon the registration request detecting unit 267 of the application of the user device 10 detecting a registration request in response to user input, the data communication unit 220 sends a user ID and password to the service server 20 (S901). Thereupon, the service server 20 checks the received user ID and password against a user ID and password registered in a database beforehand, and performs user authentication processing (S903).

In the event that user authentication is established as a result of the above checking, the service server 20 permits login, and sends a notification to the effect that user authentication has been established to the application of the user device 10 (S905). Next, the application sends a registration request notification to the service server 20 (S907). This registration request notification lets the service server 20 know that the user device 10 has accessed for registration request.

Next, the service server 20 generates a transaction ID (TID) (S909), and sends the generated transaction ID and a URL (Uniform Resource Locator) which is an example of address information of the administration server 21 to the application of the user device 10 (S911). Thus, the user device 10 can access the administration server 21 based on the received URL.

In the following steps S913 through S941, processing for actually registering the user device 10 at the administration server 21 is performed.

Specifically, first, the application of the user device 10 requests service data (or a service ID) from the service server 20 (S913). Thereupon, the service server 20 returns service data (or a service ID) to the user device 10 (S915).

Note that the above service data may include a leaf ID corresponding to the authenticated user, and the service shared key.

Next, the application of the user device 10 sends the service data to the copyright management unit (S917).

Upon receiving the service data, the copyright management unit sends to the application an ID list made up of the terminal ID and recorder ID and so forth corresponding to the user device 10 itself (S919).

We will say that the data within the [ ] in Fig. 9 can be read input by the copyright management unit of the user device 10 and the administration server 21, by encryption/decryption with a key such as AES-CBC or the like. For example, with the [ID list] shown in step S919, only the copyright management unit of the user device 10 and the administration server 21 can read the ID list.

Next, the message generating unit 261 of the user device 10 generates a registration request message based on the ID list, terminal ID, TID received in S911 above, and the service data, which is set to the administration server 21 (S921). Note that the registration request message includes online information. The terminal ID and recorder ID and the like are generated by the user device 10.

Next, the administration server 21 determines whether or not registration of the user device 10 is permissible, based on the ID list and the like included in the registration request message that has been received (S923). This registration permissible/non-permissible determination (S923) is essentially the same as that in the above-described group registration method with the synchronous /session ID method, so detailed description thereof will be omitted.

In the event of permitting registration as a result of the registration permissible/non-permissible determination, the administration server 21 sends the ID list and TID to the service server 20 to perform registration processing of the user device 10 requesting registration (S925).

The service server 20 writes and registers, in the record of the authenticated user in the group registration database (not shown.), IDs such as the terminal ID, device ID, media ID, recorder ID, or the like, received from the user device 10 requesting registration (S927). Further, the service server 20 sends a registration-completed notification and the registered GID list regarding the registered user device 10, to the administration server 21.

Note that in the event that there is no group ID to which registration such as device ID or media ID can be made, the service server 20 generates a new group ID for example, and registers to the group the IDs such as device ID and media ID to be registered linked to the group ID (S927), but is not restricted to this example.

The administration server 21 generates a registration reply message based on the GID list and so forth received from the service server 20, sets a time stamp for the registration reply message, and sends to the user device 10 (S931). The time stamp is generated by the administration server 21 or the user device 10, and we will say that the time stamp generated by the administration server 21 and the user device 10 are both synchronized.

The signature included in the registration request message is a MAC value of data such as, for example, the terminal ID, GID list, time stamp, and so forth, but is not restricted to this example. The completeness of the registration reply message can be verified by this signature.

Upon receiving the registration reply message, the application of the user device 10 transfers this to the group registration unit 231 of the copyright management unit without any change (S933).

The group registration unit 231 verifies that the terminal ID within the received registration request message and the terminal ID at the time of sending the registration request message match (S935). In the event that the terminal IDs do not match, the user device 10 requesting registration is different, and there is a possibility that group registration cannot be made.

Next, the group registration unit 231 verifies that the registration reply message (reply) as to the registration request message which the user device 10 has sent once, has been received once (S937). For example, the group registration unit 231 compares the time stamp in the registration reply message with the time stamp received from the counter unit 263 at the time of receiving the registration reply message, and verifies that the time stamp of the counter unit 263 is more recent (or newer). In the case of counter information other than a time stamp, such as an incremental counter, the group registration unit 231 verifies that the counter information of itself is smaller than the counter information of the registration reply message, but is not restricted to this example.

Also, verification of non-redundancy can be carried out by, for example, the group registration unit 231 referencing a sending flag and reception flag so as to confirm whether or not there has been further sending/reception of messages, but is not restricted to this example.

Also, along with the above message non-redundancy verification, the group registration unit 231 also verifies completeness of the registration reply message regarding whether or not the message has been tampered with, based on the signature included in the registration reply message.

Next, upon verification by the group registration unit 231 ending, the list management unit 241 of the user device 10 adds and stores the group ID within the GID list received from the administration server 21 in its own source ID list L, thereby validating the GID list (S939). Thus, the user device 10 can play distributed contents with the group ID thereof added thereto.

Note that the list management unit 241 may receive a leaf ID from the administration server 21 and generate a group ID based on the leaf ID.

Next, the group registration unit 231 discards the time stamp received from the counter unit 263. The counter unit 263 further stores a time stamp generated at the time of receiving the registration reply message in the storage region, thereby updating the already-stored time stamp (S941).

Note that in the event that the counter information is not a time stamp but is counter information such as an (incremental/decremental) counter or the like, following discarding of counter information by the group registration unit 231, the counter unit 263 updates the counter information already stored in the storage region with the next counter information (e.g., counter information set in the registration reply message).

Specifically, for example, in a case of an incremental counter wherein the initial value of the counter information of the counter unit 263 and administration server 21 is 0, upon the administration server 21 receiving a registration message, the administration server 21 updates its own counter information from "0" → "1", and sends a registration reply message wherein the counter information is "1".

Next, the group registration unit 231 determines the registration reply message to be appropriate since the value of the counter information set in the registration reply message is "1" and the counter information received from the counter unit 263 is "0", whereupon the group registration unit 231 discards its own counter information "0" already stored in the storage region, and updates to the counter information "1" of the registration reply message. Thus, the series of processing of the group registration method with the synchronous / session ID method ends.

Note that with the group registration method shown in Fig. 9, description has been made with reference to an example of performing group registration of the PD 10b shown in Fig. 6 and Fig. 7, but is not restricted to this example, and can be carried out in the same way with other user devices 10 other than the PD 10b.

Note that the following certificate issuing and distributing processing may be performed following such registration processing of the user device 10. That is to say, first, the user device 10 issues a group certificate G including a group ID and recorder ID corresponding to itself, and transmits the group certificate G to a certificate management server (not shown.). The certificate management server then stores the received group certificate G in a certificate database. Thus, at the time of another user device 10 being registered in the same device group, the group certificate G can be distributed so as to share the recorder ID.

Also, with the group registration method of the synchronous / counter ID method, description has been made with reference to an example wherein the counter information is a time stamp, but is not restricted to this example, and can be carried out in a case wherein, for example, the counter information is a counter ensuring increase (or decrease), or the like. In this case, the user device 10 and administration server 21 need to assign a counter storage region for storing the counter and each update the other's own counters by sending or receiving registration request messages or registration reply messages.

Thus, message sending/reception is restricted to registration request messages and registration reply messages in registration sessions with the synchronous /counter information method according to the present embodiment, whereby the processing load of sending/reception over the network is alleviated. Further, in the case of the session ID method, the session ID (SID) for identifying the registration session is generated at the user device 10 side rather than at the server side, and with the counter information method, there is no need to attach counter information at the user device 10 side at the time of sending a registration request message. Also, registration reply messages include the group ID and media ID and so forth which the user device 10 itself is adding (registering), so processing for generating group IDs can be omitted, thereby alleviating the load of group registration processing by the user device 10. That is to say, applying this group registration method enables group registration with a user device 10 which is a user device 10 that does not have very high processing capabilities (the cellular telephone 10h, etc.).

### (Group registration method: asynchronous / session ID method)

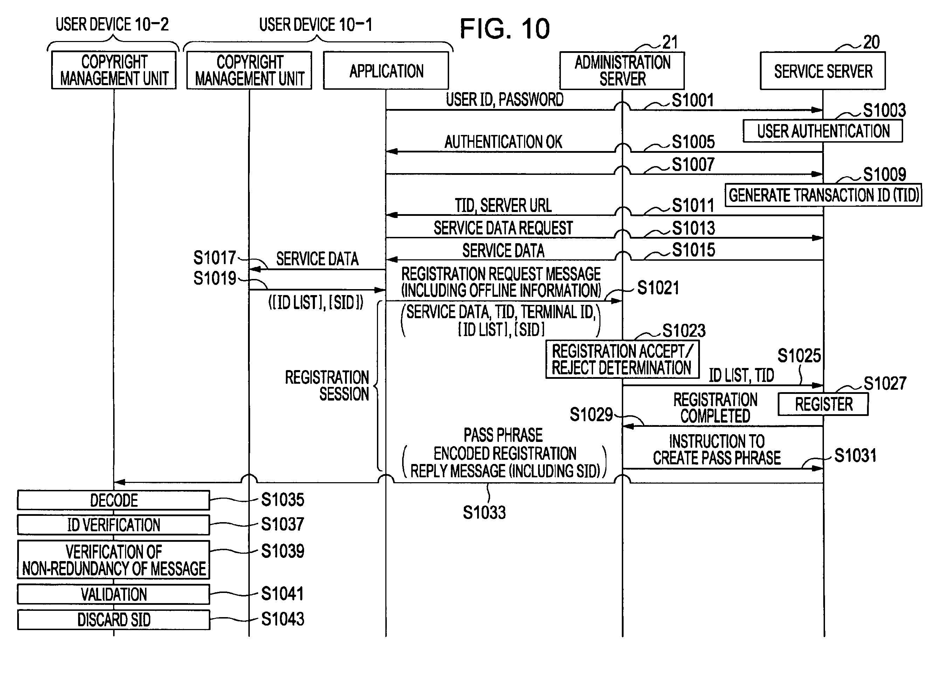

Next, a series of processing of the group registration method using the group registration system 100 such as described above will be described with reference to Fig. 10. Fig. 10 is a sequence diagram schematically illustrating a group registration method of the asynchronous / session ID method.

Note that the copyright management unit shown in Fig. 10 is equivalent to an entity including the above-described group registration unit 231, list management unit 241, ID generating unit 265 and so forth, and the application shown in Fig. 10 is equivalent to an entity including the above-described message generating unit 261, registration request detecting unit 267, and so forth.

First, as shown in Fig. 10, the user device 10-1 is connected online (synchronous) with the service server 20 or administration server 21, but the user device 10-2 is offline (asynchronous). The object of the group registration shown in this way in Fig. 10 is to perform group registration of an asynchronous user device 10-2.

As shown in Fig. 10, in steps S1001 through S1011, a communication connection is securely established between an application of the user device 10-1 at the registration requesting side and the service server 20 via the network 30, and user authentication is performed. Note that the steps S1001 through S1011 are essentially the same as the above-described steps S801 through S811 shown in Fig. 8, so detailed description thereof will be omitted.

In the following steps S1013 through S1043, processing for actually registering the user device 10-2 at the administration server 21 is performed.

Specifically, first, the application of the user device 10-1 requests service data (or a service ID) from the service server 20 (S1013). Thereupon, the service server 20 returns service data (or a service ID) to the user device 10 (S1015).

Note that the above service data may include a leaf ID corresponding to the authenticated user, and the service shared key.

Next, the application of the user device 10-1 sends the service data to the ID generating unit 265 of the copyright management unit (S1017).

Upon receiving the service data, the ID generating unit 265 generates a session ID identifying the registration session (or SID). The generated SID is sent to the application along with the ID list made up of the terminal ID and recorder ID and so forth corresponding to the user device 10-2 itself (S1019). Note that the ID list corresponding to the user device 10-2 itself is directly input from the input unit 208 of the user device 10-1, but is not restricted to this example.

We will say that the data within the [ ] in Fig. 10 can be read input by the copyright management unit of the user device 10 and the administration server 21, by encryption/decryption with a key such as AES-CBC or the like. For example, with the [ID list, SID] shown in step S1019, only the copyright management unit of the user device 10-1 or user device 10-2 and the administration server 21 can read the ID list and SID.

Next, the message generating unit 261 of the application of the user device 10-1 generates a registration request message based on the session ID, ID list, TID received in S811 above, and the service data, which is set to the administration server 21 (S1021). Note that the registration request message includes offline (asynchronous) information. Also, though not shown in the drawings, a MAC value obtained from at least the SID may be included in the registration request message.

Next, the administration server 21 determines whether or not registration of the user device 10-2 is permissible, based on the ID list and the like included in the registration request message that has been received (S1023). This registration permissible/non-permissible determination (S1023) is essentially the same as the above-described registration permissible/non-permissible determination (S823) shown in Fig. 8, so detailed description thereof will be omitted.

In the event of permitting registration as a result of the registration permissible/non-permissible determination, the administration server 21 sends the ID list and TID to the service server 20 to perform registration processing of the user device 10-2 (S1025).

The service server 20 writes and registers, in the record of the authenticated user in the group registration database (not shown.), IDs such as the terminal ID of the user device 10-2, device ID, media ID, recorder ID, or the like, received from the user device 10-1 (S1027). Further, the service server 20 sends a registration-completed notification and GID list to the administration server 21.

Note that in the event that there is no group ID to which registration such as device ID or media ID can be made, the service server 20 generates a new group ID for example, and registers to the group the IDs such as device ID and media ID to be registered linked to the group ID (S1027), but is not restricted to this example.

Upon confirming that offline information is included in the registration request message, the administration server 21 sends the GID list received from the service server 20 and the session ID and the like received from the registration-requesting user device 10, and instructs the service server 20 to create a pass phrase (S1031).

The service server 20 generates a registration reply message including the session ID received from the user device 10-1 and the MAC value thereof, and further the GID list and terminal ID and session ID and so forth, and further a signature (MAC) value thereof. Further, the service server 20 encodes the above registration reply message and converts into a pass phrase.

That is to say, this pass phrase includes the SID that was included in the registration request message, the MAC value thereof, and further the SID set at the time of generating the registration reply message, and a signature. The user device 10-2 side verifies the completeness of the SID that was included in the registration request message, verifies the completeness of the registration reply message (including the SID), and verifies that both SIDs match, thereby verifying non-redundancy of the message, but is not restricted to this example.

Note that an example has been described wherein the MAC value of the SID included in the registration request message is obtained at the service server 20 side, but is not restricted to this example, and may be obtained at the user device 10-1 side, for example. Obtaining at the user device 10-1 side enables the danger of the SID being generated in an unauthorized manner by spoofing the service server 20.

Next, the pass phrase generated as described above is recorded in the removable recording medium 40, or printed on a printing medium in the form of characters, symbols, or the like, for example. As shown in Fig. 10, the copyright management unit of the user device 10-2 receives input of the pass phrase (S1033) by way of the removable recording medium 40 or by the user operating the input unit 208 of the user device 10-2 to input the characters, symbols, or the like, printed on a printing medium.

Upon the pass phrase being input (S1033), the group registration unit 231 of the user device 10-2 decodes the pass phrase and converts into a registration reply message (S1035).

The group registration unit 231 verifies that the terminal ID included in the decoded registration reply message and its own terminal ID match (S1037).

Next, the group registration unit 231 verifies that the registration reply message (reply) as to the registration request message which the user device 10 has sent once, has been received once (S1039). For example, the group registration unit 231 verifies that the two SIDs included in the registration reply message match.

Also, at the time of verifying non-redundancy of the message, the group registration unit 231 also verifies completeness, regarding whether or not there has been tampering, based on the MAC value regarding the SID included in the registration reply message and the signature thereof (S1039).

Note that verification of non-redundancy of the message (S1039) is not restricted to matching of SIDs, and can be carried out by, for example, following verification of sameness of SIDs, referencing a sending flag and reception flag so as to confirm whether or not there has been further sending/reception of messages, thereby verifying non-redundancy.

Next, upon verification by the group registration unit 231 ending, the list management unit 241 of the user device 10-2 validates the GID list included in the decoded registration reply message. The user device 10-2 adds and stores the group ID within the GID list included in the decoded registration reply message in its own source ID list L, thereby validating (S1041). Thus, the user device 10-2 can play distributed contents with the group ID thereof added thereto.

Note that the list management unit 241 of the user device 10-2 may generate a group ID based on a leaf ID included in the registration reply message obtained by decoding the pass phrase.

Also, information such as the operation permission information and valid period information and the like within the GID list is also stored by the list management unit 241 in the source ID list L or another storage region.

Next, the group registration unit 231 discards the session ID (SID) (S1043). Also, the ID generating unit 265 of the user device 10-1 discards the session ID (SID) upon the registration request message being transmitted following generating a session ID, for example. Thus, the series of processing of the group registration method with the synchronous/ session ID method according to the present embodiment ends.

Note that with the group registration method shown in Fig. 10, description has been made with reference to an example of performing group registration of the offline car audio device 10g or car navigation device (not shown.) shown in Fig. 3 with the PD 10b shown in Fig. 6 and Fig. 7, but is not restricted to this example, and can be carried out in the same way with other user devices 10 other than the PC 10b and car audio device 10g.

### (Group registration method: asynchronous / counter information method)

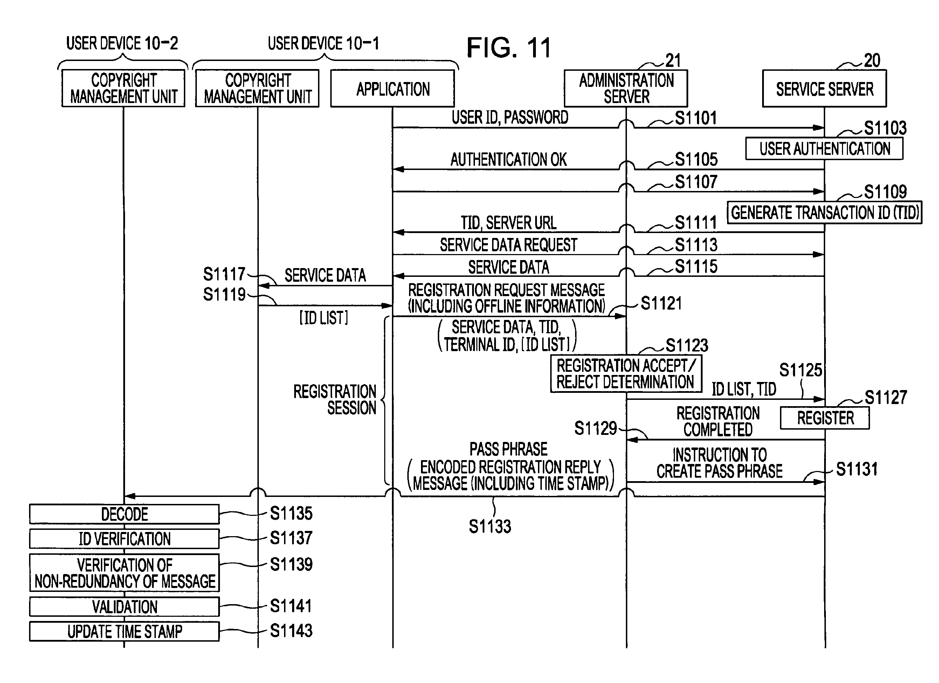

Next, a series of processing of the group registration method using the group registration system 100 will be described with reference to Fig. 11. Fig. 11 is a sequence diagram schematically illustrating a group registration method of the synchronous / counter information method.

Note that the copyright management unit shown in Fig. 11 is equivalent to an entity including the above-described group registration unit 231, list management device 241, counter 263, point-in-time unit 264, and so forth, and the application shown in Fig. 11 is equivalent to an entity including the above-described message generating unit 261, registration request detecting unit 267, and so forth.

First, as shown in Fig. 11, the user device 10-1 is connected online (synchronous) with the service server 20 or administration server 21, but the user device 10-2 is offline (asynchronous). The object of the group registration shown in this way in Fig. 11 is to perform group registration of an asynchronous user device 10-2.

As shown in Fig. 11, in steps S1101 through S1111, a communication connection is securely established between an application of the user device 10 at the registration requesting side and the service server 20 via the network 30, and user authentication is performed. Note that the steps S1101 through S1111 are essentially the same as the above-described steps S801 through S811 shown in Fig. 8, so detailed description thereof will be omitted.

In the following steps S1113 through S1145, processing for actually registering the user device 10-2 at the administration server 21 is performed.

Specifically, first, the application of the user device 10-1 requests service data (or a service ID) from the service server 20 (S1113). Thereupon, the service server 20 returns service data (or a service ID) to the user device 10-1 (S1115).

Note that the above service data may include a leaf ID corresponding to the authenticated user, and the service shared key.

Next, the application of the user device 10-1 sends the service data to the copyright management unit (S1117).

Upon receiving the service data, the copyright management unit sends to the application an ID list made up of the terminal ID, media ID, and so forth, corresponding to the user device 10 itself (S1119). Note that the ID list corresponding to the user device 10-2 itself is directly input from the input unit 208 of the user device 10-1, but is not restricted to this example.

We will say that the data within the [ ] in Fig. 11 can be read input by the copyright management unit of the user device 10 and the administration server 21, by encryption/decryption with a key such as AES-CBC or the like. For example, with the [ID list] shown in step S1119, only the copyright management unit of the user device 10-1 or user device 10-2 and the administration server 21 can read the ID list.

Next, the message generating unit 261 of the user device 10-1 generates a registration request message based on the session ID, ID list, TID received in S1111 above, and the service data, which is set to the administration server 21 (S1121). Note that the registration request message includes offline (asynchronous) information.

Next, the administration server 21 determines whether or not registration of the user device 10-2 is permissible, based on the ID list and the like included in the registration request message that has been received. Note that this registration permissible/non-permissible determination (S1123) is essentially the same as the above-described registration permissible/non-permissible determination shown in Fig. 8, so detailed description thereof will be omitted.

In the event of permitting registration as a result of the registration permissible/non-permissible determination, the administration server 21 sends the ID list and TID to the service server 20 to perform registration processing of the user device 10-2 requesting registration (S1125).

The service server 20 writes and registers, in the record of the authenticated user in the group registration database (not shown.), IDs such as the terminal ID, device ID, media ID, recorder ID, or the like, of the user device 10-2, received from the user device 10-1 (S1127). Further, the service server 20 sends a registration-completed notification and a GID list to the administration server 21.

Note that in the event that there is no group ID to which registration such as device ID or media ID can be made, the service server 20 generates a new group ID for example, and registers to the group the IDs such as device ID and media ID to be registered linked to the group ID (S1127), but is not restricted to this example.

Upon confirming that offline information is included in the registration request message, the administration server 21 sends the GID list received from the service server 20, a time stamp generated by itself, the terminal ID, and so forth, and also instructs the service server 20 to create a pass phrase (S1131).

The service server 20 generates a registration reply message including the GID list, terminal ID, and time stamp. Further, the service server 20 encodes the registration reply message and creates a pass phrase.

The time stamp is generated by the administration server 21 or the user device 10, and we will say that the time stamp generated by the administration server 21 and the user device 10 are both synchronized.

Next, the pass phrase generated as described above is recorded in the removable recording medium 40, or printed on a printing medium in the form of characters, symbols, or the like, for example. As shown in Fig. 11, the copyright management unit of the user device 10-2 receives input of the pass phrase (S1133) by way of the removable recording medium 40 or by the user operating the input unit 208 of the user device 10-2 to input the characters, symbols, or the like, printed on a printing medium.

Upon the pass phrase being input (S1133), the group registration unit 231 of the user device 10-2 decodes the pass phrase and converts into a registration reply message (S1135).

The group registration unit 231 verifies that the terminal ID included in the decoded registration reply message and its own terminal ID match (S1137).

Next, the group registration unit 231 verifies that the registration reply message (reply) as to the registration request message which the user device 10 has sent once, has been received once (S1139). For example, the group registration unit 231 compares the time stamp in the registration reply message with the time stamp received from the counter unit 263 at the time of receiving the registration reply message, and verifies that the time stamp of the counter unit 263 is more recent (or newer). In the case of counter information other than a time stamp, such as an incremental counter, the group registration unit 231 verifies that the counter information of itself is smaller than the counter information of the registration reply message, but is not restricted to this example.

Also, verification of non-redundancy of the message (S1139) is not restricted to verification of counter information, and can be carried out by, for example, the group registration unit 231 referencing a sending flag and reception flag so as to confirm whether or not there has been further sending/reception of messages so as to verify non-redundancy.

Next, upon verification by the group registration unit 231 ending, the list management unit 241 of the user device 10-2 validates the GID list included in the decoded registration reply message. The user device 10-2 adds and stores the group ID within the GID list included in the decoded registration reply message in its own source ID list L, thereby validating (S1141). Thus, the user device 10-2 can play distributed contents with the group ID thereof added thereto.

Note that the list management unit 241 of the user device 10-2 may generate a group ID based on the leaf ID included in the registration reply message obtained by decoding the pass phrase.

Also, information such as the operation permission information and valid period information and the like within the GID list is also stored by the list management unit 241 in the source ID list L or another storage region.

Next, the group registration unit 231 discards the time stamp received from the counter unit 263. The counter unit 263 further stores a time stamp generated at the time of receiving the registration reply message in the storage region, thereby updating the already-stored time stamp (S1141).

Note that in the event that the counter information is not a time stamp but is counter information such as an (incremental/decremental) counter or the like, following discarding of counter information by the group registration unit 231, the counter unit 263 updates the counter information already stored in the storage region with the next counter information (e.g., counter information set in the registration reply message).

Specifically, for example, in a case of an incremental counter wherein the initial value of the counter information of the counter unit 263-2 of the user device 10-1 and administration server 21 is 0, upon the administration server 21 receiving a registration request message, the administration server 21 updates its own counter information from "0" → "1", and sends a registration reply message wherein the counter information is "1".

Next, the group registration unit 231-1 determines the registration reply message to be appropriate since the value of the counter information set in the registration reply message is "1" and the counter information received from the counter unit 263-2 is "0", whereupon the group registration unit 231-1 discards its own counter information "0" already stored in the storage region, and updates to the counter information "1" of the registration reply message. Thus, the series of processing of the group registration method with the asynchronous / counter information method ends.

Note that with the group registration method shown in Fig. 11, description has been made with reference to an example of performing group registration of the offline car audio device 10g or car navigation device (not shown.) shown in Fig. 3 with the PD 10b shown in Fig. 6 and Fig. 7, but is not restricted to this example, and can be carried out in the same way with other user devices 10 other than the PC 10b and car audio device 10g.

Also, as shown in Fig. 11, an example has been described wherein the pass phrase is generated by the service server 20, but is not restricted to this example. For example, a case wherein the pass phrase is generated by the administration server 21 can be carried out.

Thus, with the registration session in the asynchronous / session ID / counter information method according to the present embodiment, exchange of a registration request message and pass phrase is sufficient. Also, even in cases wherein the user device 10 is offline, group registration can be performed for the user device 10 by encoding the registration reply message as a pass phrase. Further, the offline user device 10 can be securely group registered even if it does not have an application, as long as it has a copyright management unit.

Also, with the group registration method according to the present embodiment, an example has been described of a case wherein the user device 10 is the PD 10b, but is not restricted to this example. For example, this can be carried out even in cases wherein the user device 10 is a cellular phone 10h, PC 10a, or the like, or even in cases wherein group registration is to be performed for other than a user device 10, such as a removable recording medium 40 or the like.

### (Group deregistration method: synchronous / session ID method)

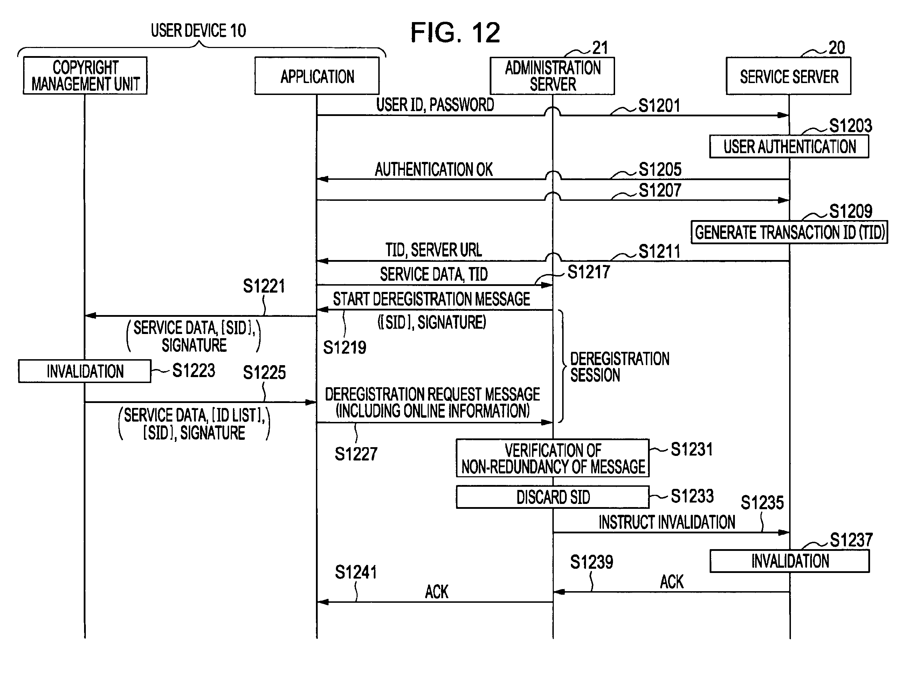

Next, processing for deregistering a user device 10 from a device group to which it is already registered will be described with reference to Fig. 12. Fig. 12 is a sequence diagram schematically illustrating group deregistration processing of a user device 10 according to the present embodiment.

Note that the copyright management unit shown in Fig. 12 is equivalent to an entity including the above-described group registration unit 231, list management unit 241, ID generating unit 265 and so forth, and the application shown in Fig. 12 is equivalent to an entity including the above-described message generating unit 261, registration request detecting unit 267, and so forth.

First, as shown in Fig. 12, in steps S1201 through S1211, a communication connection is securely established between an application of the user device 10 at the deregistration requesting side and the service server 20 via the network 30, and user authentication is performed.

Specifically, first, upon the registration request detecting unit 267 of the application of the user device 10 detecting a deregistration request in response to user input, the data communication unit 220 sends a user ID and password to the service server 20 (S1201). Thereupon, the service server 20 checks the received user ID and password against a user ID and password registered in a database beforehand, and performs user authentication processing (S1203).

In the event that user authentication is established as a result of the above checking, the service server 20 permits login, and sends a notification to the effect that user authentication has been established to the application of the user device 10 (S1205). Next, the application sends a deregistration request notification to the service server 20 (S1207). This deregistration request notification lets the service server 20 know that the user device 10 has accessed for deregistration request. Note that what is indispensable for group deregistration is the deregistration session, and the above deregistration request notification can be omitted.

Next, the service server 20 generates a transaction ID (TID) (S1209), and sends the generated transaction ID and a URL (Uniform Resource Locator) which is an example of address information of the administration server 21 to the application of the user device 10 (S1211). Thus, the user device 10 can access the administration server 21 based on the received URL.

In the following steps S1217 through S1241, processing for actually deregistering the user device 10 is performed.

Specifically, first, the user device 10 sends, of the service data corresponding to the group ID which it holds, service data corresponding to group ID such as the device ID or media ID to be invalidated to the administration server 21 along with the TID (S1217). Note that the ID such as the device ID to be invalidated (deregistered) is selected by the user for example, but is not restricted to this example.

Also, invalidation of service data means for the user device 10 to delete the group ID and/or recorder ID (including media ID, device ID, etc.) included in its own source ID list L. Invalidation makes contents to which these source IDs are attached unplayable at the user device 10.

Upon receiving the service data and TID, the administration server 21 generates a SID identifying the deregistration session. The administration server 21 obtains the MAC value from the SID and takes this as a signature to generate a deregistration start message including the SID and signature, and sends this to the user device 10 (S1219).

We will say that the data within the [ ] in Fig. 12 can be read input by the copyright management unit of the user device 10 and the administration server 21, by encryption/decryption with a key such as AES-CBC or the like. For example, with the [SID] shown in step S1219, only the copyright management unit of the user device 10 and the administration server 21 can read the SID.

Next, the application of the user device 10 sends the service data to be deregistered to the group registration unit 231 of the copyright management unit along with the received deregistration start message (S1221).

The group registration unit 231 obtains the MAC value of the SID included in the received deregistration start message, and verifies that this matches the value of the accompanying signature.

Next, upon the group registration unit 231 confirming that there is a device ID, recorder ID, media ID, or the like in the group ID corresponding to the service data (or service ID), the list management unit 241 deletes the device ID, recorder ID, or media ID related to the group ID, thereby invalidating the device ID, recorder ID, media ID (S1223).

Further, the list management unit 241 obtains a signature from the service data, the deleted ID list, the SID included in the deregistration start message, the terminal ID of the user device 10, and the service data, and transfers these data and signature to the message generating unit 261 (S1225).

Next, the message generating unit 261 sends a deregistration request message to the administration server 21 via the network 30, based on the received data (S1227). Note that online information is included in the deregistration request message.

Next, the administration server 21 verifies that the deregistration request message (reply) from the user device 10 as to the deregistration start message which the administration server 21 itself has sent once, has been received once (S1231). For example, the administration server 21 verifies that the SID in the deregistration request message received form the user device 10 and the SID set at the time of sending the deregistration request message match.

Note that verification of non-redundancy of the message (S1231) is not restricted to matching of SIDs, and can be carried out by, for example, following verification of matching of SIDs, the administration server 21 referencing a sending flag and reception flag so as to confirm whether or not there has been further sending/reception of messages, thereby verifying non-redundancy.

Also, along with the above message non-redundancy verification (S1231), verification is also made of the completeness of the deregistration reply message regarding whether or not the message has been tampered with, based on the signature included in the deregistration reply message (S1231).

Next, the administration server 21 discards the SID (S1233), sends the ID list and service data, and instructs deregistration of this group registration to the service server 20.

Upon confirming that the device ID, recorder ID, media ID, or the like listed in the ID list received from the administration server 21 exists, the service server 20 deletes the device ID, recorder ID, or media ID, thereby invalidating the device ID, recorder ID, or media ID (S1237).

At this time, the recorder ID of the user device 10 requesting the deregistration is retained in the group registration database (not shown.) of the service server 20, rather than being deleted. When providing ripping contents sharing services, this can prevent trouble in that an excessive number of user devices 10 having ripping functions are registered and ripping contents can be shared from the great number of user devices 10.

Upon the invalidation processing (S1237) ending, the service server 20 sends an ACK to the administration server 21 (S1239), and further the administration server 21 sends an ACK to the user device 10 (S1241). Thus, the series of processing of the group deregistration method with the synchronous / session ID method according to the present embodiment ends.

### (Group deregistration method: synchronous / counter information method)

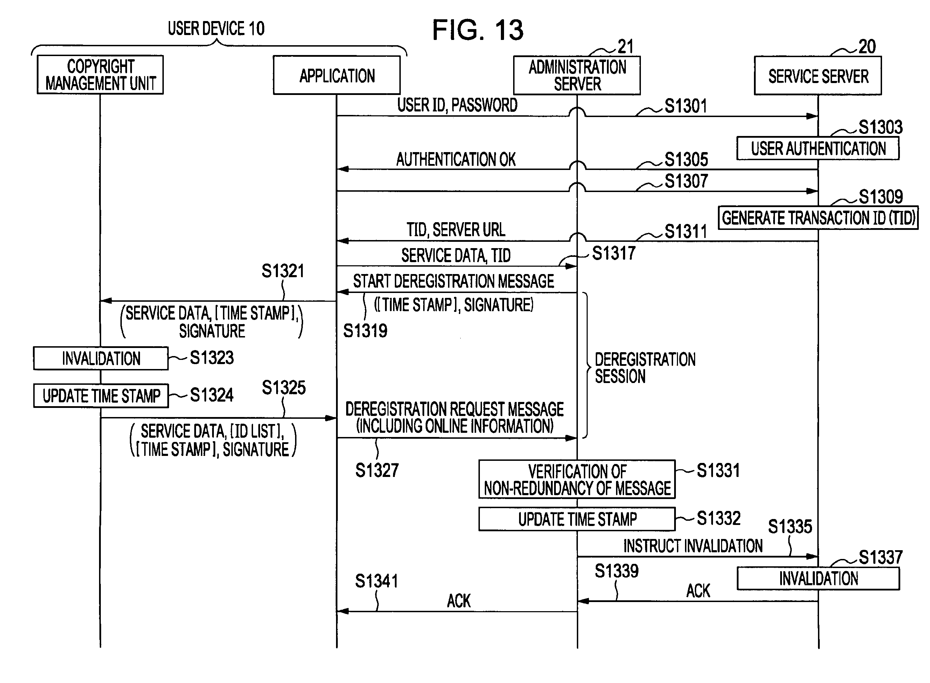

Next, processing for deregistering a user device 10 from a device group to which it is already registered will be described with reference to Fig. 13. Fig. 13 is a sequence diagram schematically illustrating group deregistration processing of a user device 10 according to the present embodiment.

Note that the copyright management unit shown in Fig. 13 is equivalent to an entity including the above-described group deregistration unit 231, list management unit 241, counter 263, point-in-time unit 264, and so forth, and the application shown in Fig. 13 is equivalent to an entity including the above-described message generating unit 261, registration request detecting unit 267, and so forth.

First, as shown in Fig. 13, in steps S1301 through S1311, a communication connection is securely established between an application of the user device 10 at the deregistration requesting side and the service server 20 via the network 30, and user authentication is performed.

Note that the steps S1301 through S1311 are essentially the same as the above-described steps S1201 through S1211 shown in Fig. 12, so detailed description thereof will be omitted.

In the following steps S1317 through S1341, processing for actually deregistering the user device 10 is performed.

Specifically, first, the user device 10 sends, of the service data corresponding to the group ID which it holds, service data corresponding to group ID such as the device ID or media ID to be invalidated to the administration server 21 along with the TID (S1317). Note that the ID such as the device ID to be invalidated is selected by the user for example, but is not restricted to this example.

Also, invalidation of service data means for the user device 10 to delete the group ID and/or recorder ID (including media ID, device ID, etc.) included in its own source ID list L. Invalidation makes contents to which these source IDs are attached unplayable at the user device 10.

Next, upon receiving the service data and TID, the administration server 21 generates a time stamp. The administration server 21 obtains a signature from the time stamp, generates a deregistration start message including the time stamp and signature, and sends this to the user device 10 (S1319).

The time stamp is generated by the administration server 21 or the user device 10, and we will say that the time stamp generated by the administration server 21 and the user device 10 are both synchronized.

We will say that the data within the [ ] in Fig. 13 can be read input by the copyright management unit of the user device 10 and the administration server 21, by encryption/decryption with a key such as AES-CBC or the like. For example, with the [SID] shown in step S1319, only the copyright management unit of the user device 10 and the administration server 21 can read the SID.

Next, the application of the user device 10 sends the service data to be deregistered to the group registration unit 231 of the copyright management unit along with the received deregistration start message (S1321).

The group registration unit 231 obtains the MAC value of the time stamp included in the received deregistration start message, and verifies that this matches the value of the accompanying signature.

Next, upon the group registration unit 231 confirming that there is a device ID, recorder ID, media ID, or the like in the group ID corresponding to the service data (or service ID), the list management unit 241 deletes the device ID, recorder ID, or media ID related to the group ID, thereby invalidating the device ID, recorder ID, media ID (S1323).

Now, before invalidation by the group registration unit 231 (S1323), the group registration unit 231 may compare the time stamp in the deregistration start message with the time stamp received from the counter unit 263 at the time of receiving the deregistration start message, and verify that the time stamp of the counter unit 263 is more recent (or newer).

Next, the counter unit 263 makes reference to the point-in-time of the point-in-time unit 264 to generate a time stamp, and updates the time stamp set in the deregistration start message with the newly-generated time stamp (S1324). Note that the counter unit 263 may update a time stamp already stored in the storage region with the newly-generated time stamp.

Next, the list management unit 241 obtains a signature from the service data, the deleted ID list, the updated time stamp, the terminal ID of the user device 10, and the service data, and transfers these data and signature to the message generating unit 261 (S1325).

Next, the message generating unit 261 sends a deregistration request message to the administration server 21 via the network 30, based on the received data (S1327). Note that online information is included in the deregistration request message.

Next, the administration server 21 verifies that the deregistration request message (reply) from the user device 10 as to the deregistration start message which the administration server 21 itself has sent once, has been received once (S1331). For example, the administration server 21 compares the time stamp in the deregistration request message received from the user device 10 with the time stamp generated by the administration server 21 at the time of receiving the deregistration request message, and verifies that the time stamp generated by the administration server 21 is more recent (or newer). In the case of counter information other than a time stamp, such as an incremental counter, the group registration unit 231 verifies that the counter information of itself is smaller than the counter information of the registration reply message, but is not restricted to this example.

Note that verification of non-redundancy of the message (S1331) is not restricted to matching of time stamps, and can be carried out by, for example, following verification of matching of time stamps, the administration server 21 referencing a sending flag and reception flag so as to confirm whether or not there has been further sending/reception of messages, thereby verifying non-redundancy. Note that a sending flag and reception flag need to be provided in the administration server 21 beforehand.

Also, along with the above message non-redundancy verification (S1331), the administration server 21 also verifies completeness of the deregistration reply message regarding whether or not the message has been tampered with, based on the signature included in the deregistration reply message (S1331).

Next, the administration server 21 discards the time stamp received form the user device 10. The administration server 21 further updates the time stamp already stored with the time stamp received form the user device 10, for example (S1332).

Next, the administration server 21 sends the ID list and service data to be deregistered to the service server 20, and instructs deregistration of the group registration to the service server 20.

Upon the service server 20 confirming that the device ID, recorder ID, media ID, or the like listed in the ID list received from the administration server 21 exists, the service server 20 deletes the device ID, recorder ID, or media ID, thereby invalidating the device ID, recorder ID, or media ID (S1337).

At this time, the recorder ID of the user device 10 requesting the deregistration is retained in the group registration database (not shown.) of the service server 20, rather than being deleted. When providing ripping contents sharing services, this can prevent trouble in that an excessive number of user devices 10 having ripping functions are registered and ripping contents can be shared from the great number of user devices 10.

Upon the invalidation processing (S1337) ending, the service server 20 sends an ACK to the administration server 21 (S1339), and further the administration server 21 sends an ACK to the user device 10 (S1341). Thus, the series of processing of the group deregistration method with the synchronous / counter information method according to the present embodiment ends.

Note that with the group deregistration method according to the present embodiment, an example has been described of a case wherein the user device 10 is the PD 10b, but is not restricted to this example. For example, this can be carried out even in cases wherein the user device 10 is a cellular phone 10h, PC 10a, or the like, or even in cases wherein group registration is to be performed for other than a user device 10, such as a removable recording medium 40 or the like.

Thus, with the group deregistration processing of the user device 10, deregistration processing is first performed at the user device 10 side, following which deregistration processing is performed at the service server 20 side. Thus, a situation can be avoided wherein deregistration has been performed at the service server 20 but actual grout registration at the user device 10 has not been invalidated.

Also, with the group deregistration method shown in Fig. 12 and Fig. 13, an example has been described of a case wherein the user device 10 is the PD 10b, but is not restricted to this example, and can be carried out with any device such as a cellular phone 10h, PC 10a, or the like, as long as it is online.

This ends description of the group registration system according to the present embodiment. This system exhibits the following excellent advantages.
(1) Processing is simplified in registration sessions /deregistration sessions necessary for group registration /group deregistration, so group registration / group deregistration can be performed even with user device 10 not having high processing capabilities.
(2) Authentication performed in registration sessions /deregistration sessions necessary for group registration /group deregistration can be carried out by verification at just one or the other or the user device 10 side and administration server 21 side (unilateral authentication), so the overall load at the user device 10 and administration server 21 in at least the group registration / group deregistration is reduced.
(3) Even in the event that the user device 10 is offline, upon another user device 10 accessing the service server 20 or administration server 21 and information such as a pass phrase being created, the offline user device 10 can input that pass phrase and perform group registration.

Note that the above-described series of processing can be performed by dedicated hardware, and can be performed by software. In the event of performing the series of processing by software, a program configuring that software is installed in an information processing device such as a general-purpose computer or microcomputer or the like, and the information processing device is caused to function as the user device 10, service server 20, and administration server 21.

The program can be recorded beforehand in a hard disk drive (HDD) or ROM as recording medium built into a computer.

The program is not restricted to being stored in a hard disk drive, and may be temporarily or permanently stored (recorded) in a removable recording medium such as a flexible disk, CD-ROM (Compact Disc Read Only Memory), MO (Magneto Optical) disk, DVD (Digital Versatile Disc), magnetic disk, semiconductor memory, and so forth.

Note that in addition to installation to a computer from such a removable storage medium, the program may be wirelessly transferred to the computer from a download site via a digital satellite broadcast satellite, or transferred to the computer by cable via a network such as the Internet, and the computer can install a program transferred in such as way in the built-in HDD.

Now, it should be understood that in the present Description, the processing steps describing the program for causing the computer to perform various types of processing do not necessarily have to be processed in time-sequence following the order laid forth as flowcharts, and include processing executed in parallel or individually (e.g., parallel processing or processing by objects).

While a preferred embodiment has been described above with reference to the attached drawings, the present invention is not restricted to this example. It is apparent that one skilled in the art can conceive various modifications or alterations within the scope of the technical idea laid forth in the Claims, and it should be understood that those also belong as a matter of course to the technical scope of the present invention.

While the above embodiment has been described with reference to an example wherein the application which the user device 10 has is software dedicated for group registration / group deregistration, the present invention is not restricted to this example. For example, this still can be carried out in a case wherein the application is software such as a general-purpose Web browser or the like.

Also, while the above embodiment has been described with reference to an example wherein the object of group registration or group deregistration is the user device 10, the present invention is not restricted to this example. For example, this still can be carried out in a case wherein the object of group registration or group deregistration is the removable recording media 40 or the like.

While the above embodiment has been described with reference to an example wherein a single user device 10 or removable recording media 40 is group-registered, the present invention is not restricted to this example. For example, this also can be carried out in a case wherein multiple user devices 10 and/or removable recording medias 40 are subjected to group registration in batch fashion.

Also, while the above embodiment has been described with reference to an example wherein, in the event that the user device 10 is offline, with the group registration method the user device 10 inputs a pass phrase, the present invention is not restricted to this example. For example, this also can be carried out in a case wherein the user device 10 inputs a combination of at least one of characters, symbols, and shapes, such as a one-dimensional barcode or a two-dimensional barcode.

Also, while the above embodiment has been described with reference to an example wherein, with the group deregistration method, the user device 10 side first executes invalidation and group deregistration, following which group deregistration is performed at the service server 20, the present invention is not restricted to this example. For example, this also can be carried out in a case wherein the service server 20 first performs group deregistration, following which group deregistration is performed at the user device 10.

Also, while the above embodiment has been described with reference to an example wherein, with the offline group registration method, an online user device 10-2 inputs the pass phrase from the service server 20 or the administration server 21, the present invention is not restricted to this example. For example, this also can be carried out in a case wherein the online user device 10-1 inputs the pass phrase. Note that in this case, the user device 10-2 is not connected to the network 30 which is capable of accessing a server such as the administration server 21, an arrangement can be made wherein the user device 10-2 is network-connected locally with the user device 10-1, and the a registration reply message obtained by decoding the pass phrase is transferred from the user device 10-1 to the user device 10-2, or following verification of non-redundancy of the message and so forth being performed at the user device 10-1, data such as GID is transferred to the user device 10-2, such that group registration is performed at the user device 10-2 side based on the GID list.

### <Second Embodiment>

Next, a license acquisition device and license acquisition method according to a second embodiment of the present invention will be described.

### (Overview of copyright management method with group management method)

The overview of the copyright management method with the copyright management system according to the present embodiment will be described. First, the overview of a binding format copyright management method will be described.

The copyright management system according to the present embodiment is a system for managing the usage conditions and usage state of copyright management contents (hereafter referred to as "contents") wherein digital contents such as video, audio, and the like, have been subjected to encryption processing, and controlling the usage of contents using a content encryption key thereof and content usage conditions and usage state description, thereby performing copyright management. The following three are the basic data necessary for such copyright management.
(1) Contents
(2) Content encryption processing key (hereafter referred to as "content key")
(3) Usage conditions and usage state description relating to usage of contents and transmission of basic data (hereafter referred to as "license).

As described above, contents are a collection of encrypted digital contents. Such contents become usable by being decrypted by a content key within the range of usage conditions described in the license. A content key is a value necessary at the time of using contents, and is managed in a manner correlated with the license, while keeping the value secret in each copyright management system. Described in a license are usage conditions for restricting usage of contents and transmission of the above-described three basic data, and the usage state (status) of the contents up to now, and are managed within the copyright management system so as to not be falsified or tampered with.

Also, with a copyright management system which uses such three basic data, the following three conditions must be satisfied to suitably execute copyright management.
(Condition 1) To ensure confidentiality of the content key (that the content key is never exposed)
(Condition 2) To ensure completeness of the license (that the license is never tampered with)
(Condition 3) To ensure correlation of the three basic data (that the content and content key and license are correlated, and the correlation of these is never interchanged)

In order to configure a copyright management system capable of handling various types of implementation corresponding to types of user devices, types of contents, types of usage restrictions, and so forth, with the copyright management system according to the present embodiment, copyright management functions are viewed as being a collection of multiple basic functions, and a copyright management unit (or copyright management software) for executing copyright management processing in each of the user devices is divided into multiple modules, for each basic function. With the copyright management system, the three basic data are exchanged and processed among the multiple basic function modules, thereby executing copyright management processing of contents.

To describe module division in more detail, first, all usage restriction functions of the copyright management unit are listed, and these usage restriction functions are classified into the following two functions.
(a) Functions relating to permanent saving of licenses
(b) Functions relating to temporary usage of licenses

Further, under these two general classifications, the usage restriction functions are broken down by usage form (usage cases) from the perspective of the user using the contents, so as to break the copyright management unit down into parts in the form of modules (license processing components) corresponding to the usage restriction functions.

Thus, content usage restriction for each usage case can be realized by combining one or more of each of the license processing components belonging to the above (a) and (b). Also, licenses are described with parameters relating to the usage restriction functions having been sectioned into each license processing component. Licenses thus described are portably exchanged among the license processing components provided to the user devices within the network. Consequently, the venue for usage restriction of contents can be dispersed among multiple user devices connected by a network.

Thus, with the copyright management system according to the present embodiment, the copyright management unit (or copyright management software) is broken down into parts in the from of multiple licensees processing components (basic function modules) and disposed in a dispersed manner, and these license processing components are combined on a network for example so as to be used, thereby realizing content portability within the network.

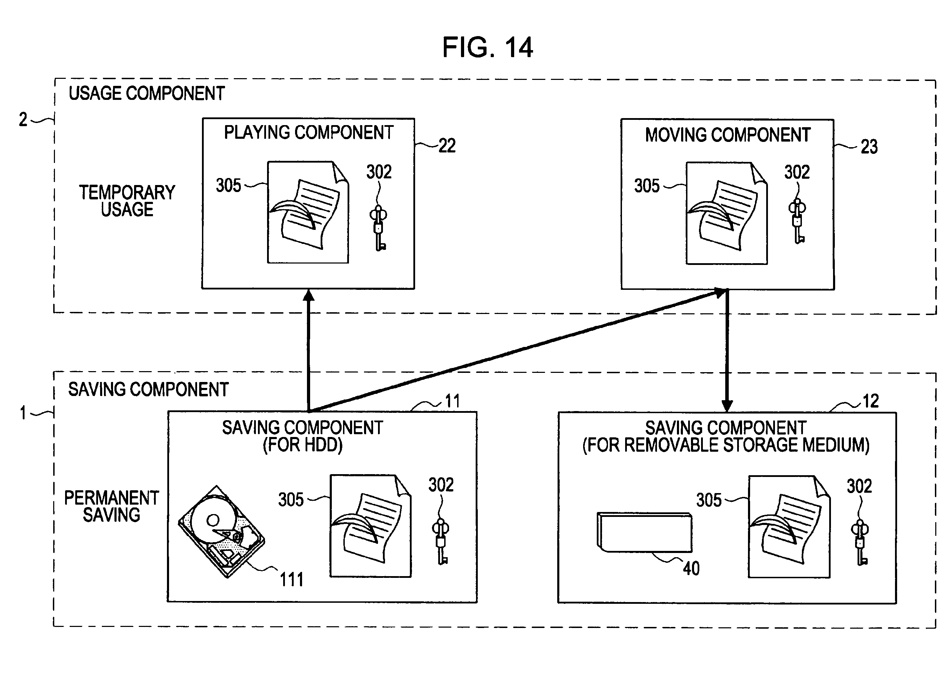

Now, a specific example of the license processing components and a combination thereof will be described with reference to Fig. 14. Fig. 14 is an explanatory diagram illustrating a specific example of the license processing components and a combination thereof.

AS shown in Fig. 14, license processing components 11, 12, 22, and 23 which execute copyright management are classified into saving components 1 which execute the functions of the above-described (a), and usage components which execute the functions of the above-described (b).

A saving component 1 is a license processing component having permanent saving functions for licenses, and securely saves a license 305 and content key 302 in storage means. The saving component 1 includes for example, a saving component 11 for hard disk drive (or HDD), and a saving component 12 for removable storage media such as semiconductor memory or the like. The saving component 11 for HDD securely saves the license 305 and content key 302 in an HDD 111 built into a user device. Also, the saving component 12 for the removable storage media securely saves the license 305 and content key 302 in the removable storage medium 40 mounted to the user device. Thus, the saving component 1 is provided for each of multiple storage means having difference storage methods.

Such a saving component 1 reads out the license 305 and content key 302 saved in the storage means corresponding to itself, and transmits to the usage component 2. Also, the saving component 1 writes and saves the license 305 and content key 302 transmitted from the usage component 2 to the storage means corresponding to itself.

On the other hand, the usage component 2 is a license processing component having temporary usage functions of the license, and evaluates the license 305 transmitted from the saving component 1 and controls usage of contents and transmission of the license 305 and content key 302. The usage component 1 includes, for example, a playing component 22 for evaluating the license 305 transmitted from the saving component 1 and controlling playing of contents, a moving component 3 for evaluating the license 305 transmitted from the saving component 1 and controlling moving of the license 305.

Thus, the usage component 2 only temporarily uses the license 305 received from the saving component 1 at the time of using the contents, and cannot permanently hold (e.g., save in storage means) the license 305 or the like.

In this way, dividing the basic functions of the copyright management unit into multiple saving components 1 and multiple usage components 2 enables these components to exchange the license 305 and so forth among these components, and to control usage of the contents.

For example, in a case of controlling playing of contents, as shown in Fig. 14, the saving component 11 reads out the license 305 and content key 302 corresponding to a content to be played from the HDD 111, and transmits to the playing component 22. The playing component 22 evaluates the playing conditions described in the transmitted license 305 and determines whether or not playing of the content to be played is permissible. In the event that determination is made as a result thereof that playing is permissible, the playing component 22 performs decryption processing of the content to be played by a content key L, and causes a later-described playing application to execute playing.

Also, in a case of controlling moving of the license corresponding to the content in order to move the content among user devices, as shown in Fig. 14, the saving component 11 reads out the license 305 and content key 302 corresponding to a content to be played from the HDD 111, and transmits to the moving component 23. The moving component 23 evaluates the playing conditions described in the transmitted license 305 and determines whether or not moving of the license and content key 302 is permissible. In the event that determination is made as a result thereof that moving is permissible, the moving component 23 transmits the license and content key 302 to the saving component 12. The saving component 12 saves the transmitted license and content key 302 in the removable storage medium 40. Note that hereafter, this saving processing will be called "binding" unless particularly described otherwise. In the event that the license 305 has thus been moved, the content to be moved is also moved from the HDD 11 to the removable storage medium 40 by a later-described activating application. Consequently, the content to be moved can be played at another user device to which the removable storage medium 40 has been mounted, based on the license 305. Thus, controlling movement of the license 305 and the content key 302 consequently enables moving of contents to be controlled.

The overview of the copyright management method in the copyright management system according to the present embodiment has now been described. Implementing copyright management units compliant with this copyright management method according to the types of individual user devices and content types and so forth enables various types of contents to be exchanged among user devices and the like connected to the network, thereby improving content portability.

### (License transmission protocol between components)

As described above, with the copyright management system according to the present embodiment, content usage can be controlled by exchanging licenses and content keys and the like between multiple license processing components formed as parts of the copyright management unit 3.

At this time, there is the need to effect control such that the licenses and content keys and so forth are transmitted between appropriate license processing components following appropriate procedures. Otherwise, there is the danger that the licenses and the like may be transmitted unauthorized between license processing components, and contents used in an unauthorized manner. For example, in the event that a license and content key are directly transmitted from a certain saving component 11 to another saving component 12 without passing through a duplicating component 24, the number of times of duplication will not be counted even though there is a restriction on the number of times of duplication as a duplication condition of the license, resulting in an unauthorized duplication of the license or the like.

Accordingly, with the copyright management unit 3 according to the present embodiment, a transmission protocol for licensees and so forth is stipulated among the license processing components, in order to prevent unauthorized transmission of licenses and content keys and execute copyright management functions in a sure and authorized manner.

With this transmission protocol, messages including data such as licenses and content keys are exchanged between license processing components, as described above. This transmission protocol does not stipulate the physical format of the entire message exchanged between components, but rather stipulates the format of data which is components of the message. Defining the data format facilitates ensuring of mutual operation among license processing components of differing implementations. For example, in a case of exchanging a license or the like among multiple user devices 10 having copyright management units 3 of different implementations, the data such as licenses and the like can be readily exchanged without converting if the data format of the messages to be handed by the copyright management units 3 is common.

Note that the physical format of messages may be implementation-dependent. This enables implementation of license transmission protocols matching the operating environment. For example, as an example of implementation on a communication protocol, a method can be conceived for implementing data configuring the message in a line-oriented manner. Also, in a case of implementation as a method call between classes, a method can be conceived wherein data configuring the message is input to arguments.

The following is a detailed description of a transmission protocol for licenses between such license processing components.

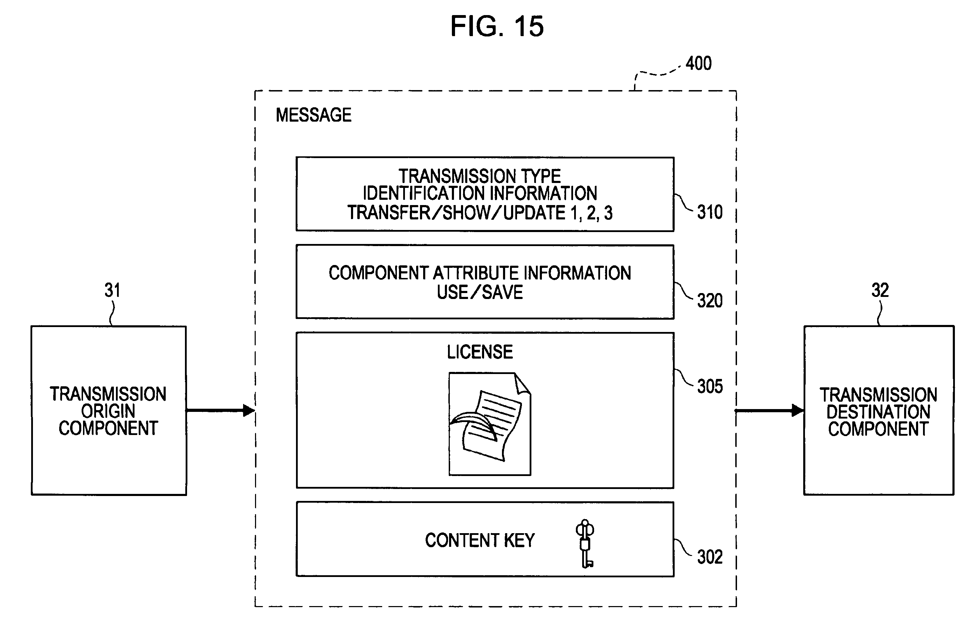

First, an overview of message transmission among license processing components according to the present embodiment will be described with reference to Fig. 15. Fig. 15 is an explanatory diagram illustrating message transmission among license processing components according to the present embodiment.

As shown in Fig. 15, description will be made a case of transmitting a license 305 and a content key 302 corresponding to this license from a transmission source (sending side) license processing component 31 of a license or the like (hereafter referred to as "transmission source component 31") to a transmission destination (reception side) license processing component 32 of a license or the like (hereafter referred to as "transmission destination component 32"). Note that the transmission source component 31 and the transmission destination component 32 may be either of the saving component (or storage unit) 1 or usage component 2, but it should be noted that in the event that the transmission source component 31 is the saving component 1, the transmission destination component 32 is the usage component 1, and on the other hand the transmission source component 31 is the usage component 2, the transmission destination component 32 is the saving component 1.

With the license transmission protocol according to the present embodiment, a message 400 of a predetermined data format is transmitted from the transmission source component 31 to the transmission destination component 32. This message 400 includes transmission type identification information 310, component attribute information 320, the license 305 to be transmitted, and the content key 302 corresponding to the license 305 to be transmitted. Transmitting this message 400 enables the transmission type identification information 310 and component attribute information 320 to be added to the license 305 to be transmitted and the content key 302, so that these four data are transmitted in a correlated manner.

The transmission type identification information 310 is information representing the transmission type (transfer/show/update 1/update 2/update 3) of the license 305 between the transmission source component 31 and the transmission destination component 32. Also, the component attribute information 320 is information representing the attribute of the transmission source component 31 (usage/saving). The following is description of each information in detail.

### (Transmission type identification information)

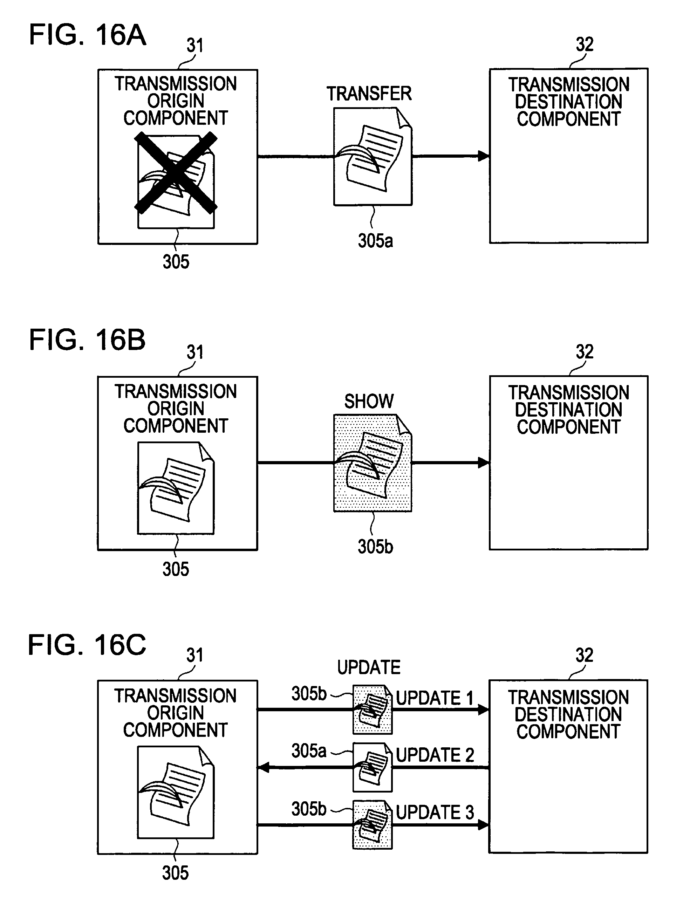

Fig. 16A through Fig. 16C are explanatory diagrams illustrating the types of license transmission among the components according to the present embodiment. AS shown in Fig. 16A through Fig. 16C, the transmission type of the license 305 is classified into three types; "Transfer", "Show", and "Update", in accordance with the object of transmission of the license 305, and the mutual operation between the transmission source component 31 and transmission destination component 32. Further, "Update" is classified onto the three types of "Update 1 (Request Update)", "Update 2 (Transfer Updated License)", and "Update 3 (Notify Updated Completion)". Consequently, there are five types for transmission types of the license 305. The following is a description of each transmission type.

As shown in Fig. 16A, "Transfer" is transmission of the original copy 305a of the license 305. In the event of the license 305 to be "transferred" from the transmission source component 31 to the transmission destination component 32, the transmission source component 31 deletes the license 305 held in itself and transmits the original copy 305a of the license 305 to the transmission destination component 32. Thus, the license 305 can be moved from the transmission source component 31 to the transmission destination component 32.

Also, as shown in Fig. 16B, "Show" is transmission of a copy (duplicate, copy) of the license 305. In the event of "showing" the license 305 from the transmission source component 31 to the transmission destination component 32, the transmission source component 31 transmits a copy 305b of the license 305 to the transmission destination component 32 while holding the license 305 and not deleting it. Thus, the license 305 which the transmission source component 31 holds can be shown to the transmission destination component 32.

Also, as shown in Fig. 16C, "Update" is a transmission for updating the license 305 which the transmission source component 31 has. In the event of "updating" the license 305, first, the transmission source component 31 shows the copy 305b of the license 305 which it has to the transmission destination component 32, and makes an update request ("Update 1"). Next, the transmission destination component 32 updates the transmitted license 305 and transfers the original 305a of the updated license 305 to the transmission destination component 32 ("Update 2"). Further, the transmission destination component 32 shows the copy 305b of the updated license 305 to the transmission destination component 32, and performs update completion notification ("Update 3"). Thus, the license 305 which the transmission source component 31 had is updated.

Thus, there are five types of transmission types of the license 305 between the transmission source component 31 and the transmission destination component 32. Accordingly, with the license transmission protocol according to the present embodiment, five types of transmission type identification information 320 are set according to these five transmission types.

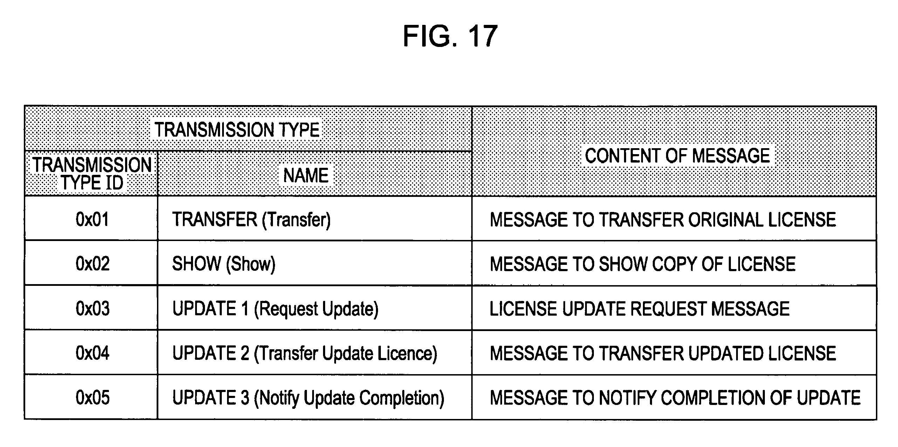

Fig. 17 illustrates the relation between transmission type IDs which are examples of the transmission type identification information 320 according to the present embodiment, and messages. As shown in Fig. 17, five types of transmission type IDs (0x01, 0x02, 0x03, 0x04, 0x05,) are assigned corresponding to the above-described five types of transmission types (transfer, show, update 1, 2, 3). The transmission type IDs are IDs fro identifying the transmission types, and are examples of the transmission type identification information.

The transmission source component 31 including such a transmission type ID in the message 400 enables the license 305 to be transmitted with the transmission type of the license 305 included in the message 400 instructed.

The message 400 is classified into five types corresponding to which of the transmission type IDs is included. Specifically, a message 400 including the transmission type ID "0x01" is a message for transferring the original of the license. Also, a message 400 including the transmission type ID "0x02" is a message for showing a copy of the license. Also, a message 400 including the transmission type ID "0x03" is a message for making an update request for the license. Also, a message 400 including the transmission type ID "0x04" is a message for transferring the updated license. Also, a message 400 including the transmission type ID "0x05" is a message for notifying completion of updating of the license.

The transmission type identification information 310 (transmission type ID) corresponding to difference in transmission type of the license has been described. Transmitting the transmission type identification information 310 by the transmission source component 31 along with the license 305 enables the transmission destination component 32 to identify the transmission type of the license 305, and to execute processing of the license 305 according to the identified transmission type.

### (Component attribute information)

License processing components are generally classified into two types according to the attribute thereof, which will be described later in detail. One is the saving component 1 (such as the saving component 11) for saving the license 305 to storage means, and the other is the usage component 2 (such as the playing component 22) for using the license 305. This attribute classification is used for forbidding connection of license processing components which have the same attribute with each other.

The component type attribute information 320 is information representing the attributes of the transmission source component 31, and specifically is information representing which of the saving component 1 or usage component 2 that the transmission source component 31 belongs to. Each license processing component has component type attribute information 320 to which it belongs, and at the time of creating a message, includes its own component type attribute information 320 in the message.

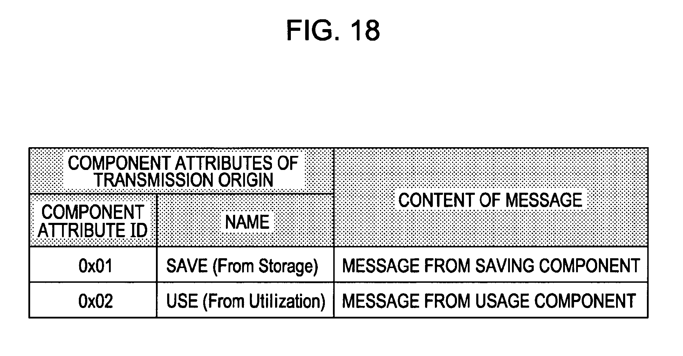

Fig. 18 illustrates the relation between component attribute IDs which are specific examples of the component type attribute information 320, and messages. As shown in Fig. 18, a component attribute ID of "0x01" is assigned to the saving component 1, and a component attribute ID of "0x02" is assigned to the usage component 2. That is to say, the saving components 11, 12, ···, which belong to the saving component 1, have the same component attribute ID of "0x01", and the playing, moving, copying, renting, and returning components 22, 23, 24, 25, and 26, which belong to the usage component 2, have the same component attribute ID of "0x02".

Accordingly, in the event that the transmission source component 31 belongs to the saving component 1, the message 400 transmitted from the transmission source component 31 includes the component attribute ID "0x01". On the other hand, in the event that the transmission source component 31 belongs to the usage component 2, the message 400 transmitted from the transmission source component 31 includes the component attribute ID "0x02".

Including the component type attribute information 320 configured of such component attribute IDs and so forth in the message 400 allows the transmission destination component 32 to identify the attribute of the transmission source component 31, and to check that the transmission source component 31 and the transmission destination component 32 are of different attributes.

### (System Configuration)

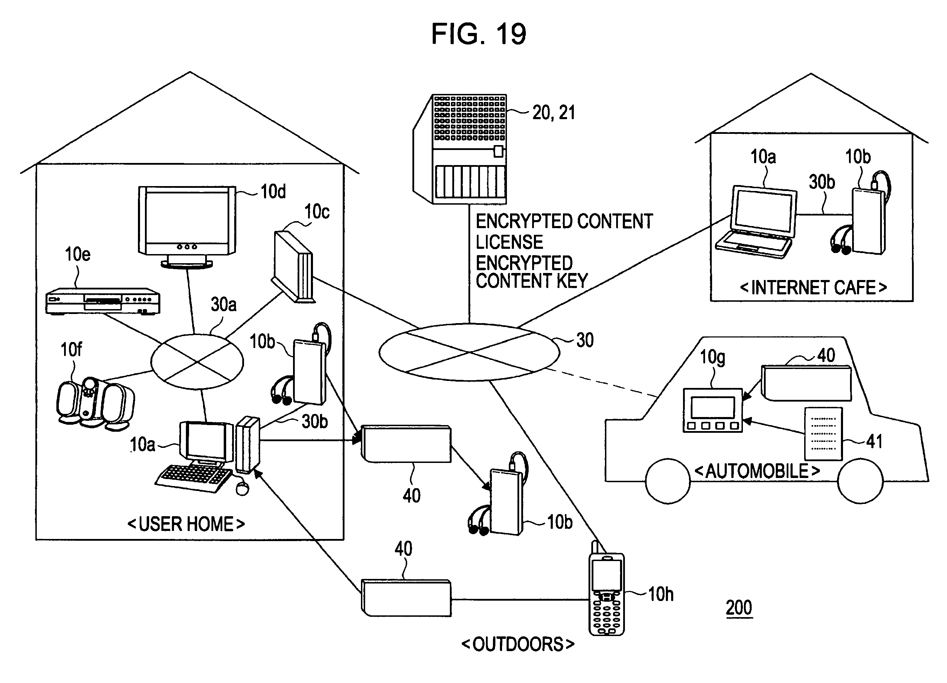

Next, description will be made regarding the overall configuration of the license acquisition system 200 applied to the copyright management system employing the binding management method according to the present embodiment with reference to Fig. 19. Note that Fig. 19 is a block diagram schematically illustrating the overall configuration of the license acquisition system 200 according to the present embodiment.

As shown in Fig. 19, the license acquisition system 200 according to the present embodiment is made up of, for example, multiple user devices 10a, 10b, and so on (hereafter, sometimes collectively referred to as "user device 10"), a service server 20, an administration server 21, a network 30 for mutually connecting those devices (including a home network 30a and a local line 30b.), and a removable recording medium 40 for exchanging data, such as content, licenses, or the like, among these devices.

The user device 10 is various types of information processing devices capable of using contents, and is a configuration example of the license processing device according to the present invention. In Fig. 19, as examples of this user device 10, a note-type or desktop-type personal computer (hereafter, referred to as PC) 10a, a portable device (hereafter, referred to as PD) 10b which is a portable-type content playing device, a home server 10c, a television device 10d, a recording/playing device 10e such as CD, HD, or DVD recorder/player or the like, a stationary audio player 10f, car audio device 10g, a cellular phone 10h, and the like are exemplified. However, the user device 10 is not restricted to these examples, and may be configured with various types of information processing devices, such as an arbitrary computer device, a portable terminal such as a PDA (Personal Digital Assistant) or the like, a digital video camera, a home gaming console, an intelligent home appliance, and so forth, for example.

The user device 10 has license acquisition functions for acquiring licenses for using contents from the administration server 21 and service server 20, for example. Details of a method for acquiring the licenses will be described later.

The user device 10 is not restricted to the above-described license acquisition functions, and the user device 10 has, for example, content usage functions (e.g., content playing, saving, moving merging, dividing, converting, copying, renting, and returning functions and so forth), content usage control functions based on the license, content management functions (e.g., searching and deleting functions of contents, licenses, content keys, etc., based on content ID), content creating functions by ripping, self-recording, and so forth, and the like.

Of the user devices 10, devices including a communication function through the network 30 (e.g., PC 10a, PD 10b, home server 10c, etc.) can be communication-connected servers such as the service server 20, etc. With such a user device 10, for example, software for content distribution services or copyright management software can be downloaded from the service server 20 and installed.

Also, with the user device 10, for example, an arrangement may be made wherein content is newly created by self-recording (own audio recording, video recording, etc.) or ripping or the like, which can be recorded in a storage device or the removable recording medium 40. Note that self-recording means to record audio or the like imaged/sound-collected with an imaging device/sound-collecting device included in the user device 10 itself as video/audio digital data. Also, ripping means to extract digital content (audio data or video data or the like) recorded in a storage medium such as music CD, video DVD, CD-ROM for software, or the like, convert this into a file format which can be processed by the computer, and record this in a storage device or the removable recording medium 40.

With the license acquisition system 200 according to the present embodiment, a first feature is that a user device 10 or removable recording medium 40 or the like can securely acquire a license with a communication protocol having a light processing load as long as the user device 10 is connected to the administration server 21 or service server 20 by network (online), even in the case of a user device 10 which has relatively low processing capabilities in particular, such as the PD 10b or cellular phone 10h or the like for example.

Also, with the license acquisition system 200, a second feature is that even in the event that the user device 10 is not connected to the network (offline), another user device 10 can make a license request instead to the administration server 21 or the like, whereby the offline user device 10 and/or removable recording medium 40 can acquire a license.

As shown in Fig. 19, in the event of the online PD 10b acquiring a license, the PD 10b itself may access the administration server 21 to acquire a license, while on the other hand, the offline car audio device 10g can acquire a license by the PC 10a requesting a license to the administration server 21 or the like instead, and a pass phrase being input to the car audio device 10g via a print medium 41 or removable storage medium 40 or the like. Details of license acquisition will be described later.

Note that the above access collectively refers to information processing, for example, usage of the system, connecting to a server, referencing a file, saving a file, deleting a file, changing a file, and so forth.

The administration server 21 includes a function for transferring secure information, such as encrypted contents managed by the service server 20, a license describing the usage conditions of the content, and an encrypted content key for decrypting the content, and so forth, to the user device 10. Also, the service server 20 performs user management, group management, license management, or the like with content distribution.

The service server 20 and administration server 21 are made up of a computer device or the like including a server function. Note that at least one of the service server 20 and administration server 21 includes, for example, a WWW server, a group management server, a content distribution server, a certificate management server, a billing server, and so forth.

the distribution server is a server to providing content distribution services for example, and distributes contents to the user device 10 via the network 30 in response to distribution requests from the user device 10.

For example, in the event of distributing music contents, the distribution server is configured as an EMD server for providing EMD (Electronic Music Distribution) services. In this case, the content distribution server compresses and encodes music content to be distributed using a compression encoding system, such as ATRAC3 (Advanced Transform Acoustic Coding) (registered trademark) or MP3 (MPEG Audio Layer-3) or the like for example, encrypts this with an encryption system such as DES (Data Encryption System) or the like, and then distributes this to the user device 10.

Also, the distribution server can also be configured as a server for providing created contents usage services, for managing usage of contents created by the user device 10 by ripping, self-recording, and so forth.

In the above case, the distribution server distributes to the user device 10 a license describing the usage conditions of the created contents, and a content key for decrypting the contents. Thus, the user device 10 can use (play, copy, etc.) contents created by itself by ripping or the like, based on the license and content key obtained from the distribution server.

Note that in the example in Fig. 19, the service server 20 or administration server 21 provides contents, licenses, content keys, and so forth, to the user device 10 by distribution over the network 30, but is not restricted to this example. For example, contents, licenses, content keys, and so forth, may be provided to the user device 10 by removable storage media 40 such as DVDs, CDs, MDs, semiconductor memory, or the like, for example.

The network 30 is a communication line network for communicably connecting the user device 10 and service server 20 / administration server 21. The network 30 is made up of, for example, a public network such as the Internet, Internet VPN, telephone network, satellite communication network, or the like, a dedicated line network such as WAN, LAN, IP-VPN, or the like, and can be either cable or wireless.

Further, such a network 30 includes private networks such as hone networks 30b and local lines 30b. Of these, the private network is a network wherein multiple user device 10 which share contents are mutually connected within a range of private use from the perspective of copyright management.

For example, the home network 30a at the user home shown in Fig. 19 has a PC 10a, home server 10c, television device 10d, recorder/player 10e, and stationary audio player 10f mutually connected. Of these, the home server 10c has, for example, hub functions, router functions, gateway functions, or the like, managing communication between the user devices 10 in the user's house and the outside.

The removable recording medium 40 is a removable medium capable of storing various types of data such as contents, licenses content keys, and so forth, examples of which include various types of optical discs such as DVD-R, DVD-RW, DVD-RAM, CD-R, CD-RW, magneto-optical disc, or the like, magnetic disks such as flexible disks, hard disks, or the like, and various types of semiconductor memory. Note that the removable recording medium 40 may be, for example, a recording medium having a copyright management function for restricting copying or playing or the like of contents using an encryption key.

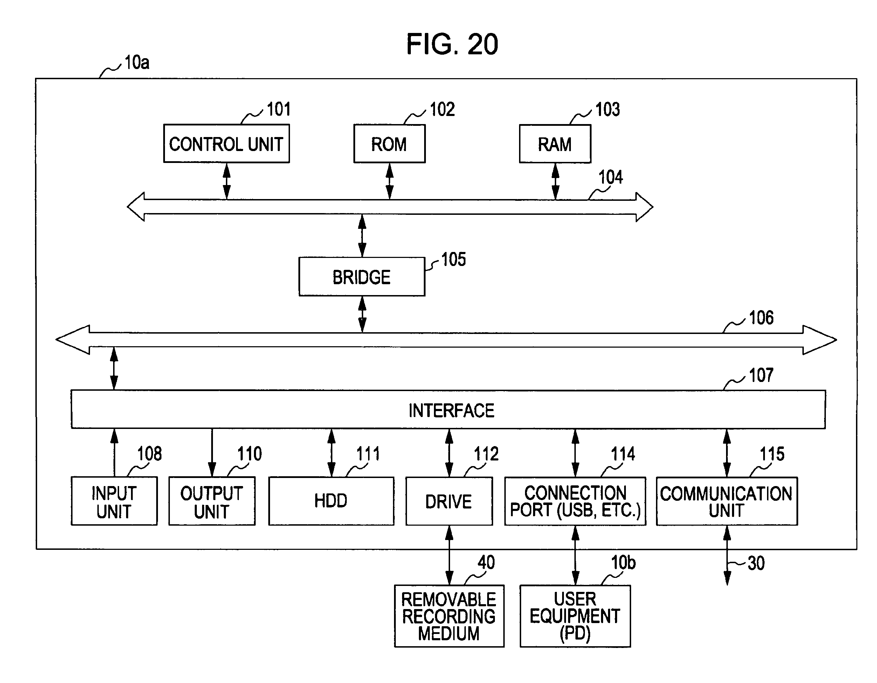

First, description will be made in detail regarding the configuration of the PC 10a according to the present embodiment, with reference to Fig. 20. Fig. 20 is a block diagram schematically illustrating a hardware configuration example of the PC 10a according to the present embodiment.

As shown in Fig. 20, the PC 10a includes, for example, a control unit (CPU (Central Processing Unit)) 101, ROM (Read Only Memory) 102, RAM (Random Access Memory) 103, a host bus 104, a bridge 105, an external bus 106, an interface 107, an input unit 108, an output unit 110, a storage device (HDD) 111, a drive 112, a connection port 114, and a communication unit 115. Note that the PC 10a shown in Fig. 20 has generally the same function configuration as the above-described PC 10a shown in Fig. 4, so detailed description thereof will be omitted.

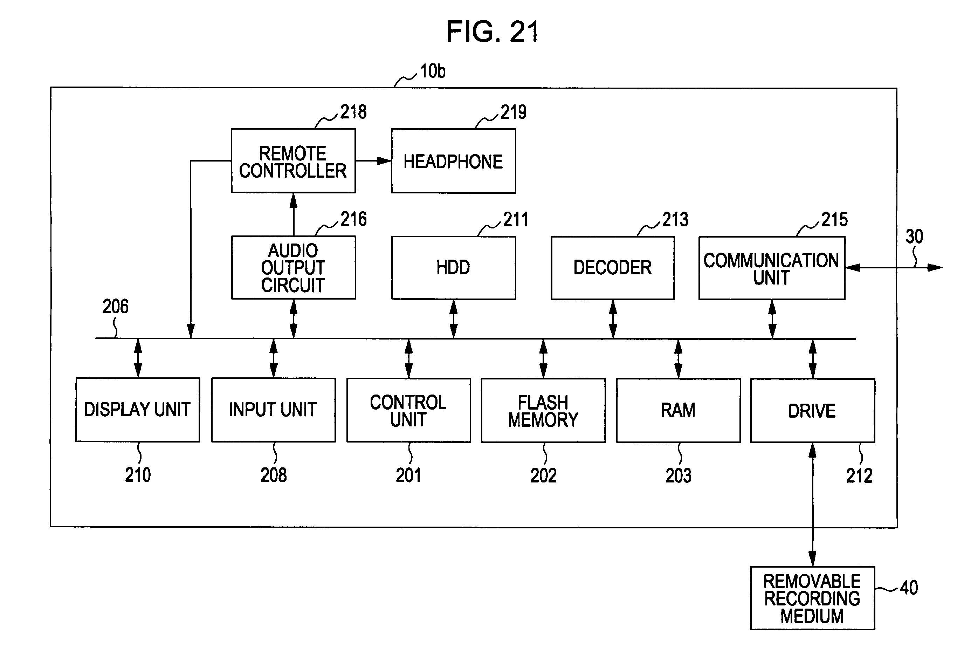

Next, the hardware configurations of the PD 10b according to the present embodiment will be described with reference to Fig. 21. Note that Fig. 21 is a block diagram schematically illustrating a hardware configuration example of the PD 10b according to the present embodiment.

As shown in Fig. 21, the PD 10b has, for example, a control unit (or CPU) 201, flash memory 202, RAM 203, a bus 206, an input unit 208, a display device 210, an HDD 211, a drive 212, a decoder 213, a communication device 215, an audio output circuit 216, a remote controller 218, and headphones 219. Note that the PD 10b shown in Fig. 21 has generally the same functional configuration as the above-described PD 10b shown in Fig. 6, except for having a drive 212 and not having a data processing unit 204, so detailed description thereof will be omitted.

Now, the HDD 211 in Fig. 21 is a data storing device configured as an example of the storage means of the PD 10b according to the present embodiment. This HDD 211 is configured of a hard disk drive (HDD) having storage capacity in the order of tens of GB for example, and stores contents, licenses, content keys, various types of data, such as programs to be executed by the control unit 201, and various types of data. The PD 10b having this HDD 211 is configured as a content recorder/player capable of recording and playing contents. Thus, in addition to contents provided form the PC 10a by way of the removable storage medium 40, contents received from the PCa and so forth via the local line 30b can be stored in the HDD 211 and played. However, the PD 10b is not restricted to this example, and may be configured as a content play-only device without the HDD 211. In this case, the PD 10b is capable of execution only of reading and playing contents recorded in the removable storage medium 40 (incapable of recording).

The drive 212 is a recording medium reader/writer, which is built into the PC 10b. The drive 212 records/plays various types of data, such as contents, licenses, content keys, etc., to/from the above-described various types of removable storage media 40 loaded to the PD 10b.

While hardware configuration examples of the PC 10a and PD 10b which are examples of user device 10 have been described with reference to Fig. 20 and Fig. 21, user devices 10 which use contents are not restricted to the above PC 10a and PD 10b, and can be configured as home server 10c, a television device 10d, a recording/playing device 10e, a stationary audio player 10f, car audio device 10g, a cellular phone 10h, and various other electronic appliances and information processing devices. Accordingly, the user devices 10 can have hardware configurations unique to each device, and processing is executed according to the hardware configurations.

It should be noted though, that the user device 10 which is a license processing device for processing licenses to perform usage control of contents has the above-described copyright management unit (copyright management modules, or copyright management program). Specifically, the user device 10 has storage means for holding a copyright management program for example, and a processor for executing this copyright management program, and sends messages requesting licensees to the administration server 21, verifies that the reply messages from the administration server 21 are legitimate, and obtains licenses.

Also, in addition to obtaining licenses, the user device 10 can also determine whether or not usage of contents at itself is permissible by evaluating usage conditions of a license for example, and execute content usage under the condition of having obtained a determination that usage is permissible.

While the user device 10 shown in Fig. 21 has been described with reference to an example of the PD 10b, the user device 10 is not restricted to this example and may be any user device 10 with low processing capabilities and having communication capabilities, such as the cellular phone 10h for example.

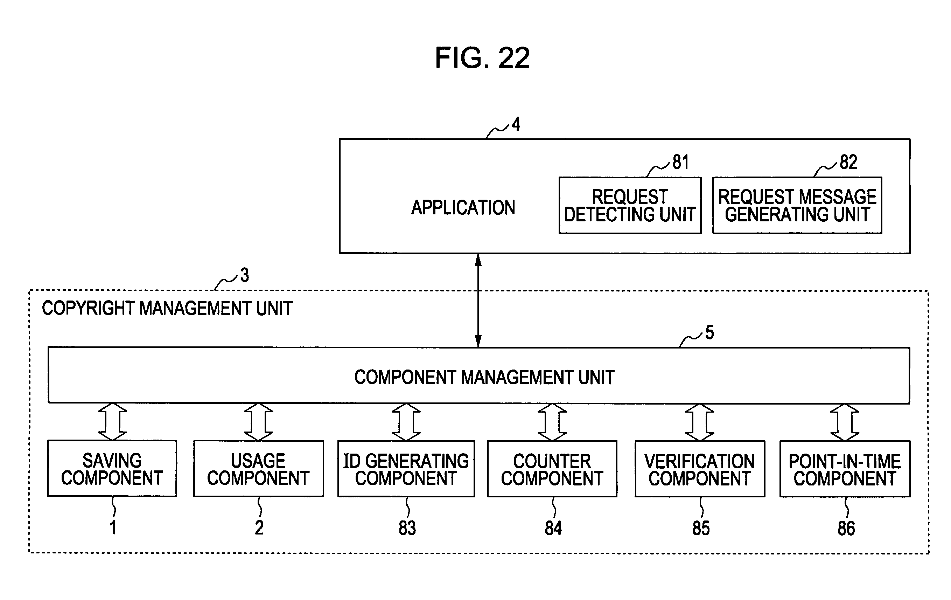

Next, description will be made regarding the function configuration of the copyright management unit (or copyright management program) 3 which the user device 10 according to the present embodiment has, with reference to Fig. 22. Fig. 22 is a block diagram illustrating the functional configuration of the copyright management unit which the user device 10 according to the present embodiment has.

Specifically, as shown in Fig. 22, the copyright management unit 3 is connected to an application 4 for using contents. This application 4 has a user interface function and a function for actually using contents.

Specifically, as a user interface function, the application 4 receives content usage requests from users, and displays various operating screens on the display device and so forth. Also, as a content usage function, the application 4 executes playing of contents, moves contents among multiple user device 10 (e.g., between the PC 10a and PD 10b) or among storage means within the same user device 10 (e.g., the HDD 111 and removable storage medium 40), and so forth, for example. Usage of contents with this application 4 is controlled by the copyright management unit 3.

The application 4 also has a request detecting unit 81 and a request message generating unit 82. The request detecting unit 81 detects a license acquisition request by input signals from the input unit 108 or input unit 208. Upon detecting such requests, generating of a license acquisition request message is relegated to a component management unit 5.

The request message generating unit 82 obtains counter information (or time stamp) generated by a counter component 84 and/or a session ID generated by an ID generating component 83, and generates a license acquisition request message for requesting a license from the server.

Also, the request message generating unit 82 can determine whether or not the user device 10 is in an online (synchronous) state of being connected to the network 30, or is in an offline (asynchronous) state of not being connected to the network 30, based on responses from the communication unit 115 or communication unit 215 which the user device 10 has, and add to the license acquisition request message as state information.

While the application 4 according to the present embodiment will be described with reference to an example of a dedicated program for using the copyright management system, the application 4 is not restricted to this example, and can be carried out in the case of being an application such as a general-use Web browser or the like, for example.

The copyright management unit 3 has the saving component 1, usage component 2, ID generating component 83, counter component 84, verifying component 85, and point-in-time component 86. Note that the saving component 1 and the usage component 2 are equivalent to the license processing component, and will be described in detail later.

In order to securely exchange information relating to licenses (licenses themselves, content keys, etc.) among the license processing components, the completeness and so forth of the components which the copyright management unit 5 has can be verified by the administration server 21 via network for example, as pre-processing for evaluating/confirming usage conditions of licenses at the license processing components, or as independent processing, whereby the user device 10 can acquire licenses in a legitimate manner.

The ID generating component 83 generates a session ID for identifying an acquisition session, which is a series of exchanges for sending a message as to the administration server 21 to acquire a license, and receiving a reply message as to that request message.

The counter component 84 generates counter information. For example, the counter component 84 generates counter information which increases by one like "1, 2, 3, ···" (incremental), and generates counter information which decreases by one like "90, 89, 88, ···" (decremental). Note that the generated counter information is stored in storage means such as a cache of the user device 10, until being updated to the next counter information.

Also, the counter component 84 is not restricted to cases of generating the above-described incremental counter information or decremental counter information, and can also refer the point-in-time generated by the point-in-time component 86, and generate a time stamp in a "YYYYMMDDhhmmss" format, such as "Year 2005, Month 8, Date 22, hour 13, minute 50, second 15", as counter information. Note that the generated time stamp is also stored until being updated by the next time stamp.

The verifying component 85 verifies a reply message following having requested a license to the administration server 21, for example. Also, in the event that the user device 10 itself is offline (asynchronous) and a pass phrase is externally input, the verifying component 85 decodes that pass phrase. Details will be described later.

The point-in-time component 86 is capable of keeping precise time (standard time), and can output the point-in-time in the "YYYYMMDDhhmmss" format, in response to external requests. Note that the point-in-time component 86 may also be an arrangement which does not keep standard time itself but access a time server or the like by NTP via the network 30, and obtains the standard point-in-time.

The above saving component 1, usage component 2, Id generating component 83, counter component 84, verifying component 85, and so forth, may be configured, for example, as hardware having the above-mentioned respective functions, or may configured by installing a program for causing the computer to realize the above-mentioned respective functions into the user device 10.

Next, the component management unit 5 will be described. The component management unit 5 has functions of using the necessary license processing components and other components (ID generating component 83 through verifying component 85) according to content usage requests from the application 4 to execute content usage control.

First, the component management unit 5 determines the license processing components to use for content usage control processing. Specifically, upon receiving a content usage request from the application 4, the component management unit 5 determines the usage component 2 for performing usage control of the content regarding which a request has been received, the saving component 1 for saving the license and content key necessary for usage control of the content, and other components (ID generating component 83 through verifying component 85). These determined components are sent load instructions so as to be loaded (activated).

Next, the component management unit 5 instructs the loaded saving component or request message generating component to create a message, and acquires the message. At this time, the component management unit 5 may instruct invalidation (deletion) of a license and content key stored in the saving component 1. For example, in the case of moving a content, the component management unit 5 will instruct the saving component to delete the saved license and content key and then to send a message for transfer.

Further, the component management unit 5 transfers the message acquired form the saving component 1 to the usage component 2, or transfers the license acquisition reply message acquired form the administration server 21 to the verifying component 85.

Following verification of the license acquisition reply message, the verifying component 85 transfers the license acquisition reply message to the usage component 2. Details of this verification will be described later.

Following confirmation of the legitimacy of the message (license acquisition reply message, included), the usage component 2 evaluates the usage conditions described in the license, determines whether or not usage of the contents is permissible, and if usage is permissible, instructs the application to use the contents. Note that in the event that the usage component 2 is the moving component 23 or the like, a message is sent to the other saving component 1 in order to move the corresponding license and content key so as to accompany moving of the content.

In this way, the component management unit 5 causes multiple license processing components to function which are necessary according to the usage request for contents, and causes these license processing components to exchange licensees and content keys, thereby controlling the requested content usage.

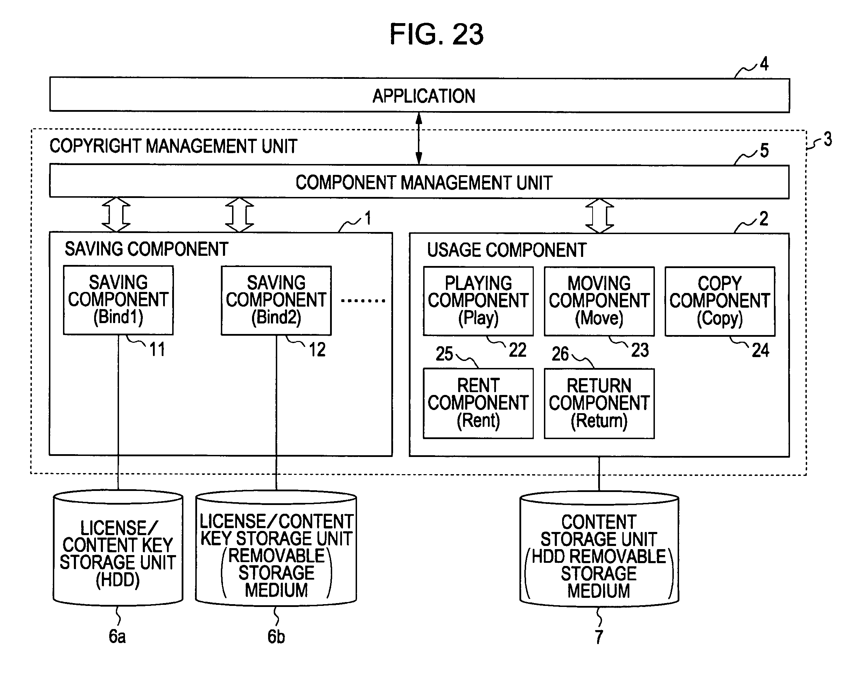

Next, as shown in Fig. 23, the copyright management unit 3 has the above-described multiple license processing components, and the component management unit 5 for controlling these license processing components. The license processing components are modules formed as parts according to increments of dynamically processing licenses (usage restriction functions). These license processing components have functions for processing licenses and content keys (evaluation, transmission, etc.) in order to control usage (playing, moving, etc.) of contents, and functions for securely saving and managing licenses and content keys in storage means.

At the copyright management unit 3, information relating to licenses (licenses themselves, content keys, etc.) is securely exchanged among the license processing components based on control of the component managing unit 5, thereby transmitting and processing appropriate data for appropriate license processing components, thereby controlling usage of contents.

As described above, the license processing components are classified into a saving component 1 and usage component 2.

First, the saving component 1 will be described in detail. The saving component 1 has the function of securely storing licenses and content keys in storage means. Specifically, the saving component 1 performs processing for saving licenses and content keys in storage means such as the HDD 111 or removable storage medium 40 or the like, so as to ensure correlation of the content keys, licenses, and contents (the above-described condition 3) while ensuring confidentiality of the content keys (the above-described condition 1) and completeness of the license (the above-described condition 2) (this processing is called binding). Also, the saving component 1 performs processing in addition to binding processing of the licenses and content keys, processing for reading out licenses and content keys from storage means, or rewriting or deleting licenses and content keys saved in the storage means, and so forth.

The part of the saving component 1 which executes reading of the storage means is dependent on the implementation environment, so storage means having different storage methods are each provided therewith. Accordingly, basically, one type of saving component 1 corresponds to one type of storage means. More specifically, saving components 1 are provided corresponding to each of the types and specifications of the removable storage media 40 (e.g., normal semiconductor memory, semiconductor memory with copyright management functions, CDs, DVDs, etc.), and also, provided corresponding to HDDs which different types of user devices 10 have (the HDD 111 of the PC 10a, the HDD 211 of the PD 10b, and so forth).

In the example shown in Fig. 23, a saving component (Bind1) 11 for an HDD for saving licenses and content keys in a license / content key storage unit 6a configured of an HDD, and a saving component (Bind2) 12 for removable storage media for saving licenses and content keys in a license /content key storage unit 6b configured of the removable storage media 40, are shown.

The saving component 1 saves licenses and content keys in a manner securely correlated to the storage means (i.e., binds), so that licenses or content keys cannot be tampered with or licenses or content keys are not leaked.

Next, the usage component 2 will be described in detail. The usage component 2 has functions for taking licenses and content keys, and also contents if necessary, as input, evaluating various types of usage conditions described in the licenses (later-described playing conditions, moving conditions, etc.), and controlling usage of the contents. Also, depending on the type of the usage component 2, there are those which update licenses and output the updated licenses, in accordance with what the usage control of the contents is.

Also, the usage component 2 is connected to a content storage unit 7 configured of an HDD, removable storage medium 40, or the like, for example, and can read out and process contents from the content storage unit 7 as necessary. On the other hand, the usage component 2 cannot directly acquire licenses and content keys from the license / content key storage unit 6, and must go through the saving component 1 without fail. In other words, the usage component 2 does not itself have functions of reading and saving licenses and content keys from and to the storage means, but processes the licenses and content keys read at and transmitted from the license / content key storage unit 6 by the saving component 1, and further transmits licenses and content keys to the saving component 1 to be written to storage means if necessary.

There are provided at least as many usage component 2 as there are usage forms (operations) of contents. Now, the types of usage forms of contents will be described. Content usage forms include, for example, "playing" where contents are output as audio or video, "moving" wherein contents are moved (transfer of original) among user devices 10 or storage means, "copying" wherein contents saved in one storage means are copied (transfer of copy) to another storage means, "renting" where contents are rented among user devices 10 or storage means, "returning" wherein contents rented among user devices 10 or storage means are returned to the renter, and so forth.

Note that types of the above "playing" can include, for example, normal speed playback, normal speed reverse playback, fast forward playback, fast reverse playback, fast forward, rewind, pause, seek operations, and so forth. Also note that the above "rent" is equivalent to "Check Out" compliant to SDMI, and "return" is equivalent to "Check In" compliant to SDMI.

In order to control each usage (each operation) of such contents, a play component 22, move component 23, copy component 24, rent component 25, and return component 26, for example, as provided as specific examples of usage components 2 with the present embodiment.

The play component 22 evaluates playing conditions described in the license in order to control playing of the content, and controls playing of the contents. There are provided two types of the play component 22 according to play control involving updating of a license and play control not involving updating of a license, which will be described in detail later.

Also, in order to control moving of contents, the move component 23 evaluates moving conditions described in the license corresponding to the content in order to control moving of the content, and controls moving of the license and content key (moving of original) of the license and content key among user devices 10 or storage means. For example, in the event that moving of the license and content key between source storage means and destination storage means by the move component 23 is permitted, moving of the contents corresponding to the license between source storage means and destination storage means is also permitted.

Also, the copy component 24 evaluates copy conditions described in the license corresponding to the content in order to control copying of the content, and controls copying (moving of copy) of the license and content key among user devices 10 or storage means. For example, in the event that copying of the license and content key between copy source storage means and copy destination storage means by the copy component 24 is permitted, copying of the contents corresponding to the license between copy source storage means and copy destination storage means is also permitted.

Also, the rent component 25 evaluates rent conditions described in the license corresponding to the content in order to control renting of the content, and controls renting of the license and content key among user devices 10 or storage means. For example, in the event that renting of the license and content key between rent source storage means and rent destination storage means by the rent component 25 is permitted, renting of the contents corresponding to the license between rent source storage means and rent destination storage means is also permitted.

Also, the return component 26 evaluates return conditions described in the license corresponding to the content in order to control returning of the content, and controls returning of the license and content key among user devices 10 or return source storage means and return destination storage means. For example, in the event that returning of the license and content key between return source storage means and return destination storage means by the return component 26 is permitted, returning of the contents corresponding to the license between return source storage means and return destination storage means is also permitted.

The user device 10 evaluates the usage conditions described in the license, and the usage state, with the copyright management unit, determines whether or not the usage conditions are satisfied, and only in the event that determination is made therein that the usage conditions are satisfied, usage of contents (playing, copying, etc.) and processing of licenses (saving, copying, moving, etc.) can be performed. For example, in the event that playing of a content is permitted, the user device 10 can acquire a key for decrypting the encrypted content key, and use this acquired key to decrypt the encrypted content key and further use the decrypted content key to decrypt the encrypted content, and thereby play the content.

Also, the user device 10 can exchange contents and licenses (moving, copying, renting, returning) with other user device 10, via the network 30, home network 30a, local line 30b, or removable storage medium 40. Note however, that in order to exchange contents and licenses among user devices 10, the copyright management unit 3 must evaluate the moving conditions and the like described in the license, and moving and so forth of the contents and licenses must be permitted.

Five types of usage components 2 have thus been described with reference to Fig. 23. Note that with regard to usage components 2 performing the same type of content usage processing, multiple usage components 2 may be provided according to portions dependent on the environment due to implementation. For example, multiple play components 22 may be provided for each type of decoder.

This license processing components formed of saving components 1 and usage components 2 such as described above control usage of contents by exchanging licenses and content keys, as described with Fig. 14 as will. In order to exchange licenses and content keys in this way, the license processing components exchange messages following a particular protocol. As described above, the message includes
(1) license,
(2) content key,
(3) transmission type identification information representing the transmission type of the license (i.e., the type of the message), and
(4) component attribute information representing the attributes of the license processing component at the transmission source of the message.
   Of these, (3) transmission type identification information and (4) component attribute information are data for ensuring that licenses and component keys are appropriately transmitted to appropriate license processing components.

### (About Data)

Now, primary data used in the license acquisition system 200 according to the present embodiment will be briefly described.
- "Session ID" is an ID for identifying a session such as an acquisition session or the like for ensuring non-redundancy of message transmission/reception with the administration server 21. While a session is live, the session ID is held securely so as to keep from being tampered by a third party, and is discarded at the time of the session ending.
- "Counter information" is information such as a counter which is incremented to ensure non-redundancy of message transmission/reception, a time stamp, or the like. This counter information also needs to be held securely so as to keep from being tampered by a third party.
- "Terminal ID" is an ID for identifying a requesting user device 10 requesting license acquisition to the service server 20 or administration server 21, for example.
- "Media ID (or information recording media ID)" is an ID for identifying a hard disk drive (HDD), removable recording medium 40, or the like, and is an ID which is the subject to which the license is actually given.
- "Recorder ID (or information processing device ID)" is an ID for identifying a recording device, for example, and is an ID which is the subject to which the license is actually given.
- "Device ID (or information processing device ID)" is an ID for identifying a player device, for example, and is an ID which is the subject to which the license is actually given.
- "License information" includes, for example, a license which has information regarding a valid period or number of times in which a content can be used in a valid manner, transmission type identification information, component attribute information, content key, and so forth.
- "License MAC (or MAC of license information)" is the MAC value of the license information in the above (7) that has been obtained.
- "Signature" is signature data, for example.
- "Service ID" is an ID for identifying services. Also, a service ID is correlated with a group ID.
- "Online (synchronous) information" is information indicating the state of the user device 10 being connected to a network.
- "Offline (asynchronous) information" is information indicating the state of the user device 10 being disconnected from a network.
   While the above data is primarily used, the license acquisition system 200 according to the present embodiment can be carried out using other data, and is not restricted to this data alone.

### (License acquisition method: synchronous / session ID method)

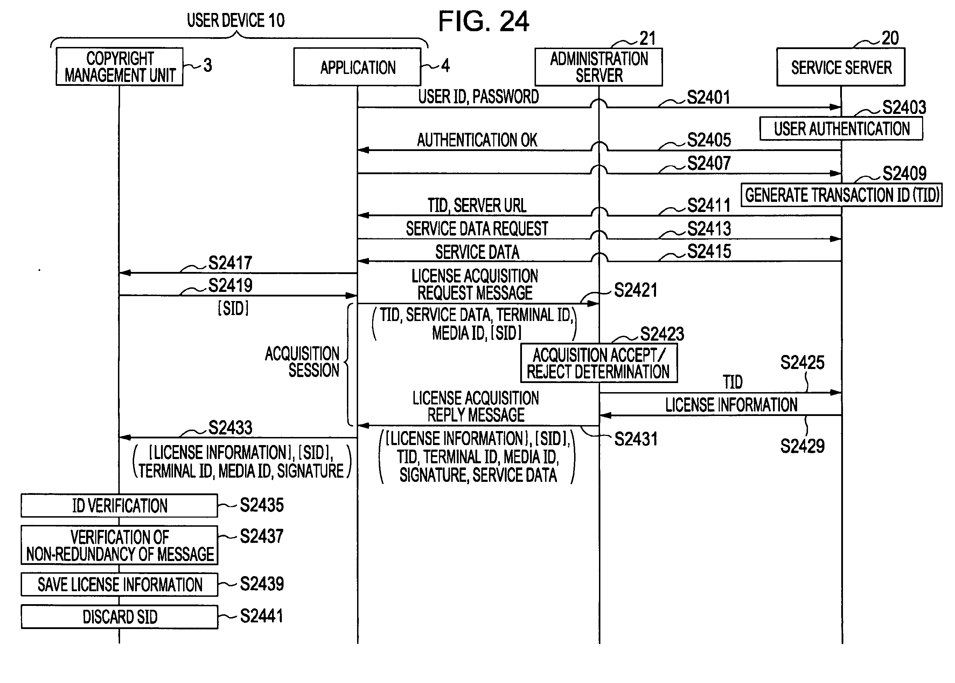

Next, a series of processing of the license acquisition method using the license acquisition system 200 such as described above will be described with reference to Fig. 24. Fig. 24 is a sequence diagram schematically illustrating a license acquisition method of the synchronous / session ID method.

First, as shown in Fig. 24, in steps S2401 through S2411, a communication connection is securely established between the application 4 of the user device 10 at the acquisition requesting side and the service server 20 via the network 30, and user authentication is performed.

Specifically, first, upon the request detecting unit 81 of the application 4 of the user device 10 detecting an acquisition request in response to user input, the application 4 sends a user ID and password to the service server 20 (S2401). Thereupon, the service server 20 checks the received user ID and password against a user ID and password registered in a database beforehand, and performs user authentication processing (S2403).

In the event that user authentication is established as a result of the above checking, the service server 20 permits login, and sends a notification to the effect that user authentication has been established to the application 4 of the user device 10 (S2405). Next, the application 4 sends a license acquisition request notification to the service server 20 (S2407). This license acquisition request notification lets the service server 20 know that the user device 10 has accessed for license acquisition. Note that what is indispensable for license acquisition is the acquisition session, and the above license acquisition request notification can be omitted.

Next, the service server 20 generates a transaction ID (TID) (S2409), and sends the generated transaction ID and a URL (Uniform Resource Locator) which is an example of address information of the administration server 21 to the application 4 of the user device 10 (S2411). Thus, the user device 10 can access the administration server 21 based on the received URL.

In the following steps S2413 through S2441, processing for actually storing a license at the user device 10 and/or the removable recording medium 40 from the administration server 21 is performed.

Specifically, first, the application 4 of the user device 10 requests service data (or a service ID) from the service server 20 (S2413). Thereupon, the service server 20 returns service data (or a service ID) to the user device 10 (S2415).

Next, the application 4 of the user device 10 instructs the copyright management unit 3 to generate a license acquisition request message for requesting a license (S2417).

Upon receiving the license acquisition request message, the ID generating component 83 generates a session ID identifying the acquisition session (or SID). The generated SID is sent to the application 4 (S2419).

We will say that the data within the [ ] in Fig. 24 can be read input by the copyright management unit 3 of the user device 10 and the administration server 21, by encryption/decryption with a key such as AES-CBC or the like. For example, with the [SID] shown in step S2419, only the copyright management unit 3 of the user device 10 and the administration server 21 can read the SID.

Next, the request message generating unit 82 of the application 4 generates a license acquisition request message based on the session ID, TID received in S2411 above, the service data, its own terminal ID, and saving destination information (media ID, device ID, etc.) for saving the license that has been accepted, and sends this to the administration server 21 (S2421). Note that the license acquisition request message includes online information, which is state information. The terminal ID and the like are generated by the user device 10.

Next, the administration server 21 determines whether or not license acquisition is permissible, based on the saving destination information (e.g., media ID) included in the license acquisition request message that has been received (S2423). This acquisition permissible/non-permissible determination (S2423) confirms whether or not the saving destination information has been revoked, for example. Note that this permissible/non-permissible determination (S2423) can be omitted.

In the event of permitting acquisition as a result of the acquisition permissible/non-permissible determination, the administration server 21 sends the TID to the service server 20 to perform processing for storing the license at the specified saving destination (S2425).

The service server 20 generates license information (license, content key) to be stored in the storing destination such as the user device 10, and sends the license information to the administration server 21 (S2429).

Upon confirming that online information is included in the license acquisition request message, the administration server 21 generates a license acquisition reply message based on the license information received from the service server 20 and the session ID and the like received from the user device 10, and sends this to the user device 10 (S2431). In the event of confirming that online information is included in the license acquisition request message, the administration server 21 does not generate a license acquisition reply message, but rather causes the service server 20 to create information such as a pass phrase, which will be described later.

As shown in Fig. 24, the signature included in the license acquisition request message is a MAC value of data such as, for example, the terminal ID, license information, media ID (or device, ID, recorder ID, etc.), and session ID, and so forth, but is not restricted to this example. The completeness of the license acquisition reply message can be verified by this signature.

Upon receiving the license acquisition reply message, the application 4 of the user device 10 transfers this to the copyright management unit 3 without any change (S2433). Note that the application 4 cannot read information included in the license acquisition reply message, such as the "SID" for example.

The verification component 85 verifies that the terminal ID of the license acquisition request message received from the application 4 and the terminal ID at the time of sending the license acquisition request message (or of itself) match (S2435).

Next, the verification component 85 verifies that the license acquisition reply message (reply) as to the license acquisition request message which the user device 10 has sent once, has been received once (S2437). For example, the verification component 85 verifies that the SID within the license acquisition reply message and the SID which the ID generating component 83 generated at the time of sending the license acquisition request message match. Note that this verification is authentication performed within the license acquisition session necessary for license acquisition, and can be carried out by verification at just one or the other or the user device 10 side and administration server 21 side (unilateral authentication), so the overall load at the user device 10 and administration server 21 in at least the license acquisition is reduced.

Note that verification of non-redundancy of the message (S2437) is not restricted to matching of SIDs, and can be carried out by, for example, following verification of matching of SIDs, referencing a sending flag and reception flag so as to confirm whether or not there has been further sending/reception of messages, thereby verifying non-redundancy. In this case, the sending flag and reception flag are assigned a predetermined storage region.

Also, along with the above message non-redundancy verification (S2437), the verification component 85 also verifies completeness of the license acquisition reply message regarding whether or not the message has been tampered with, based on the signature included in the license acquisition reply message (S2437).

Next, upon verification by the verification component 85 of the user device 10 ending, the component management unit 5 transfers the license acquisition reply message to the usage component 2. The usage component 2 (move component 23 or the like) evaluates the license acquisition conditions based on the component attribute information and transmission type identification information included in the license acquisition reply message, whereupon the saving component 1 stores the license information including the license, content key, and so forth, in the storage region of the saving destination (media ID, device ID, etc.) (S2439). Thus, the user device 10 can play distributed contents corresponding to the license information.

Also, the content correlated to the license is transferred from the service server 20 to the user device 10 or removable storage media 40 which is the saving destination, either along with the license acquisition reply message or separately.

Next, the ID generating component 83 of the copyright management unit 3 discards the session ID (SID) (S2441) that has been generated in step S2419. Thus, the series of processing of the license acquisition method with the synchronous / session ID method according to the present embodiment ends.

Note that with the license acquisition method shown in Fig. 24, description has been made with reference to an example of performing license acquisition of the PD 10b as the user device 10, but is not restricted to this example, and can be carried out in the same way with other user devices 10 other than the PD 10b.

Also, with the license acquisition method according to the present embodiment shown in Fig. 24, description has been made with reference to an example wherein license information including a license and content key is included in the license acquisition message and sent, but is not restricted to this example, and an arrangement may be made wherein, for example, the MAC value of the license information (license MAC) is obtained, and the license MAC is included in the license acquisition reply message and sent. In this case, the license and content key are sent separately along with the license acquisition reply message.

### (License acquisition method: synchronous / counter information method)

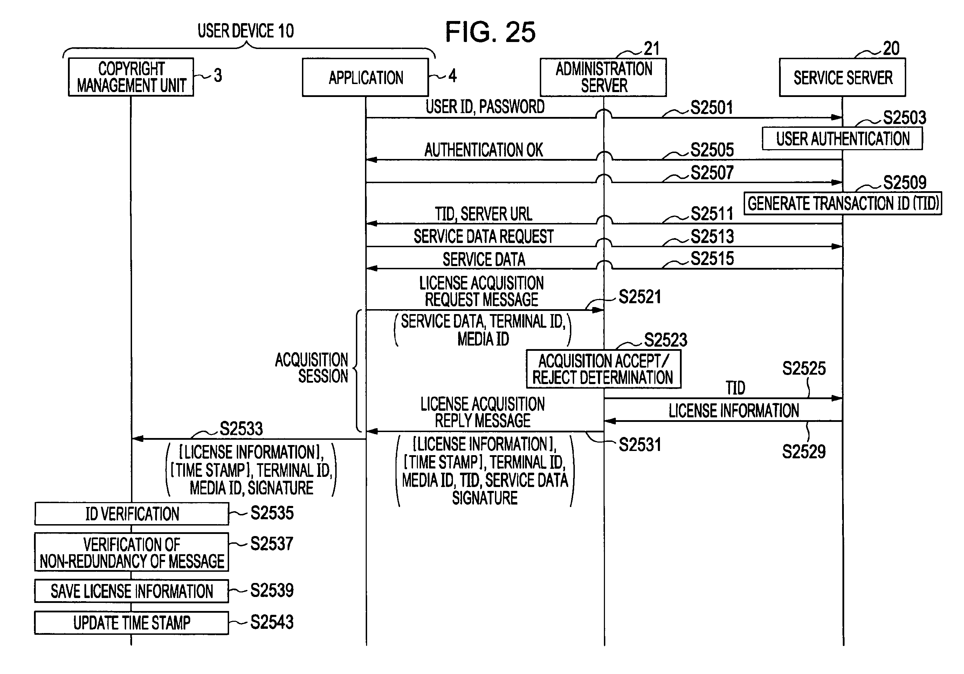

Next, a series of processing of the license acquisition method using the license acquisition system 200 such as described above will be described with reference to Fig. 25. Fig. 25 is a sequence diagram schematically illustrating a license acquisition method of the synchronous / counter information method.

First, as shown in Fig. 25, in steps S2501 through S2511, a communication connection is securely established between the application 4 of the user device 10 at the acquisition requesting side and the service server 20 via the network 30, and user authentication is performed. Note that details are essentially the same as the above-described steps S2501 through S2511 shown in Fig. 24, so detailed description thereof will be omitted.

In the following steps S2513 through S2543, processing for actually storing a license at the user device 10 and/or the removable recording medium 40 from the administration server 21 is performed.

Specifically, first, the application 4 of the user device 10 requests service data (or a service ID) from the service server 20 (S2513). Thereupon, the service server 20 returns service data (or a service ID) to the user device 10 (S2515).

Next, the request message generating unit 82 of the application 4 generates a license acquisition request message, based on the TID acquired in step S2511, service data, own terminal ID, and saving destination information (media ID, device ID, etc.) for storing (saving) the license accepted at the time of license request reception (S2521), and sends this to the administration server 21 (S2521).

Next, the administration server 21 determines whether or not license acquisition is permissible, based on the saving destination information (e.g., media ID) included in the license acquisition request message that has been received (S2523). This acquisition permissible/non-permissible determination (S2523) confirms whether or not the saving destination information has been revoked, for example. Note that this permissible/non-permissible determination (S2523) can be omitted.

In the event of permitting license acquisition as a result of the acquisition permissible/non-permissible determination, the administration server 21 sends the TID and time stamp to the service server 20 to perform processing for storing the license at the specified saving destination (S2525).

The service server 20 generates license information (license, content key) to be stored in the storing destination such as the user device 10, and sends the license information to the administration server 21 (S2529).

The administration server 21 generates a license acquisition reply message based on the TID and so forth received from the service server 20, adds a time stamp to the license acquisition reply message, and sends to the user device 10 (S2531). The time stamp is generated by the administration server 21 or the user device 10, and we will say that the time stamp generated by the administration server 21 and the user device 10 are both synchronized.

The signature included in the license acquisition request message is a MAC value of data such as, for example, the terminal ID, license information, media ID (or device ID, recorder ID, etc.) time stamp, and so forth, but is not restricted to this example. The completeness of the license acquisition reply message can be verified by this signature.

Upon receiving the license acquisition reply message, the application 4 of the user device 10 transfers this to the copyright management unit 3 (S2533). Note that the application 4 cannot read information included in the license acquisition reply message, such as the "time stamp" for example.

The verification component 85 verifies that the terminal ID of the license acquisition request message received from the application 4 and the terminal ID at the time of sending the license acquisition request message (or of itself) match (S2535).

Next, the verification component 85 verifies that the license acquisition reply message (reply) as to the license acquisition request message which the user device 10 has sent once, has been received once (S2537). For example, the verification component 85 compares the time stamp within the license acquisition reply message and the time stamp which the counter component 84 generated at the time of receiving the license acquisition reply message, and verifies that the time stamp of the counter component 84 is more recent (or newer). Note that with a case of counter information other than a time stamp, such as an incremental counter or the like, the verifying component 85 verifies that its own counter information is smaller than the counter information of the registration reply message, but is not restricted to this example. Note that this verification is authentication performed within the license acquisition session necessary for license acquisition, and can be carried out by verification at just one or the other or the user device 10 side and administration server 21 side (unilateral authentication), so the overall load at the user device 10 and administration server 21 in at least the license acquisition is reduced.

Note that verification of non-redundancy of the message (S2537) is not restricted to verifying of time stamps, and can be carried out by, for example, the verification component 85, following verification of time stamps, referencing a sending flag and reception flag so as to confirm whether or not there has been further sending/reception of messages, thereby verifying non-redundancy. In this case, the sending flag and reception flag are assigned a predetermined storage region.

Also, along with the above message non-redundancy verification (S2537), the verification component 85 also verifies completeness of the license acquisition reply message regarding whether or not the message has been tampered with, based on the signature included in the license acquisition reply message (S2537).

Next, upon verification by the verification component 85 of the user device 10 ending, the component management unit 5 transfers the license acquisition reply message to the usage component 2. The usage component 2 (move component 23 or the like) evaluates the license acquisition conditions based on the component attribute information and transmission type identification information included in the license acquisition reply message, whereupon the saving component 1 stores the license information including the license, content key, and so forth, in the storage region of the saving destination (media ID, device ID, etc.) (S2539). Thus, the user device 10 can play distributed contents corresponding to the license information.

Also, the content correlated to the license is transferred from the service server 20 to the user device 10 or removable storage media 40 which is the saving destination, either along with the license acquisition reply message or separately.

Next, the counter component 84 of the copyright management unit 3 discards the time stamp already stored in the storage region, and updates to the newly-generated time counter (time counter generated at the time of receiving the license acquisition reply message) (S2543). Thus, the series of processing of the license acquisition method with the synchronous / counter information method according to the present embodiment ends.

Also, with the license acquisition method of the synchronous / counter information method, description has been made with reference to an example wherein the counter information is a time stamp, but is not restricted to this example, and can be carried out in a case wherein, for example, the counter information is a counter ensuring increase (or decrease), or the like.

Specifically, for example, in a case of an incremental counter wherein the initial value of the counter information of the user device 10 and administration server 21 is 0, upon the administration server 21 receiving a license acquisition request message, the administration server 21 updates its own counter information from "0" → "1", and sends a license acquisition reply message wherein the counter information is "1".

Next, the verifying component 85 determines the registration reply message to be appropriate since the value of the counter information set in the license acquisition reply message is "1" and the counter information received from the counter component 84 is "0", whereupon the verifying component 85 discards its own counter information "0" already stored in the storage region, and updates to the counter information "1" of the license acquisition reply message.

The acquisition session of the synchronous / counter information method according to the present embodiment described above is restricted to sending/reception of license acquisition request messages and license acquisition reply messages, so the processing load of sending/reception over the network is reduced. Further, in the case of the session ID method, the SID for identifying the acquisition session is generated not at the server side but at the user device 10 side. In the case of the counter information method, there is no need to add counter information at the user device 10 side at the time of sending a license acquisition request message. That is to say, licenses can be acquired with user devices 10 wherein the processing capability of the user device 10 is not very high (cellular phone 10h and so forth).

Note that with the license acquisition method according to the present embodiment shown in Fig. 25, description has been made with reference to an example wherein the user device 10 is the PD 10b, but is not restricted to this example, and can be carried out in the same way with other user devices 10 other than the PD 10b.

Also, with the license acquisition method according to the present embodiment shown in Fig. 25, description has been made with reference to an example wherein license information including a license and content key is included in the license acquisition message and sent, but is not restricted to this example, and an arrangement may be made wherein, for example, the MAC value of the license information (license MAC) is obtained, and the license MAC is included in the license acquisition reply message and sent. In this case, the license and content key are sent separately along with the license acquisition reply message.

### (License acquisition method: asynchronous / session ID method)

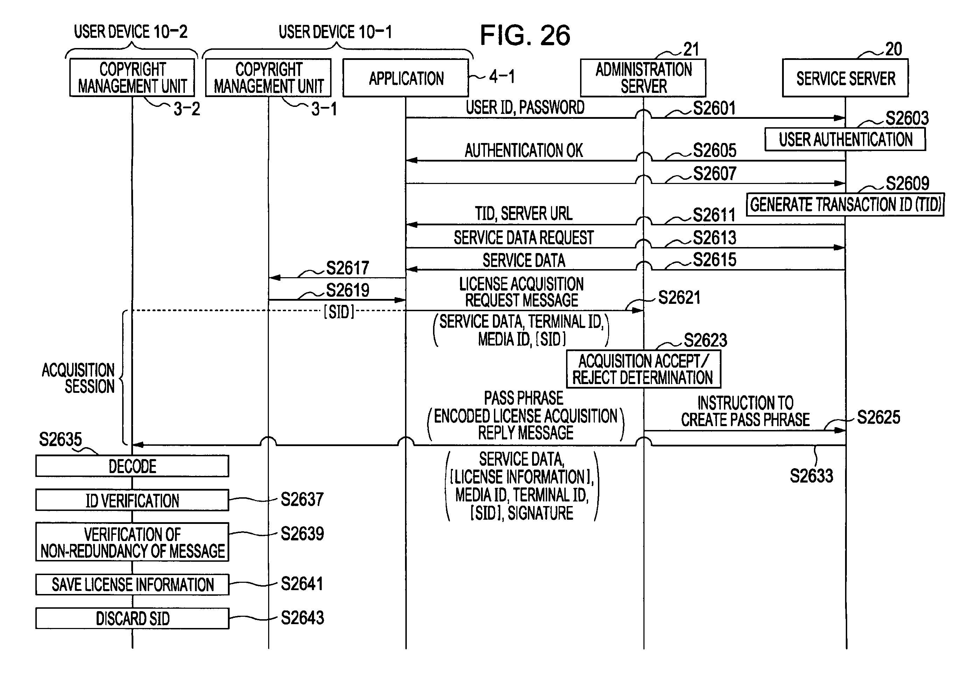

Next, a series of processing of the license acquisition method using the license acquisition system 200 such as described above will be described with reference to Fig. 26. Fig. 26 is a sequence diagram schematically illustrating a license acquisition method of the asynchronous / session ID method.

First, as shown in Fig. 26, the user device 10-1 is connected online (synchronous) with the service server 20 or administration server 21, but the user device 10-2 is offline (asynchronous). The object of the group registration shown in this way in Fig. 26 is to perform license acquisition of an asynchronous user device 10-2.

As shown in Fig. 26, in steps S2601 through S2611, a communication connection is securely established between the application 4 of the user device 10-1 representing the user device 10-2 and the service server 20 via the network 30, and user authentication is performed. Note that the steps S2601 through S2611 are essentially the same as the above-described steps S2401 through S2411 shown in Fig. 24, so detailed description thereof will be omitted.

In the following steps S2613 through S2643, processing for storing a license at the user device 10-2 and/or the removable recording medium 40 is performed. Note that multiple licenses can be stored at once.

Specifically, first, the application 4 of the user device 10-1 requests service data (or a service ID) from the service server 20 (S2613). Thereupon, the service server 20 returns service data (or a service ID) to the user device 10 (S2615).

Next, the application 4 of the user device 10 instructs the copyright management unit 3 to generate a license acquisition request message for requesting a license (S2617).

Upon receiving the license acquisition request message, the ID generating component 83 generates a session ID identifying the acquisition session (or SID). The generated SID is sent to the application 4 (S2619).

Next, the request message generating unit 82 of the application of the user device 10-1 generates a license acquisition request message based on the session ID, TID received in S2611 above, the service data, the terminal ID corresponding to the user device 10-2, and saving destination information (media ID, device ID, etc.) for saving the license that has been accepted at the time of license request reception (S2601), and sends this to the administration server 21 (S2621). Note that the license acquisition request message includes offline (asynchronous) information. Also, while not shown in the drawings, a MAC value obtained from the SID at least may be included in the license acquisition request message.

Note that the terminal ID of the user device 10-2 accepted in step S2601, the device ID, and further the media ID of the removable recording media 40 loaded at the user device 10-2, and so forth, are directly input from the input unit 208 of the user device 10-1 for example, but not restricted to this example.

Next, the administration server 21 determines whether or not license acquisition is permissible, based on the saving destination information (e.g., media ID) included in the license acquisition request message that has been received (S2623). This acquisition permissible/non-permissible determination (S2623) confirms whether or not the saving destination information has been revoked, for example. Note that this permissible/non-permissible determination (S2623) can be omitted.

In the event of permitting acquisition as a result of the acquisition permissible/non-permissible determination, the administration server 21 sends the TID to the service server 20 and also instructs creasing of a pass phrase (S2625).

The service server 20 generates a license acquisition reply message including the session ID received from the user device 10-1 and the MAC value thereof, and further the license information and terminal ID and session ID and so forth thereof. The service server 20 encodes the above license acquisition reply message and converts into a pass phrase.

That is to say, this pass phrase includes the SID that was included in the license acquisition request message, the MAC value thereof, and further the SID set at the time of generating the registration reply message, and a signature. The user device 10-2 side verifies the completeness of the SID that was included in the registration request message, verifies the completeness of the registration reply message (including the SID), and verifies that both SIDs match, thereby verifying non-redundancy of the message, but is not restricted to this example.

Note that an example has been described wherein the MAC value of the SID included in the license acquisition request message is obtained at the service server 20 side, but is not restricted to this example, and may be obtained at the user device 10-1 side, for example. Obtaining at the user device 10-1 side enables the danger of the SID being generated in an unauthorized manner by spoofing the service server 20.

Next, the pass phrase generated as described above is recorded in the removable recording medium 40, or printed on a printing medium in the form of characters, symbols, or the like, for example. As shown in Fig. 26, the copyright management unit 3-2 of the user device 10-2 receives input of the pass phrase (S2633) by way of the removable recording medium 40 or by the user operating the input unit 208 of the user device 10-2 to input the characters, symbols, or the like, printed on a printing medium.

Upon the pass phrase being input (S2633), the verifying component 85 of the user device 10-2 decodes the pass phrase and converts into a license acquisition reply message (S2635).

The verification component 85 verifies that the terminal ID set in the license acquisition request message that has been decoded and its own terminal ID match (S2637).

Next, the verification component 85 of the copyright management unit 3-2 verifies that the license acquisition reply message (reply) as to the license acquisition request message which the user device 10 has sent once, has been received once (S2639). For example, the verification component 85 verifies that the two SIDs within the license acquisition reply message match, as described above. Note that this verification is authentication performed within the license acquisition session necessary for license acquisition, and can be carried out by verification at just one or the other or the user device 10 side and administration server 21 side (unilateral authentication), so the overall load at the user device 10 and administration server 21 in at least the license acquisition is reduced.

Also, at the time of verifying non-redundancy of the message, the verifying component 85 also verifies completeness, regarding whether or not there has been tampering of the license acquisition reply message, based on the signature (S2639).

Note that verification of non-redundancy of the message (S2639) is not restricted to matching of SIDs, and can be carried out by the verifying component 85 by, for example, following verification of matching of the SIDs, referencing a sending flag and reception flag so as to confirm whether or not there has been further sending/reception of messages, thereby verifying non-redundancy.

Next, upon verification by the verifying component 85 of the user device 10-2 ending, the component management unit 5 transfers the license acquisition reply message to the usage component 2. The usage component 2 (move component 23 or the like) evaluates the license acquisition conditions based on the component attribute information and transmission type identification information included in the license acquisition reply message, whereupon the saving component 1 stores the license information including the license, content key, and so forth, in the storage region of the saving destination (media ID, device ID, etc.) (S2641). Thus, the user device 10-2 or removable recording medium 40 can play distributed contents corresponding to the license information.

Also, the content correlated to the license is transferred from the service server 20 to the user device 10-2 or removable storage media 40 which is the license saving destination, separately via the removable storage media 40.

Next, the ID generating component 83 of the copyright management unit 3 discards the session ID (SID) (S2643) generated in step S2619. Thus, the series of processing of the license acquisition method with the asynchronous /session ID method according to the present embodiment ends.

Note that with the license acquisition method shown in Fig. 26, description has been made with reference to an example of performing license acquisition for the offline car audio device 10g or car navigation (not shown.) with the PD 10b shown in Fig. 16A through Fig. 16C, but is not restricted to this example, and can be carried out in the same way with other user devices 10 or removable recording media 40 other than the PD 10b and car audio device 10g.

Also, description has been made with reference to an example wherein the pass phrase is generated by the service server 20 as shown in Fig. 26, but is not restricted to this example. For example, an arrangement may be made wherein the pass phrase is generated by the administration server 21.

### (License acquisition method: asynchronous / counter information method)

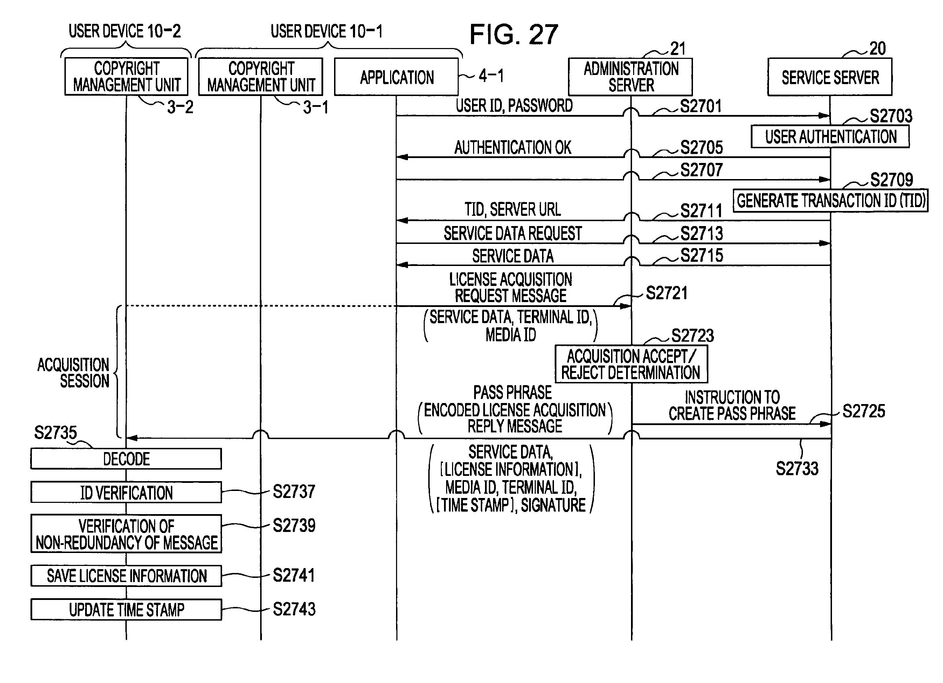

Next, a series of processing of the license acquisition method using the license acquisition system 200 such as described above will be described with reference to Fig. 27. Fig. 27 is a sequence diagram schematically illustrating a license acquisition method of the asynchronous / counter information method.

First, as shown in Fig. 27, the user device 10-1 is connected online (synchronous) with the service server 20 or administration server 21, but the user device 10-2 is offline (asynchronous). The object of the license acquisition shown in this way in Fig. 27 is to perform license acquisition of an asynchronous user device 10-2.

As shown in Fig. 27, in steps S2701 through S2711, a communication connection is securely established between the application 4 of the user device 10-1 representing the user device 10-2 and the service server 20 via the network 30, and user authentication is performed. Note that the steps S2701 through S2711 are essentially the same as the above-described steps S2401 through S2411 shown in Fig. 24, so detailed description thereof will be omitted.

In the following steps S2713 through S2741, processing for storing a license at the user device 10-2 and/or the removable recording medium 40 is performed. Note that multiple licenses can be stored at once.

Specifically, first, the application 4 of the user device 10-1 requests service data (or a service ID) from the service server 20 (S2613). Thereupon, the service server 20 returns service data (or a service ID) to the user device 10 (S2615).

Next, the request message generating unit 82 of the application of the user device 10-1 generates a license acquisition request message based on the TID received in S2711 above, the service data, the terminal ID corresponding to the user device 10-2, and saving destination information (media ID, device ID, etc.) for saving the license that has been accepted at the time of license request reception (S2701), and sends this to the administration server 21 (S2721). Note that the license acquisition request message includes offline (asynchronous) information.

Note that the terminal ID of the user device 10-2 accepted in step S2701, the device ID, and further the media ID of the removable recording media 40 loaded at the user device 10-2, and so forth, are directly input from the input unit 208 of the user device 10-1 for example, but not restricted to this example.

Next, the administration server 21 determines whether or not license acquisition is permissible, based on the saving destination information (e.g., media ID) included in the license acquisition request message that has been received (S2723). This acquisition permissible/non-permissible determination (S2723) confirms whether or not the saving destination information has been revoked, for example. Note that this permissible/non-permissible determination (S2723) can be omitted.

In the event of permitting license acquisition as a result of the acquisition permissible/non-permissible determination, upon confirming that offline information is included in the license acquisition request message, the TID and time stamp are sent to the service server 20, and creating of a pass phrase is instructed (S2725).

The service server 20 generates license information (license, content key) to be stored in the storing destination such as the user device 10, and generates a license acquisition reply message including the license information, saving destination information such as terminal ID, media ID, or the like, and further including a signature. The service server 20 further encodes the above license acquisition reply message and converts into a pass phrase.

Next, the pass phrase generated as described above is recorded in the removable recording medium 40, or printed on a printing medium in the form of characters, symbols, or the like, for example. As shown in Fig. 27, the copyright management unit 3-2 of the user device 10-2 receives input of the pass phrase (S2733) by way of the removable recording medium 40 or by the user operating the input unit 208 of the user device 10-2 to input the characters, symbols, or the like, printed on a printing medium.

Upon the pass phrase being input (S2733), the verifying component 85 of the user device 10-2 decodes the pass phrase and converts into a license acquisition reply message (S2735).

Next, the verification component 85 of the copyright management unit 3-2 verifies that the terminal ID set in the license acquisition request message that has been decoded and its own terminal ID match (S2737).

Next, the verification component 85 of the copyright management unit 3-2 verifies that the license acquisition reply message (reply) as to the license acquisition request message which the user device 10 has sent once, has been received once (S2739). For example, the verification component 85 compares the time stamp within the license acquisition reply message and the time stamp which the counter component 84 generated at the time of receiving the license acquisition reply message, and verifies that the time stamp of the counter component 84 is more recent (or newer).

Also, along with the above message non-redundancy verification, the verification component 85 also verifies completeness of the license acquisition reply message regarding whether or not the message has been tampered with, based on the signature (S2639).

Note that verification of non-redundancy of the message (S2639) is not restricted to verification of time stamps, and can be carried out by the verifying component 85 by, for example, following verification of the time stamps, referencing a sending flag and reception flag so as to confirm whether or not there has been further sending/reception of messages, thereby verifying non-redundancy.

Next, upon verification by the verification component 85 of the user device 10-2 ending, the component management unit 5 transfers the license acquisition reply message to the usage component 2. The usage component 2 (move component 23 or the like) evaluates the license acquisition conditions based on the component attribute information and transmission type identification information included in the license acquisition reply message, whereupon the saving component 1 stores the license information including the license, content key, and so forth, in the storage region of the saving destination (media ID, device ID, etc.) (S2741). Thus, the user device 10-2 or the removable storage media 40 can play distributed contents corresponding to the license information.

Also, the content correlated to the license is transferred from the service server 20 to the user device 10-2 or removable storage media 40 which is the saving destination of the license, separately via removable storage media 40 or the like.

Next, the time counter generated by the counter component 84 of the copyright management unit 3 is discarded. Note that in the event that the counter information is not a time stamp but is counter information such as an (incremental/decremental) counter or the like, following discarding of counter information the counter component 84 updates to the next counter information (S2743). In the same way, following elapsing of a predetermined amount of time for example, the administration server 21 also updates counter information (S2747). Thus, the series of processing of the license acquisition method with the asynchronous /counter information method according to the present embodiment ends.

Note that with the license acquisition method shown in Fig. 26 and Fig. 27, description has been made with reference to an example wherein the user device 10 is the PD 10b and license acquisition is performed for the offline car audio device 10g or car navigation (not shown.) but is not restricted to this example, and can be carried out in the same way with other user devices 10 or removable recording media 40 other than the PD 10b and car audio device 10g.

The acquisition session of the asynchronous / counter information method according to the present embodiment described above requires only sending/reception of license acquisition request messages and pass phrases. Also, even in the event that the user device 10 or removable recording medium 40 is offline, the user device 10 or removable recording medium 40 can acquire licenses, by encoding the registration reply message as a pass phrase. Moreover, the offline user device 10 can securely acquire licensees as long as it has a copyright management unit 3, even without the application 4.

### (About license transfer between user devices 10)

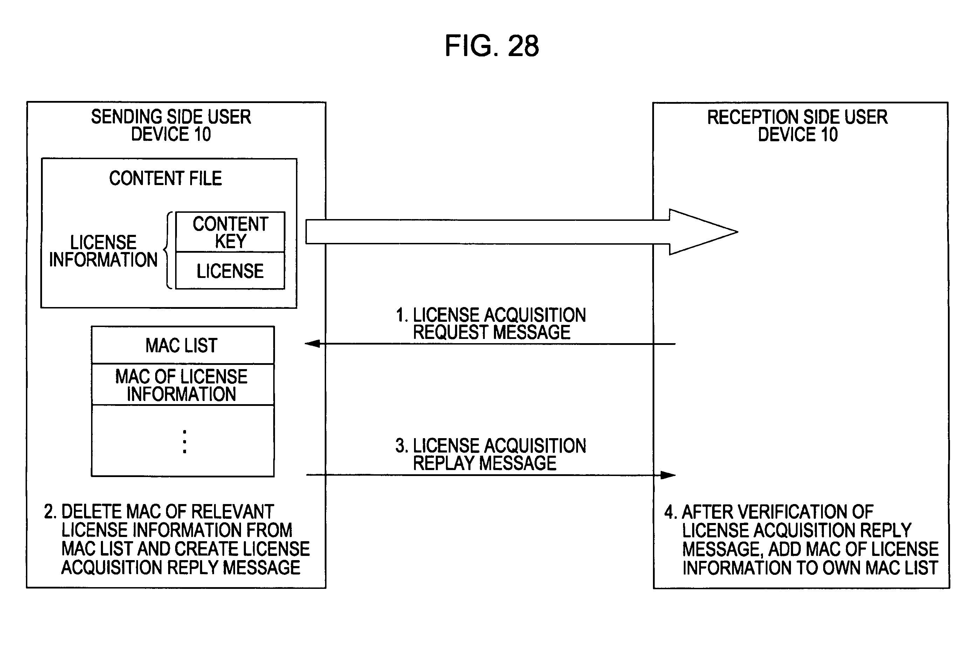

As shown in Fig. 28, a license can be transferred from a sending side user device 10 to a receiving side user device 10. Note that details of the license transfer shown in Fig. 28 are almost the same as the processing for acquiring a license from the server described above, so detailed description will be omitted.

A license acquired form the administration server 21 can be transferred to another user device 10, so binding of licenses can be performed in a more flexible and efficient manner.

That is to say, user devices 10 can mutually exchange contents, licenses, content keys, and so forth, via the removable storage medium 40, without going through the network 30. Also, an arrangement may be made wherein this removable storage medium 40 is inserted into a content vending terminal (not shown.) installed at a storefront or the like, so as to store contents, licenses, etc., purchased according to user operations, in the removable storage medium 40. Thus, the purchased contents and the like can be provided other user device 10 via the removable storage medium 40.

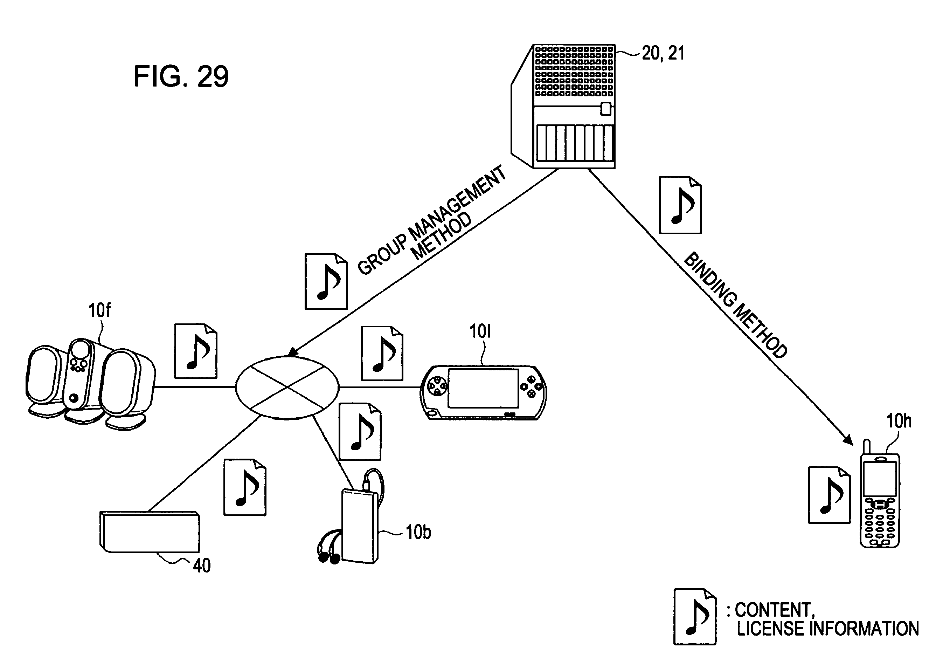

The license acquisition system 200 according to the present embodiment has been described with reference to an example of application of copyright management of a binding method, but is not restricted to this example, and an arrangement may be made of the license acquisition system 200 as shown in Fig. 29 wherein the copyright management of the group management method is applied. Group management method copyright management is a system for group registration of multiple device which each user has in the service server 20 or the administration server 21 by user, and controlling playing of contents at the group-registered devices based on a source ID representing the providing source of the content, and a source ID list.

Note that the above-described series of processing can be performed by dedicated hardware, and can be performed by software. In the event of performing the series of processing by software, a program configuring that software is installed in an information processing device such as a general-purpose computer or microcomputer or the like, and the information processing device is caused to function as the user device 10, service server 20, and administration server 21.

The program can be recorded beforehand in a hard disk drive (HDD) or ROM as recording medium built into a computer.

The program is not restricted to being stored in a hard disk drive, and may be temporarily or permanently stored (recorded) in a removable recording medium such as a flexible disk, CD-ROM (Compact Disc Read Only Memory), MO (Magneto Optical) disk, DVD (Digital Versatile Disc), magnetic disk, semiconductor memory, and so forth.

Note that in addition to installation to a computer from such a removable storage medium, the program may be wirelessly transferred to the computer from a download site via a digital satellite broadcast satellite, or transferred to the computer by cable via a network such as a LAN (Local Area Network) or the Internet, and the computer can install a program transferred in such as way in the built-in HDD.

Now, it should be understood that in the present Description, the processing steps describing the program for causing the computer to perform various types of processing do not necessarily have to be processed in time-sequence following the order laid forth as flowcharts, and include processing executed in parallel or individually (e.g., parallel processing or processing by objects).

Also, the program may be processing by a single computer, or may be processed in a dispersed manner by multiple computers.

While a preferred embodiment has been described above with reference to the attached drawings, the present invention is not restricted to this example. It is apparent that one skilled in the art can conceive various modifications or alterations within the scope of the technical idea laid forth in the Claims, and it should be understood that those also belong as a matter of course to the technical scope of the present invention.

While the above embodiment has been described with reference to an example wherein the application which the user device 10 has is software dedicated for license acquisition, the present invention is not restricted to this example. For example, this still can be carried out in a case wherein the application is software such as a general-purpose Web browser or the like.

While the above embodiment has been described with reference to an example wherein one license is acquired, the present invention is not restricted to this example. For example, this still can be carried out in a case wherein a license is stored in each of the user device 10 and/or removable storage medium 40, or wherein multiple licenses are stored in batch fashion in the user device 10 or removable storage medium 40.

Also, while the above embodiment has been described with reference to an example wherein, in the event that the user device 10 is offline, with the license acquisition method the user device 10 inputs a pass phrase, the present invention is not restricted to this example. For example, this also can be carried out in a case wherein the user device 10 inputs a combination of at least one of characters, symbols, and shapes, such as a one-dimensional barcode or a two-dimensional barcode.

Also, while the above embodiment has been described with reference to an example wherein, with the offline license acquisition method, an offline user device 10-2 inputs the pass phrase from the service server 20 or the administration server 21, the present invention is not restricted to this example. For example, this also can be carried out in a case wherein the online user device 10-1 inputs the pass phrase. Note that in this case, the user device 10-2 is not connected to the network 30 which is capable of accessing a server such as the administration server 21, an arrangement can be made wherein the user device 10-2 is network-connected locally with the user device 10-1, and the license acquisition reply message obtained by decoding the pass phrase is transferred to the user device 10-2 from the user device 10-1, or following verification of non-redundancy of the message and so forth being performed at the user device 10-1, data such as license information and the like is transferred to the user device 10-2, such that the license information is saved at the user device 10-2 side.

### <Third Embodiment>

Next, a point-in-time setting device and point-in-time setting method according to a third embodiment of the present invention will be described.

### (About point-in-time setting system 300)

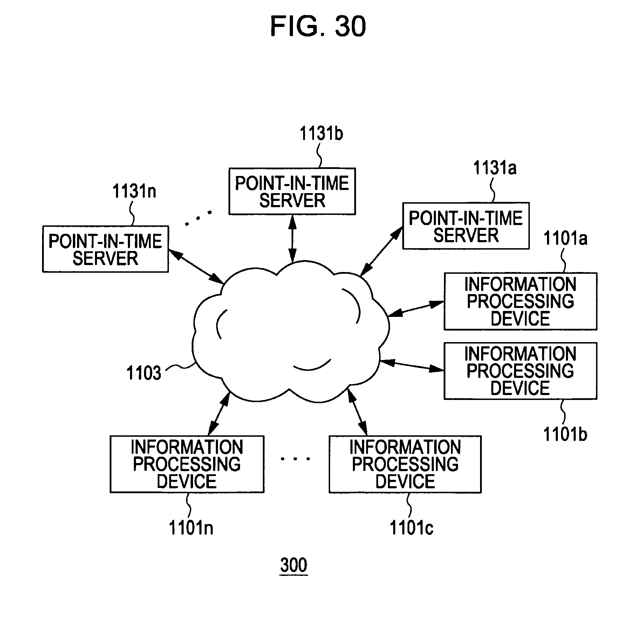

First, the overall configuration of a point-in-time setting system according to the present embodiment will be described with reference to Fig. 30. Note that Fig. 30 is a block diagram schematically illustrating the overall configuration of the point-in-time setting system 300 according to the present embodiment.

As shown in Fig. 30, the point-in-time setting system 300 according to the present embodiment is configured of at least multiple information processing devices 1101a, 1101b, ···, 1101n (hereafter may be collectively referred to as "information processing device 1101", point-in-time servers 1131a, 1131b, ···, and a network 1103 for mutually connecting these devices.

The information processing device 1101 has communication functions enabling connecting to the network 1103 and sending/reception data, and having a point-in-time function for keeping time within the information processing device 1101, which will be described later.

More specifically, the information processing device 1101 can be configured of, for example, a computer device such as a personal computer (regardless of whether notebook type of desktop type), a PDA (Personal Digital Assistant), a portable video player/recorder, a portable audio player/recorder such as an IC recorder, an imaging device such as a digital camera or a video recorder or the like, a home gaming console, a VCR, a CD or DVD recorder/player, a radio device, a cellular telephone, a PHS, an intelligent home appliance, and so forth, for example.

Also, the information processing device 1101 is not restricted to the above functions, and may be capable of recording/playing content data such as video or audio stored in a storage device equivalent to a built-in hard disk drive, for example.

Note that the information processing device 1101 is capable of receiving distribution of the above-mentioned content data from a distribution server (not shown.) connected to the network 1103, and may play distributed content data.

The point-in-time server (e.g., point-in-time device.) 1131 outputs point-in-time information for setting point-in-time, in response to requests from clients such as an information processing device 1101. The point-in-time information is information wherein an accurate and reliable point-in-time has been set; for example, Japanese Standard Time.

The point-in-time server 1131 is a device capable of keeping accurate time in the same way as with an atomic clock, for example. Note that in the event that multiple point-in-time servers 1131 (1131a, 1131b, ···) exist, point-in-time information may be shared among the point-in-time servers 1131 via the network 1103 such that the point-in-time is synchronized.

the information processing device 1101 accesses the point-in-time server 1131 via the network 1103, and upon receiving the point-in-time output form the point-in-time server 1131, the information processing device 1101 sets the point-in-time of itself based on the point-in-time information.

The above-mentioned access collectively refers to information processing for processing information via the network or within an own device, such as using the system, connecting to a server, referencing files, saving files, deleting files, changing files, and so forth, for example.

The above point-in-time may be in a year-month-day format such as "YYYYMMDD" for example, or may be in a year-month-day-hour format such as "YYYYMMDDhh", or may be in a year-month-day-hour-minute-second format such as "YYYYMMDDhhmmss".

The point-in-time that the information processing device 1101 manages is important information used for confirming whether or not the valid period described in licenses, which serve as material for determining whether or not playing of content data is permissible, has expired.

The network 1103 is typically a public network such as the Internet to which connection is made by way of ADSL (Asymmetric Digital Subscriber Line) or FTTH (Fiber To The Home) or a like method, but also includes closed networks such as WAN, LAN, IP-VPN, and so forth. Also, connection media is not restricted to cable or wireless, such as optical fiber cables using FDDI (Fiber Distributed Data Interface) or the like, coaxial cables or twisted pair cables using Ethernet (a registered trademark), wireless confirming to IEEE 802.11b or the like, and also includes satellite communication networks.

With a point-in-time setting system 300 having such a configuration, the information processing device 1101 refers a valid period set in accordance with its own point-in-time precision information, a predetermined time intervals or whenever downloading content data or the like for example, and in the event that the valid period has expired, point-in-time information is received from the point-in-time server 1131, whereby the time which the information processing device 1101 keeps can be set to a reliable point-in-time. Note that the point-in-time precision and valid period will be described later.

### (About the information processing device 1101)

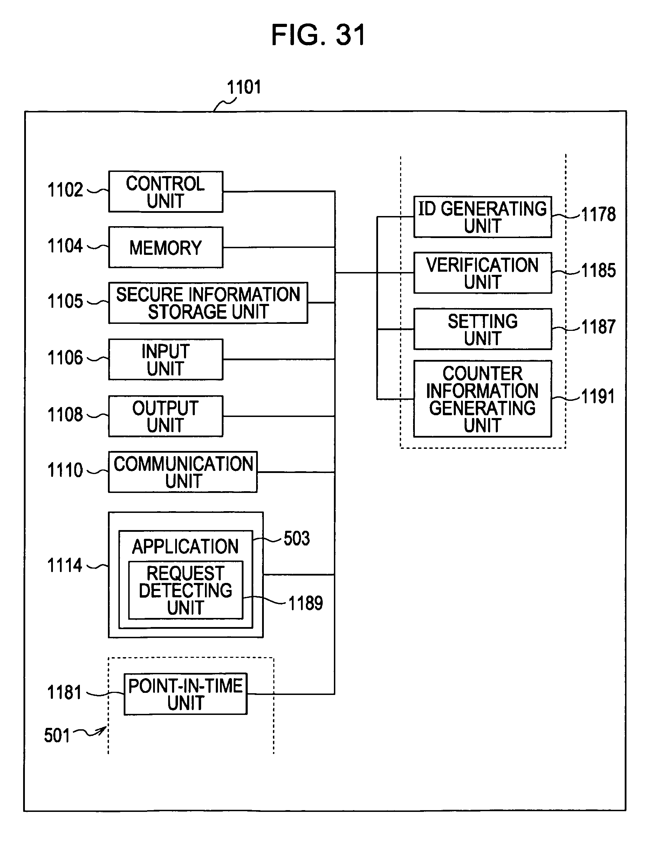

Next, the configuration of the information processing device 1101 according to the present embodiment will be described in detail with reference to Fig. 31. Fig. 31 is a block diagram schematically illustrating the configuration of the information processing device 1101 according to the present embodiment.

As shown in Fig. 31, the information processing device 1101 includes, for example, a control unit 1102, memory 1104, a secure information storage unit 1105, an input unit 1106, an output unit 1108, a communication unit 1110, a storage device 1114, and a point-in-time managing unit 501.

A control unit (or CPU) 1102 functions as a computation processing device and control device, and can control processing of each unit within the information processing device 1101. Also, the control unit 1102 sets the point-in-time from the point-in-time server 1131 to a point-in-time unit 1181.

The memory 1104 is configured of RAM, ROM, cache memory, or the like, for example, and has functions for temporarily storing various types of data relating to processing at the control unit 1102, operating programs for the control unit 1102, and so forth.

The secure information storage unit 1105 is storage means for storing information regarding which confidentiality and completeness need to be ensured (secure information). Specifically, the secure information storage unit 1105 is non-volatile memory of an anti-tampering structure for example, but is not restricted to this example.

Also, anti-tampering structure means a device which has a circuit/arrangement which, for example, makes difficult LSI analysis by the user, analysis of the operations thereof, and so forth, whereby tampering with internal data and counterfeiting can be prevented.

Note that the secure information stored in the secure information storage unit 1105 is, for example, point-in-time precision information and setting condition information, but is not restricted to this example, and the setting condition information for example can be stored in the memory 1104. In this case, the setting condition information is stored along with the MAC of the setting condition information.

The input unit 1106 is configured of operating means such as a mouse, keyboard, touch panel, buttons switches, levers, and so forth, for example, and an input control circuit for generating input signals to be output to the control unit 1102, and so forth. The user of the information processing device 1101 operates this input unit 1106 so as to input various types of data to the information processing device 1101 and instruct processing operations and so forth.

The output unit 1108 is configured of a display device such as a CRT display device, liquid crystal display (LCD) device, lamps, and so forth, for example, and audio output device such as speakers or the like. This output unit 1108 can output content data being played, for example.

The communication unit 1110 is a communication interface configured of, for example, a communication line, communication circuit, communication device, and so forth. This communication unit 1110 can exchange various types of data such as point-in-time information, control signals, and so forth, among other external devices such as information processing devices 1101 and point-in-time servers 1131 and so forth, via the network 1103.

The storage device 1114 is a device for storing data, and is configured of, for example, a hard disk drive, flash memory, and so forth, and can store various types of data such as programs, content data, and so forth.

Also, this storage device 1114 stores device IDs corresponding to the information processing device 1101 itself (e.g., terminal ID), for example. The device ID is an identifier uniquely assigned to individual devices such as the information processing device 1101 and so forth, whereby the information processing device 1101 can be uniquely identified by this device ID.

Also, the storage device 1114 has installed therein an application 503. This application 503 has user interface functions.

Specifically, the application 503 accepts requests for point-in-time setting from users, displays various types of operating screens on the display device, and so forth, as a user interface function.

Also, the application 503 has a request detecting unit 1189 as a function for detecting a request for point-in-time information for point-in-time setting.

The request detecting unit 1189 cooperates with the user information function to detect requests for point-in-time information directly from the user, requesting point-in-time information by itself at predetermined time intervals to so to detect the requests, and detect requests for point-in-time information in the event that the valid period described in setting condition information is referenced and found to have elapsed, for example, but is not restricted to these examples.

While description will be made with reference to an example wherein the application 503 according to the present embodiment is a program dedicated for point-in-time setting, the present invention is not restricted to this example. For example, this can be carried out in a case wherein the application 503 is a program or the like such as a general-purpose Web browser or the like.

The point-in-time management unit 501 has, as shown in Fig. 31, an ID generating unit 1178, point-in-time unit 1181, verifying unit 1185, setting unit 1187, and counter information generating unit 1191.

The ID generating unit 1178 generates a session ID for identifying a point-in-time setting session which is a series of exchanges for sending a message to the point-in-time server 113 requesting point-in-time information for point-in-time setting, and receiving a reply message thereto.

Note that the ID generating unit 1178 may generate random numbers for example so that the same session ID is not generated repeatedly, and take the random numbers as session IDs, but is not restricted to this example.

The point-in-time unit 1181 generates and outputs point-in-time. Note that in the event that the power source such as a battery or the like for keeping the point-in-time is cut off, the point-in-time unit 1181 sets a flag indicating that the point-in-time is unreliable and inaccurate to storage region such as a register (not shown.) built into the point-in-time unit 1181 or memory 1104 or the like, or changes the point-in-time precision information into that of the effect that the point-in-time is unreliable and inaccurate, but is not restricted to this example.

The verifying unit 1185 obtains the difference time between a message sending point-in-time and a message reception point-in-time based on the point-in-time output from the point-in-time unit 1181, and compares the magnitude of the difference time with a tolerance time (or RTT, etc.). The verifying unit 1185 verifies whether or not setting of the point-in-time is permissible or not as a result of this comparison, based on the point-in-time information sent from the point-in-time server 1131.

In the event that determination is made that point-in-time setting is permissible as a result of the verification performed by the verifying unit 1185, the setting unit 1187 sets the point-in-time described in the point-in-time information in the point-in-time unit 1181, and also stores the setting condition information in the secure information storage unit 1105, thereby updating the setting condition information.

The counter information generating unit 1191 generates counter information, acquires the generated counter information, and outputs externally. For example, the counter information generating unit 1191 generates counter information which increases by one like "1, 2, 3, ···" (incremental), and generates counter information which decreases by one like "90, 89, 88, ···" (decremental). Note that the generated counter information is stored in storage means such as a cache of the information processing device 1101, until being updated to the next counter information.

Also, the counter information generating unit 1191 is not restricted to cases of generating the above-described incremental counter information or decremental counter information, and can also refer the point-in-time generated by the point-in-time unit 1181, and generate a time stamp in a "YYYYMMDDhhmmss" format, such as "Year 2005, Month 8, Date 22, hour 13, minute 50, second 15", as counter information. Note that the generated time stamp is also stored until being updated by the next time stamp.

### (About the point-in-time server 1131)

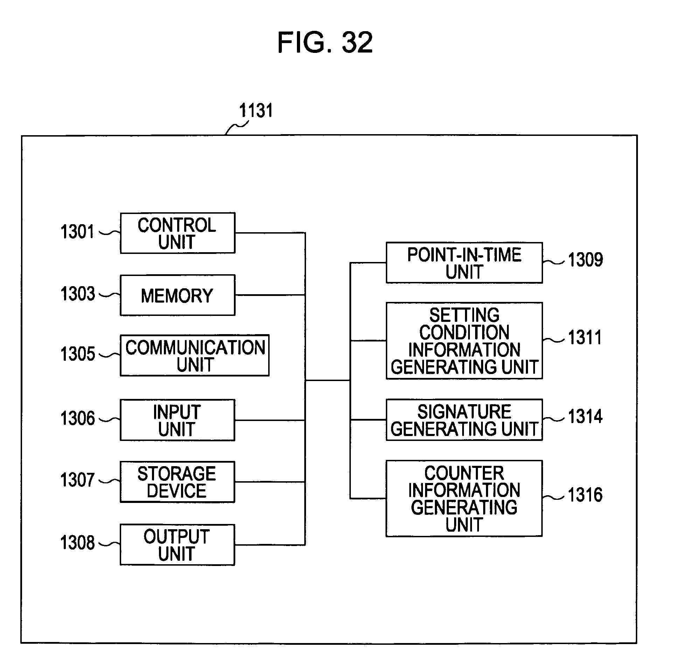

Next, the point-in-time server 1131 according to the present embodiment will be described with reference to Fig. 32. Note that Fig. 32 is a block diagram illustrating the schematic configuration of the point-in-time server according to the present embodiment.

As shown in Fig. 32, the point-in-time server 1131 includes, for example, a control unit (or CPU, etc.) 1301, memory 1303, input unit 1306, storage device 1307, output unit 1308, communication unit 1305, point-in-time unit 1309, setting condition information generating unit 1311, signature generating unit 1314, and counter information generating unit 1316.

The control unit 1301 functions as a computation processing device and control device, and can control processing of each unit within the point-in-time server 1131. Also, the memory 1303 is configured of RAM, ROM, cache memory, or the like, for example, and has functions for temporarily storing various types of data relating to processing at the control unit 1301, operating programs for the control unit 1301, and so forth.

The communication unit 1305 is a communication interface configured of, for example, a communication line, communication circuit, communication device, and so forth. This communication unit 1305 can exchange point-in-time information, various types of control signals, and so forth, among other external devices such as information processing devices 1101 and so forth, via the network 1103.

The storage device 1307 is a device for storing data, and is configured of a hard disk drive for example, and can store various types of data such as programs and so forth. Also, the storage device 1307 stores a setting condition information table made up of tolerance time or valid period or the like, in order to generate setting condition information, for example. This setting condition information table will be described later.

The point-in-time unit 1309 generates and outputs accurate point-in-time information. Accurate point-in-time means point-in-time which matches a standard point-in-time output from an atomic clock or the like, for example. That is to say, the point-in-time unit 1309 constantly outputs point-in-time information which matches the standard point-in-time.

Upon receiving a request for point-in-time information, the setting condition information generating unit 1311 generates setting condition information. The setting condition information is configured of, for example, tolerance time (or time limit) indicating the range of tolerance for point-in-time setting based on the point-in-time information, and limit (valid period) indicating the validity of the point-in-time set in the information processing device 1101, but is not restricted to this example.

Also, the setting condition information generating unit 1311 generates setting condition information by referencing the setting condition information table stored in the storage device 1307, which will be described later in detail.

The signature generating unit 1314 generates a signature by obtaining the MAC value of the terminal ID, setting condition information, point-in-time information, and session ID (or counter information), but is not restricted to this example.

The counter information generating unit 1316 generates counter information, but details thereof are essentially the same as those of the above-described counter information generating unit 1191, so description will be omitted.

### (About Data)

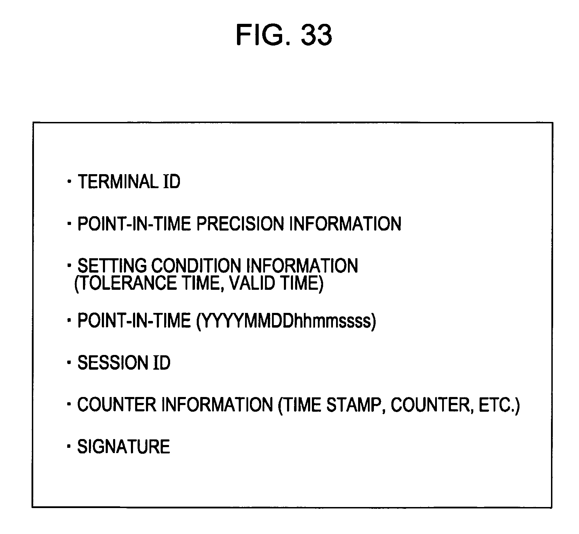

Now, primary data used in the point-in-time setting system 300 according to the present embodiment will be briefly described with reference to Fig. 33.
- "Terminal ID" is an ID for identifying a requesting information processing device 1101 requesting point-in-time information to the point-in-time server 1131, for example.
- "Point-in-time precision information" is information indicating the precision of the point-in-time output from the point-in-time unit 1181 of the information processing device 1101. The precision of the point-in-time is taken into consideration regarding the configuration of the point-in-time unit 1181 and security. For example, in the event that the point-in-time unit 1181 has anti-tampering characteristic wherein tampering with the point-in-time is difficult, the point-in-time precision is high.
- "Setting condition information" is configured of tolerance time and valid period, for example. The time from requesting point-in-time information till receiving the point-in-time information must be within the tolerance time. Also, after the valid period elapses the point-in-time of the information processing device 1101 is invalidated, and the information processing device 1101 needs to set its own point-in-time from the point-in-time server 113 anew, based on the point-in-time information.
- "Session ID" is an ID for identifying a session such as a point-in-time session or the like for ensuring non-redundancy of message sending/reception. While a session is live, the session ID is held securely so as to keep from being tampered by a third party, and is discarded at the time of the session ending.
- "Counter information" is information such as a counter which is incremented to ensure non-redundancy of message sending/reception, a time stamp, or the like. This counter information also needs to be held securely so as to keep from being tampered by a third party.
- "Signature" is signature data, obtained based on the terminal ID, setting condition information, point-in-time information, and session ID and so forth, for example. While such data is primarily used, the point-in-time setting system 300 according to the present embodiment is not restricted to just the data shown in Fig. 33, and may be carried out using other data as well.

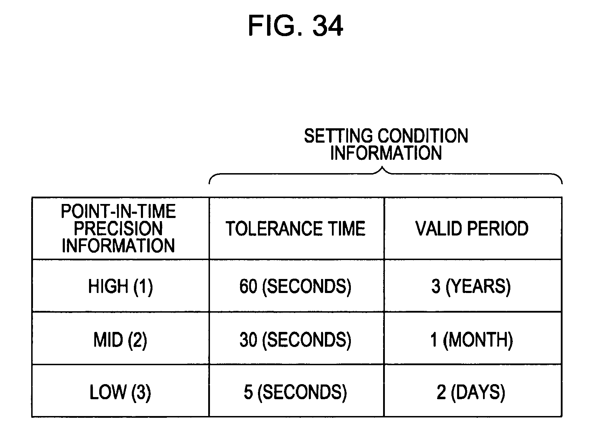

Next, the setting condition information table according to the present embodiment will be described with reference to Fig. 34. Fig. 34 is an explanatory diagram illustrating an example of the schematic configuration of a setting condition information table according to the present embodiment.

As shown in Fig. 34, the setting condition information table is configured of at least "point-in-time precision information", "tolerance time", and "valid period". Note that the above setting condition information is configured of a set of the tolerance time and valid period.

As shown in Fig. 34, the point-in-time precision information is "high (1)", "mid (2)", and "low (3)" from high order in point-in-time precision to low, for example. The point-in-time precision information indicates how high the point-in-time precision is by the numerical value in the above ().

If the point-in-time precision is high, this ensures that accurate time is being kept and a point-in-time which is reliable can be ensured for a long time, so the tolerance time and valid period is given preferential treatment. For example, as shown in Fig. 34, it can be found that in the event that the point-in-time precision information is "high", the tolerance time is 60 (seconds) and the valid period is 3 (years), and accordingly is valid for the longest time.

The setting condition information generating unit 1311 makes reference to the setting condition information table shown in Fig. 34 based on the point-in-time precision information from the information processing device 1101, and generates setting condition information. Note that the setting condition information generating unit 1311 generates setting condition information by referencing the setting condition information table based on point-in-time precision information, but is not restricted to this example, and the setting condition information generating unit 1311 can, for example, further extend/shorten the tolerance time and/or valid period obtained making reference to the setting condition information table based on the point-in-time precision information, in accordance with the height of point-in-time precision and keeping time of the information processing device 1101. For example, in the event that the point-in-time precision information of the information processing device 1101 is "mid", and the period (keeping period) for "mid" is 60 days, the tolerance time (30 (seconds)) and valid period (1 (month)) obtained from the setting condition information table may be further extended to get condition setting information wherein the tolerance time is (40 (seconds)) and valid period (2 (months)). That is to say, the setting condition information generating unit 1311 can make reference to the setting condition information table corresponding to the point-in-time precision information and the period thereof, and dynamically change the tolerance time and/or valid period and generate setting condition information accordingly.

### (Point-in-time setting method, session ID method)

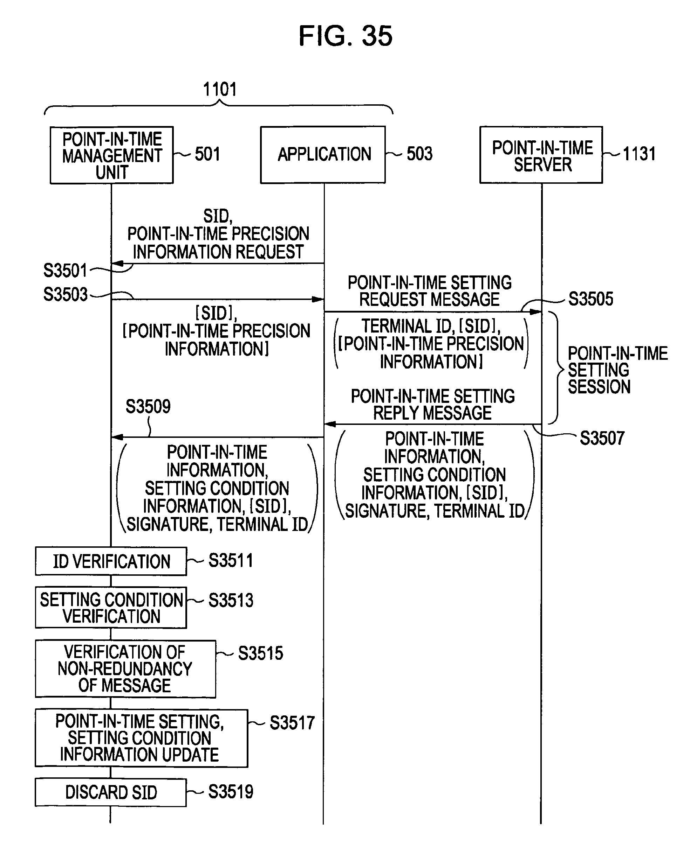

Next, the point-in-time setting method with the session ID method according to the present embodiment will be described with reference to Fig. 35. Fig. 35 is a sequence diagram schematically illustrating the processing of the point-in-time setting method with the session ID method according to the present embodiment.

The point-in-time setting method according to the present embodiment is processing carried out between the information processing device 1101 and the point-in-time server 1131.

As shown in Fig. 35, first, upon the request detecting unit 1189 of the application 503 detecting a point-in-time information request due to a reason such as a predetermined time or valid period having elapsed, a session ID (SID) for acquiring point-in-time information and point-in-time precision information is requested to the point-in-time management unit 501 (S3501).
Next, the ID generating unit 1178 of the point-in-time management unit 501 generates a session ID (SID). The generated SID and the point-in-time precision information stored in the secure information 105 are sent to the application 503 (S3503). Note that the SID which the ID generating unit 1178 generates may be a random number which is randomly generated for example, but is not restricted to this example.

We will say that the data within the [ ] in Fig. 35 and so forth can be read only by the point-in-time management unit 501 of the information processing device 1101 and the point-in-time server 1131, by encryption/decryption with a key such as AES-CBC or the like. For example, with the [SID] and [point-in-time precision information] shown in step S3503, only the point-in-time management unit 501 of the information processing device 1101 and the point-in-time server 1131 can read the SID and point-in-time precision information.

Next, the application 503 of the information processing device 1101 generates a point-in-time setting request message based on the session ID and point-in-time precision information acquired in step s3503, and sends this to the point-in-time server 1131 (S3505). The terminal ID and so forth included in the point-in-time setting request message are generated by the information processing device 1101.

Note that the verifying unit 1185 of the information processing device 1101 acquires a point-in-time T₁ from the point-in-time unit 1181 at the time of sending the point-in-time setting request message. For example, the verifying unit 1185 of the information processing device 1101 acquires "Year 2005, Month 8, Date 22, hour 18, minute 15, second 10.015", as the point-in-time T₁.

The setting condition information generating unit 1311 of the point-in-time server 1131 references the setting condition information table based on the point-in-time precision information set in the point-in-time setting request message, and generates setting condition information. Next, the signature generating unit 1314 obtains a MAC value from the point-in-time information output from the point-in-time unit 1309 and the setting condition information and SID and terminal ID, and generates a signature.

Further, the control unit 1301 creates a point-in-time setting reply message including the setting condition information, session ID received from the information processing device 1101, the point-in-time information and the signature, and sends this to the requesting information processing device 1101 (S3507). Note that the signature is the MAC value of, for example, the setting condition information, SID, point-in-time information, and terminal ID, but is not restricted to this example.

Further, the verifying unit 1185 of the information processing device 1101 acquires a point-in-time T₂ from the point-in-time unit 1181 at the time of receiving the point-in-time setting reply message, in the same way as with the time of sending the point-in-time setting request message. For example, the verifying unit 1185 of the information processing device 1101 acquires "Year 2005, Month 8, Date 22, hour 18, minute 17, second 11.015", as the point-in-time T₂.

Upon receiving the above point-in-time setting reply message, the application 503 of the information processing device 1101 transfers this to the point-in-time management unit 501 without change (S3509). Note that the application 503 cannot read information included in the point-in-time setting reply message such as "SID", for example.

Next, upon the point-in-time management unit 501 receiving data from the application 503 (S3509), the verifying unit 1185 verifies that the terminal ID of the received point-in-time setting reply message and the terminal ID at the time of sending the point-in-time setting request message (or own terminal ID) match (S3511).

Next, the verifying unit 1185 references the setting condition information set in the received point-in-time setting reply message, and verifies whether or not setting of the point-in-time is permissible (S3513). The verifying unit 1185 obtains the difference time from the point-in-time T₁ when the point-in-time setting request message was sent to the point-in-time T₂ when the point-in-time setting reply message was received, and compares the difference time thereof with the tolerance time in the setting condition information, thereby determining whether or not point-in-time setting is permissible (S3513).

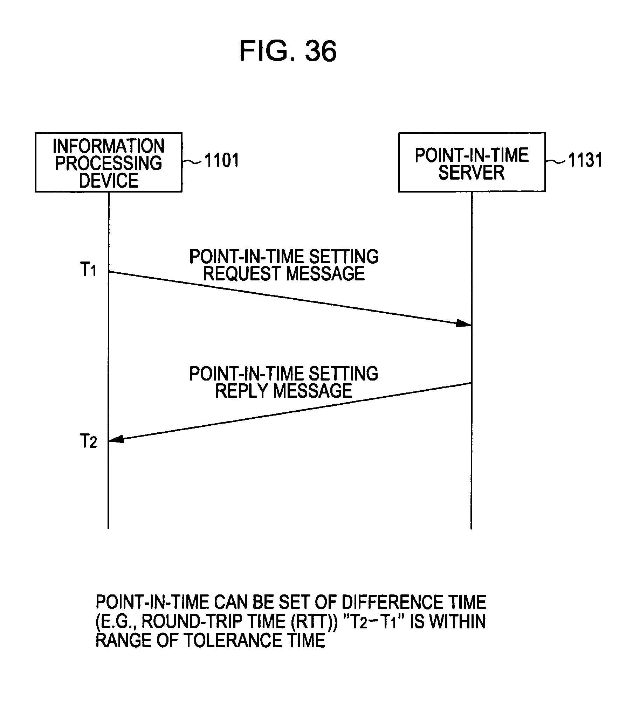

Now, the difference time according to the present embodiment will be described with reference to Fig. 36. Fig. 36 is an explanatory diagram schematically illustrating time difference according to the present embodiment.

As shown in Fig. 36, we will say that the point-in-time at which the point-in-time setting request message was sent from the information processing device 1101 is point-in-time T₁.

Upon receiving this point-in-time setting request message, the point-in-time server 1131 generates a point-in-time setting reply message including the point-in-time information and setting condition information and so forth, and sends this to the information processing device 1101.

As shown in Fig. 36, we will say that the point-in-time at which the information processing device 1101 receives the point-in-time setting reply message sent from the point-in-time server 1131 is point-in-time T₂.

Accordingly, the difference time is a time obtained by subtracting the point-in-time T₁ from point-in-time T₂ (point-in-time T₂ - point-in-time T₂).

As shown in Fig. 35, the verifying unit 1185 verifies that the obtained difference time is within the range of the tolerance time in the setting condition information (S3513), and in the event that this is within the range of the tolerance time, the verifying unit 1185 verifies that reception of the point-in-time setting reply message (reply) as to the point-in-time setting request message which the information processing device 1101 sent once is once (S3515). For example, the verifying unit 1185 verifies that the received SID and the SID generated by the ID generating unit 1178 at the time of sending the point-in-time setting request message agree.

Note that verification of non-redundancy of the message (S3515) is not restricted to verification of SIDs, and can be carried out by the verifying unit 1185 by, for example, following verification of the SIDs, referencing a sending flag and reception flag so as to confirm whether or not there has been further sending/reception of messages, thereby verifying non-redundancy.

Also, along with the above message non-redundancy verification (S3515), the verifying unit 1185 also verifies completeness of a point-in-time setting reply message regarding whether or not the message has been tampered with, based on the signature included in the point-in-time setting reply message (S3515).

Next, in the event that verification by the verifying unit 1185 has ended and determination is made that point-in-time setting is permissible, the setting unit 1187 sets the point-in-time of the point-in-time unit 1181 of the information processing unit 1101 based on the point-in-time information, and updates the setting condition information already stored in the secure information storage unit 1105 or the like to the setting condition information set in the point-in-time setting reply message (S3517).

Next, the verifying unit 1185 and ID generating unit 1178 discard the already-generated session ID (SID) (S3519). This ends the series of processing of the point-in-time setting method with the session ID method according to the present embodiment.

### (Point-in-time setting method, counter information method)

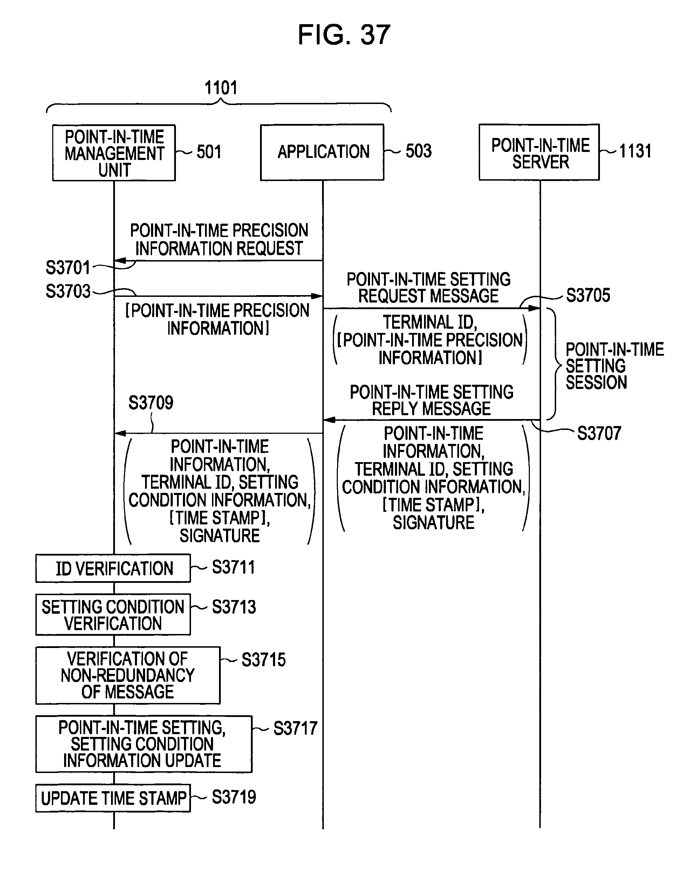

Next, the point-in-time setting method with the counter information method according to the present embodiment will be described with reference to Fig. 37. Fig. 37 is a sequence diagram schematically illustrating the processing of the point-in-time setting method with the counter information method according to the present embodiment.

The point-in-time setting method according to the present embodiment is processing carried out between the information processing device 1101 and the point-in-time server 1131.

As shown in Fig. 37, first, upon the request detecting unit 1189 of the application 503 detecting a point-in-time information request due to a reason such as a predetermined time or valid period having elapsed, in order to acquire point-in-time information, point-in-time precision information is requested to the point-in-time management unit 501 (S3701).
Next, the counter information generating unit 1191 of the point-in-time management unit 501 sends the point-in-time precision information stored in the secure information storage unit 1105 to the application 503 (S3703).

We will say that the data within the [ ] in Fig. 37 and so forth can be read only by the point-in-time management unit 501 of the information processing device 1101 and the point-in-time server 1131, by encryption/decryption with a key such as AES-CBC or the like. For example, with the [point-in-time precision information] shown in step S3703, only the point-in-time management unit 501 of the information processing device 1101 and the point-in-time server 1131 can read the point-in-time precision information by decryption thereof.

Next, the application 503 of the information processing device 1101 generates a point-in-time setting request message based on the point-in-time precision information acquired in step S3703, and sends this to the point-in-time server 1131 (S3705). The terminal ID and so forth included in the point-in-time setting request message are generated by the information processing device 1101.

The setting condition information generating unit 1311 of the point-in-time server 1131 references the setting condition information table based on the point-in-time precision information set in the point-in-time setting request message, and generates setting condition information.

Next, the counter information generating unit 1316 of the point-in-time server 1131 generates a time stamp. Next, the signature generating unit 1314 obtains a MAC value from the point-in-time information output from the point-in-time unit 1309 and the setting condition information and the time stamp the and terminal ID, and generates a signature.

The time stamp is generated by the point-in-time server 1131 or the information processing device 1101, and we will say that the time stamp generated by the point-in-time server 1131 and the information processing device 1101 are both synchronized.

Further, the control unit 1301 of the point-in-time server 1131 creates a point-in-time setting reply message including the setting condition information, the time stamp, the point-in-time information, the terminal ID received from the information processing device 1101, and the signature, and sends this to the requesting information processing device 1101 (S3707). Note that the signature is the MAC value of, for example, the setting condition information, time stamp, point-in-time information, and terminal ID, but is not restricted to this example.

Upon receiving the above point-in-time setting reply message, the application 503 of the information processing device 1101 transfers this to the point-in-time management unit 501 without change (S3709). Note that the application 503 cannot read information included in the point-in-time setting reply message such as "time stamp", for example.

Next, upon the point-in-time management unit 501 receiving data from the application 503 (S3709), the verifying unit 1185 verifies that the terminal ID of the received point-in-time setting reply message and the terminal ID at the time of sending the point-in-time setting request message (or own terminal ID) match (S3711).

Next, the verifying unit 1185 references the setting condition information set in the received point-in-time setting reply message, and verifies whether or not setting of the point-in-time is permissible (S3713). Note that the verification processing (S3713) by the verifying unit 1185 is essentially the same as the above verification processing (S3513) by the verifying unit 1185, so detailed description thereof will be omitted.

As shown in Fig. 35, the verifying unit 1185 verifies that the obtained difference time is within the range of the tolerance time in the setting condition information (S3713), and in the event that this is within the range of the tolerance time, the verifying unit 1185 then verifies that reception of the point-in-time setting reply message (reply) as to the point-in-time setting request message which the information processing device 1101 sent once is once (S3715). For example, the verifying unit 1185 compares the time stamp within the point-in-time setting reply message with the time stamp received from the counter information generating unit 1191 at the time of receiving the point-in-time setting reply message, and verifies that the time stamp of the counter information generating unit 1191 is more recent (or newer).

Note that in the case of counter information other than a time stamp, such as an incremental counter or the like, for example, the verifying unit 1185 verifies that the counter information of the counter information generating unit 1191 is smaller than the counter information in the point-in-time setting reply message, but is not restricted to this example.

Note that verification of non-redundancy of the message (S3715) is not restricted to verification of time stamps, and can be carried out by the verifying unit 1185 by, for example, following verification of the time stamps, referencing a sending flag and reception flag so as to confirm whether or not there has been further sending/reception of messages, thereby verifying non-redundancy.

Also, along with the above message non-redundancy verification (S3715), the verifying unit 1185 also verifies completeness of point-in-time setting reply message regarding whether or not the message has been tampered with, based on the signature included in the message (S3715).

Next, in the event that verification by the verifying unit 1185 has ended and determination is made that point-in-time setting is permissible, the setting unit 1187 sets the point-in-time of the point-in-time unit 1181 of the information processing unit 1101 based on the point-in-time information, and updates the setting condition information already stored in the secure information storage unit 1105 or the like to the setting condition information set in the point-in-time setting reply message (S3717).

Next, the verifying unit 1185 and counter information generating unit 1191 discard the already-generated time stamp. Further, the counter information generating unit 1191 stores the time stamp generated at the time of receiving the point-in-time setting reply message in the storage region, thereby updating the already-stored time stamp (S3719).

Note that in the event that the counter information is not a time stamp but is counter information such as an (incremental/decremental) counter or the like, following discarding of counter information by the verifying unit 1185 and counter information generating unit 1191, the counter information generating unit 1191 updates the counter information already stored in the storage region to the next counter information (e.g., counter information set in the point-in-time setting reply message).

Specifically, for example, in a case of an incremental counter wherein the initial value of the counter information of the counter information generating unit 1191 and the counter information generating unit 1316 of the point-in-time server 1131 is 0, upon the point-in-time server 1131 receiving a point-in-time setting request message, the point-in-time server 1131 updates its own counter information from "0" → "1", and sends a license acquisition reply message wherein the counter information is "1".

Next, the verifying unit 1185 determines the point-in-time setting reply message to have non-redundancy ensured since the value of the counter information set in the point-in-time setting reply message is "1" and the counter information received from the counter information generating unit 1191 is "0", whereupon the verifying unit 1185 discards its own counter information "0" already stored in the storage region, and updates to the counter information "1" of the point-in-time setting reply message. This ends the series of processing of the point-in-time setting method with the counter information method according to the present embodiment.

Also, with the point-in-time setting method of the counter information method shown in Fig. 37, description has been made with reference to an example wherein the counter information is a time stamp, but is not restricted to this example, and can be carried out in a case wherein, for example, the counter information is a counter ensuring increase (or decrease), or the like. In this case, the information processing device 1101 and point-in-time server 1131 assign a counter storage region for storing the counter information, and need to mutually update own counter information of each other by sending or receiving point-in-time setting request messages or point-in-time setting reply messages.

As described above, within a point-in-time setting session of the session ID / counter information method according to the present embodiment, exchange between the information processing device 1101 and point-in-time server 1131 is restricted to point-in-time setting request messages and point-in-time setting reply messages, so the processing load of sending/receiving on the network is alleviated. Accordingly, even an information processing device 1101 which has particularly low processing capabilities can acquire point-in-time information from the point-in-time server 1131, since the load required for communication processing is extremely low. Further, in the case of the session ID method, the session ID (SID) for identifying point-in-time session is generated not at the server side but at the information processing device 1101 side. In the case of the counter information method, there is no need to add counter information at the information processing device 1101 side at the time of sending the point-in-time setting request message, so the processing load at the information processing device 1101 is alleviated even more. That is to say, with this point-in-time setting method, point-in-time setting can be performed even with device of which the processing capabilities are not very high (cellular phones, portable content players, etc.). Also, authentication performed in the point-in-time session which is indispensable for point-in-time setting only needs to be carried out at just one or the other of the information processing device 1101 side or point-in-time server 1131 side (unilateral authentication), so the overall processing load at the user device 10 and administration server 21 in at least the point-in-time setting is reduced.

Note that the above-described series of processing can be performed by dedicated hardware, and can be performed by software. In the event of performing the series of processing by software, a program configuring that software is installed in an information processing device such as a general-purpose computer or microcomputer or the like, and the information processing device is caused to function as the information processing device 1101 and/or point-in-time server 1131.

The program can be recorded beforehand in a hard disk drive (HDD) or ROM (Read Only Memory) as a recording medium built into a computer.

Moreover, the program is not restricted to being stored in a hard disk drive, and may be temporarily or permanently stored (recorded) in a removable recording medium such as a flexible disk, CD-ROM (Compact Disc Read Only Memory), MO (Magneto Optical) disk, DVD (Digital Versatile Disc), magnetic disk, semiconductor memory, and so forth. Such removable recording media can be provided as so-called packaged software.

Note that in addition to installation to a computer from such a removable storage medium, the program may be wirelessly transferred to the computer from a download site via a digital satellite broadcast satellite, or transferred to the computer by cable via a network such as a LAN (Local Area Network) or the Internet, and the computer can install a program transferred in such as way in the built-in HDD.

Now, it should be understood that in the present Description, the processing steps for the information processing device 1101 to execute or the processing steps describing the program for causing the information processing device 1101 serving as a computer to perform various types of processing do not necessarily have to be processed in time-sequence following the order laid forth as flowcharts, and include processing executed in parallel or individually (e.g., parallel processing or processing by objects).

Also, the program may be processing by a single computer, or may be processed in a dispersed manner by multiple computers.

While a preferred embodiment has been described above with reference to the attached drawings, the present invention is not restricted to this example. It is apparent that one skilled in the art can conceive various modifications or alterations within the scope of the technical idea laid forth in the Claims, and it should be understood that those also belong as a matter of course to the technical scope of the present invention.

With the above embodiment, description has been made with reference to an example wherein the point-in-time unit 1181 of the information processing device 1101, the ID generating unit 1178, the verifying unit 1185, the setting unit 1187, and counter information generating unit 1191, are configured of hardware, but the present invention is not restricted to this example. For example, the parts may be programs configured of one or multiple modules or components.

Also, description has been made with reference to an example wherein the application 503 of the information processing device 1101 and the request detecting unit 1189 are programs, but is not restricted to this example, and the application 503 and the request detecting unit 1189 may be configured of hardware configured of one or multiple circuit devices, for example.

With the above embodiment, description has been made with reference to an example wherein the point-in-time unit 1309 of the point-in-time server 1131, the setting condition information generating unit 1311, signature generating unit 1314, and counter information generating unit 1316, are configured of hardware, but the present invention is not restricted to this example. For example, the parts may be programs configured of one or multiple modules or components.

## Claims

1. A group registration device configured to register at least one information recording medium and/or information processing device into a group, comprising:
a registration request detecting unit configured to detect a request for registering said information recording medium and/or information processing device into said group;
a session ID generating unit configured to take a series of exchanges as a registration session, which sends a message requesting said group registration, and as to the message thereof receives a reply message, and to generate a session ID for identifying the registration session thereof;
a registration request message sending unit configured to send a registration request message including the information recording medium ID of said information recording medium and/or the information processing device ID of said information processing device to be registered into said group, and said session ID, to a registration server;
a registration reply message receiving unit configured to receive a registration reply message including the ID list of said information recording medium ID and/or information processing device ID registered into the group by said registration server, said session ID, from the registration server;
a verification unit configured to verify that the session ID included in said registration reply message is identical to the session ID generated at said session ID generating unit, and to delete said session ID; and
a storage unit configured to store the ID list included in said registration reply message in a storage region so as to be associated with a group ID specifying said group;
wherein with said registration request message sending unit and said registration reply message receiving unit, within the same said registration session, said registration request message is sent once, and said registration reply message is received once;
and wherein processing to be executed within said registration session is restricted to sending of said registration request message by said registration request message sending unit, and receiving of said registration reply message by said registration reply message receiving unit.

2. A group registration device configured to register at least one information recording medium and/or information processing device into a group, comprising:
a registration request detecting unit configured to detect a request for registering said information recording medium and/or information processing device into said group;
a session ID generating unit configured to take a series of exchanges as a registration session, which sends a message requesting said group registration, and as to the message thereof receives a reply message, and to generate a session ID for identifying the registration session thereof;
a registration request message sending unit configured to send a registration request message including the information recording medium ID of said information recording medium and/or the information processing device ID of said information processing device to be registered into said group, and said session ID, to a registration server;
a pass phrase receiving unit configured to receive a pass phrase obtained by encoding a registration reply message including the ID list of said information recording medium ID and/or information processing device ID registered into the group by said registration server, and said session ID, from the registration server;
a verification unit configured to decode said pass phrase into said registration reply message, to verify that the session ID included in the registration reply message is identical to the session ID generated in said session ID generating step, and to delete said session ID; and
a storage unit configured to store the ID list included in said registration reply message in a storage region within a self-device so as to be associated with a group ID specifying said group;
wherein with said registration request message sending unit and said pass phrase receiving unit, within the same said registration session, said registration request message is sent once, and said pass phrase is received once;
and wherein processing to be executed within said registration session is restricted to sending of said registration request message by said registration request message sending unit, and receiving of said pass phrase by said pass phrase receiving unit.

3. A group registration device configured to register at least one information recording medium and/or information processing device into a group, comprising:
a registration request detecting unit configured to detect a request for registering said information recording medium and/or information processing device into said group;
a registration request message sending unit configured to send a registration request message including the information recording medium ID of said information recording medium and/or the information processing device ID of said information processing device to be registered into said group, to a registration server;
a registration reply message receiving unit configured to receive a registration reply message including the ID list of said information recording medium ID and/or information processing device ID registered into the group by said registration server, and counter information obtained at the registration server side, from the registration server;
a verification unit configured to verify that the anteroposterior relation between the counter information set to said registration reply message and counter information obtained within a self-device to be registered into said group is suitable, and to update the counter information within said self-device; and
a storage unit configured to store the ID list included in said registration reply message in a storage region so as to be associated with a group ID specifying said group;
wherein with said registration request message sending unit and said registration reply message receiving unit, a series of exchanges, which sends a message requesting said group registration, and as to the message thereof receives a reply message, is taken as a registration session, and within the same said registration session said registration request message is sent once and said registration reply message is received once;
and wherein processing to be executed within said registration session is restricted to sending of said registration request message by said registration request message sending unit, and receiving of said registration reply message by said registration reply message receiving unit.

4. The group registration device according to Claim 3, wherein said counter information is a time stamp,
and wherein said registration replay message receiving unit receives said registration reply message to which said time stamp is set by said registration server;
and wherein said verification unit verifies that a time stamp generated within said self-device at the time of receiving said registration reply message is newer than said time stamp set to said registration reply message.

5. A group registration device configured to register at least one information recording medium and/or information processing device into a group, comprising:
a registration request detecting unit configured to detect a request for registering said information recording medium and/or information processing device into said group;
a registration request message sending unit configured to send a registration request message including the information recording medium ID of said information recording medium and/or the information processing device ID of said information processing device to be registered into said group, to a registration server;
a pass phrase receiving unit configured to receive a pass phrase obtained by encoding a registration reply message including the ID list of said information recording medium ID and/or information processing device ID registered into the group by said registration server, and counter information obtained at the registration server side, from the registration server;
a verification unit configured to decode said pass phrase into said registration reply message, to verify that the anteroposterior relation between the counter information set to said registration reply message and counter information obtained within a self-device to be registered into said group is suitable, and to update the counter information within said self-device; and
a storage unit configured to store the ID list included in said registration reply message in a storage region so as to be associated with a group ID specifying said group;
wherein with said registration request message sending unit and said pass phrase receiving unit, within the same said registration session which is a series of exchanges, which sends a message requesting said group registration, and as to the message thereof receives a reply message, said registration request message is sent once and said pass phrase is received once;
and wherein processing to be executed within said registration session is restricted to sending of said registration request message by said registration request message sending unit, and receiving of said pass phrase by said pass phrase receiving unit.

6. A group deregistration device configured to deregister the registration of at least one information recording medium and/or information processing device from a group into which at least one information recording medium and/or information processing device has been registered, comprising:
a deregistration request detecting unit configured to detect a request for deregistering the registration of an information recording medium and/or information processing device registered into said group;
a deregistration start message receiving unit configured to take a series of exchanges, which receives a message starting said group deregistration, and as to the message thereof sends a reply message, as a deregistration session, and to receive a deregistration start message serving as a sign for starting said group deregistration including a session ID for identifying the deregistration session thereof, from a deregistration server;
a deregistration request message sending unit configured to create and send a deregistration request message for requesting said group deregistration based on the ID list of the information recording medium ID of said information recording medium and/or the information processing device ID of said information processing device serving as an object to be subjected to said group deregistration, and said session ID; and
a deregistration unit configured to delete the ID list included in said deregistration request message associated with a group ID for identifying said group to perform group deregistration;
wherein with said deregistration start message receiving unit and said deregistration request message sending unit, within the same said deregistration session, said deregistration start message is received once, and said deregistration request message is sent once;
and wherein processing to be executed within said deregistration session is restricted to receiving of said deregistration start message by said deregistration start message receiving unit, and sending of said deregistration request message by said deregistration request message sending unit.

7. A group deregistration device configured to deregister the registration of at least one information recording medium and/or information processing device from a group into which at least one information recording medium and/or information processing device has been registered, comprising:
a deregistration request detecting unit configured to detect a request for deregistering the registration of an information recording medium and/or information processing device registered into said group;
a deregistration start message receiving unit configured to receive a deregistration start message serving as a sign for starting said group deregistration including counter information obtained by said deregistration server from said deregistration server;
a deregistration request message sending unit configured to create and send a deregistration request message for requesting said group deregistration based on the ID list of the information recording medium ID of said information recording medium and/or the information processing device ID of said information processing device serving as an object to be subjected to deregistration from said group, and said counter information;
a verification unit configured to verify that the anteroposterior relation between the counter information included in said deregistration start message and counter information obtained within a self-device to be subjected to said group deregistration is suitable; and
a deregistration unit configured to delete the ID list included in said deregistration request message associated with a group ID for identifying said group to perform group deregistration;
wherein with said deregistration start message receiving unit and said deregistration request message sending unit, a series of exchanges, which receives a message starting said group deregistration, and as to the message thereof sends a reply message, is taken as a deregistration session, and within the same said deregistration session, said deregistration start message is received once, and said deregistration request message is sent once;
and wherein processing to be executed within said deregistration session is restricted to receiving of said deregistration start message by said deregistration start message receiving unit, and sending of said deregistration request message by said deregistration request message sending unit.

8. A group registration method for registering at least one information recording medium and/or information processing device into a group, comprising:
a registration request detecting step for detecting a request for registering said information recording medium and/or information processing device into said group;
a session ID generating step for taking a series of exchanges as a registration session, which sends a message requesting said group registration, and as to the message thereof receives a reply message, and for generating a session ID for identifying the registration session thereof;
a registration request message sending step for sending a registration request message including the information recording medium ID of said information recording medium and/or the information processing device ID of said information processing device to be registered into said group, and said session ID, to a registration server;
a registration reply message receiving step for receiving a registration reply message including the ID list of said information recording medium ID and/or information processing device ID registered into the group by said registration server, and said session ID, from the registration server;
a storing step for storing the ID list included in said registration reply message in a storage region so as to be associated with a group ID specifying said group when verifying that the session ID included in said registration reply message is identical to the session ID generated in said session ID generating step; and
a deleting step for deleting said session ID;
wherein said registration request message sending step and said registration reply message receiving step are executed once each in order within the same said registration session;
and wherein processing to be executed within said registration session is restricted to said registration request message sending step and said registration reply message receiving step.

9. A license acquisition device configured to acquire one or two licenses or more for permitting processing of a content from a license possession device, comprising:
a license acquisition request detecting unit configured to detect a request for acquiring said license;
a session ID generating unit configured to take a series of exchanges, which sends a message for requesting said license acquisition, and as to the message thereof receives a reply message, as an acquisition session, and to generate a session ID for identifying the acquisition session thereof;
a license acquisition request message sending unit configured to send a license acquisition request message including a storage destination ID for identifying a storage destination for storing said requested one or two licenses or more, and said session ID, to said license possession device;
a license acquisition reply message receiving unit configured to receive a license acquisition reply message including said requested license, attached information relating to use conditions of the license, said storage destination ID, and said session ID, from said license possession device;
a verification unit configured to verify that the session ID included in said license acquisition reply message is identical to the session ID generated at said session ID generating unit, and to delete the session ID thereof; and
a storage unit configured to store said license in a storage region in accordance with said storage destination ID;
wherein with said license acquisition request message sending unit and said license acquisition reply message receiving unit, within the same said acquisition session, said license acquisition request message is sent once, and said license acquisition reply message is received once;
and wherein processing to be executed within said acquisition session is restricted to sending of said license acquisition request message by said license acquisition request message sending unit, and receiving of said license acquisition reply message by said license acquisition reply message receiving unit.

10. A license acquisition device configured to acquire one or two licenses or more for permitting processing of a content from a license possession device, comprising:
a license acquisition request detecting unit configured to detect a request for acquiring said license;
a license acquisition request message sending unit configured to send a license acquisition request message including a storage destination ID for identifying a storage destination for storing said requested one or two licenses or more, to said license possession device;
a license acquisition reply message receiving unit configured to receive a license acquisition reply message including said requested license, attached information relating to use conditions of the license, said storage destination ID, and counter information obtained by said license possession device, from said license possession device;
a verification unit configured to verify that the anteroposterior relation between the counter information included in said license acquisition reply message and counter information obtained within a self-device which is said license storage destination is suitable, and to update the counter information within the self-device; and
a storage unit configured to store said license in a storage region in accordance with said storage destination ID;
wherein with said license acquisition request message sending unit and said license acquisition reply message receiving unit, a series of exchanges, which sends a message for requesting said license acquisition, and as to the message thereof receives a reply message, is taken as an acquisition session, and within the same said acquisition session, said license acquisition request message is sent once, and said license acquisition reply message is received once;
and wherein processing to be executed within said acquisition session is restricted to sending of said license acquisition request message by said license acquisition request message sending unit, and receiving of said license acquisition reply message by said license acquisition reply message receiving unit.

11. A license acquisition device configured to acquire one or two licenses or more for permitting processing of a content from a license possession device, comprising:
a license acquisition request detecting unit configured to detect a request for acquiring said license;
a session ID generating unit configured to take a series of exchanges, which sends a message for requesting said license acquisition, and as to the message thereof receives a reply message, as an acquisition session, and to generate a session ID for identifying the acquisition session thereof;
a license acquisition request message sending unit configured to send a license acquisition request message including a storage destination ID for identifying a storage destination for storing said requested one or two licenses or more, and said session ID, to the license possession device;
a pass phrase receiving unit configured to receive a pass phrase obtained by encoding a license acquisition reply message including said requested license, attached information relating to use conditions of the license, said storage destination ID, and said session ID, from said license possession device;
a verification unit configured to decode said pass phrase into said license acquisition reply message, to verify that the session ID included in the license acquisition reply message is identical to the session ID generated in said session ID generating step, and to delete said session ID; and
a storage unit configured to store said license included in said license acquisition reply message in a storage region in accordance with said storage destination ID;
wherein with said license acquisition request message sending unit and said pass phrase receiving unit, within the same said acquisition session, said license acquisition request message is sent once, and said license acquisition reply message is received once;
and wherein processing to be executed within said acquisition session is restricted to sending of said license acquisition request message by said license acquisition request message sending unit, and receiving of said pass phrase by said pass phrase receiving unit.

12. A license acquisition device configured to acquire one or two licenses or more for permitting processing of a content from a license possession device, comprising:
a license acquisition request detecting unit configured to detect a request for acquiring said license;
a license acquisition request message sending unit configured to send a license acquisition request message including a storage destination ID for identifying a storage destination for storing said requested one or two licenses or more, to said license possession device;
a pass phrase receiving unit configured to receive a pass phrase obtained by encoding a license acquisition reply message including said requested license, attached information relating to use conditions of the license, said storage destination ID, and counter information obtained by said license possession device, from said license possession device;
a verification unit configured to decode said pass phrase into said license acquisition reply message, to verify that the anteroposterior relation between the counter information included in the license acquisition reply message and counter information obtained within a self-device which is the license storage destination is suitable, and to update the counter information within the self-device which is the license storage destination; and
a storage unit configured to store the license included in said license acquisition reply message in a storage region in accordance with said storage destination ID;
wherein with said license acquisition request message sending unit and said pass phrase receiving unit, a series of exchanges, which sends a message for requesting said license acquisition, and as to the message thereof receives a reply message, is taken as an acquisition session, and within the same said acquisition session, said license acquisition request message is sent once, and said license acquisition reply message is received once;
and wherein processing to be executed within said acquisition session is restricted to sending of said license acquisition request message by said license acquisition request message sending unit, and receiving of said pass phrase by said pass phrase receiving unit.

13. The license acquisition device according to Claim 12, wherein said counter information is a time stamp,
and wherein said pass phrase receiving unit receives said pass phrase from said license possession device;
and wherein said verification unit verifies that a time stamp acquired by said information processing device at the time of receiving said pass phrase is newer than said time stamp included in said license acquisition reply message obtained by decoding of said pass phrase.

14. A license acquisition method for acquiring one or two licenses or more for permitting processing of a content from a license possession device, comprising:
a license acquisition request detecting step for detecting a request for acquiring said license;
a session ID generating step for taking a series of exchanges, which sends a message for requesting said license acquisition, and as to the message thereof receives a reply message, as an acquisition session, and for generating a session ID for identifying the acquisition session thereof;
a license acquisition request message sending step for sending a license acquisition request message including a storage destination ID for identifying a storage destination for storing said requested one or two licenses or more, and said session ID, to said license possession device;
a license acquisition reply message receiving step for receiving a license acquisition reply message including said requested license, attached information relating to use conditions of the license, said storage destination ID, and said session ID, from said license possession device;
a storing step for storing said license in a storage region in accordance with said storage destination ID when verifying that the session ID included in said license acquisition reply message is identical to the session ID generated in said session ID generating step; and
a deleting step for deleting said session ID;
wherein said license acquisition request message sending step and said license acquisition reply message receiving step are executed once each in order within the same said acquisition session;
and wherein processing to be executed within said acquisition session is restricted to said license acquisition request message sending step and said license acquisition reply message receiving step.

15. A point-in-time setting device configured to set point-in-time counted by an information processing device based on point-in-time information generated by a point-in-time device counting accurate point-in-time, comprising:
a request detecting unit configured to detect a request for point-in-time information generated by said point-in-time device;
a session ID generating unit configured to take a series of exchanges, which sends a message requesting said point-in-time information, and as to the message thereof receives a reply message, as a point-in-time setting session, and to generate a session ID for identifying the point-in-time setting session thereof;
a point-in-time setting request message sending unit configured to send a point-in-time setting request message including point-in-time precision information indicating point-in-time precision of said information processing device, which is information stored securely in advance in the storage region of said information processing device, and said session ID, to said point-in-time device;
a point-in-time setting reply message receiving unit configured to receive a point-in-time setting reply message including said point-in-time information, point-in-time setting condition information in which a point-in-time settable condition is described based on the point-in-time information, and said session ID, from said point-in-time device;
a verification unit configured to verify that said session ID set to said point-in-time setting reply message is identical to the session ID generated in said session ID generating unit, and also to verify that the time difference between the sent point-in-time of said point-in-time setting request message and the received point-in-time of said point-in-time setting reply message is within a range of tolerance time described in said point-in-time setting condition information; and
a setting unit configured to delete said session ID, and also to set the point-in-time of said information processing device based on said point-in-time information, in the event that as a result of verification by said verification unit, determination is made that point-in-time is settable;
wherein with said point-in-time setting request message sending unit and said point-in-time setting reply message receiving unit, within the same said point-in-time setting session, said point-in-time setting request message is sent once, and said point-in-time setting reply message is received once;
and wherein processing to be executed within said point-in-time setting session is restricted to sending of said point-in-time setting request message by said point-in-time setting request message sending unit, and receiving of said point-in-time setting reply message by said point-in-time setting reply message receiving unit.

16. A point-in-time setting device configured to set point-in-time counted by an information processing device based on point-in-time information generated by a point-in-time device counting accurate point-in-time, comprising:
a request detecting unit configured to detect a request for point-in-time information generated by said point-in-time device;
a point-in-time setting request message sending unit configured to send a point-in-time setting request message including point-in-time precision information indicating point-in-time precision of said information processing device, which is information stored securely in advance in the storage region of said information processing device, to said point-in-time device;
a point-in-time setting reply message receiving unit configured to receive a point-in-time setting reply message including said point-in-time information, point-in-time setting condition information in which a point-in-time settable condition is described based on the point-in-time information, and the counter information obtained by the point-in-time device, from the point-in-time device;
a verification unit configured to update the counter information of said information processing device when verifying that anteroposterior relation is suitable by comparing the counter information set in said point-in-time setting reply message and the counter information obtained by an information processing device to be subjected to said point-in-time setting, and also verifying that the time difference between the sent point-in-time of said point-in-time setting request message and the received point-in-time of said point-in-time setting reply message is within a range of tolerance time included in said setting condition information; and
a setting unit configured to set the point-in-time of said information processing device based on said point-in-time information, in the event that as a result of said verification, determination is made that point-in-time is settable;
wherein with said point-in-time setting request message sending unit and said point-in-time setting reply message receiving unit, a series of exchanges, which sends a message requesting said point-in-time information, and as to the message thereof receives a reply message, is taken as a point-in-time setting session, and within the point-in-time setting session thereof, said point-in-time setting request message is sent once, and said point-in-time setting reply message is received once;
and wherein processing to be executed within said point-in-time setting session is restricted to sending of said point-in-time setting request message by said point-in-time setting request message sending unit, and receiving of said point-in-time setting reply message by said point-in-time setting reply message receiving unit.

17. The point-in-time setting device according to Claim 16, wherein said point-in-time setting condition information is information which said point-in-time device generates depending on the point-in-time precision indicated with said point-in-time precision information.

18. The point-in-time setting device according to Claim 16, wherein said request detecting unit detects at least said request for point-in-time information in the case of said set valid point-in-time including said point-in-time setting condition information expiring, in the case of a predetermined time elapsing, or in the case of said information processing device acquiring a content.

19. The point-in-time setting device according to Claim 16, wherein said counter information is a time stamp,
and wherein said point-in-time setting reply message receiving unit receives said point-in-time setting reply message to which said time stamp has been set by said point-in-time device;
and wherein said verification unit verifies that a time stamp generated by said information processing device at the time of receiving the point-in-time setting reply message is newer than said time stamp set to said point-in-time setting reply message.

20. A point-in-time setting method for setting point-in-time counted by an information processing device based on point-in-time information generated by a point-in-time device counting accurate point-in-time, comprising:
a request detecting step for detecting a request for point-in-time information generated by said point-in-time device;
a point-in-time setting request message sending step for sending a point-in-time setting request message including point-in-time precision information indicating point-in-time precision of said information processing device, which is information stored securely in advance in the storage region of said information processing device, to said point-in-time device;
a point-in-time setting reply message receiving step for receiving a point-in-time setting reply message including said point-in-time information, point-in-time setting condition information in which a point-in-time settable condition is described based on the point-in-time information, and the counter information obtained by the point-in-time device, from the point-in-time device;
a verification step for verifying that anteroposterior relation is suitable by comparing the counter information set to said point-in-time setting reply message and the counter information generated by an information processing device to be subjected to said point-in-time setting, and also verifying that the time difference between the sent point-in-time of said point-in-time setting request message and the received point-in-time of said point-in-time setting reply message is within a range of tolerance time included in said setting condition information;
a point-in-time setting step for setting the point-in-time of said information processing device based on said point-in-time information, in the event that as a result of said verification, determination is made that point-in-time is settable; and
an updating step for updating the counter information of said information processing device;
wherein taking a series of exchanges, which sends a message requesting said point-in-time information, and as to the message thereof receives a reply message, as a point-in-time setting session, and within the point-in-time setting session thereof, said point-in-time setting request message sending step and said point-in-time setting reply message receiving step are executed once each in order;
and wherein processing to be executed within said point-in-time setting session is restricted to said point-in-time setting request message sending step and said point-in-time setting reply message receiving step.
